(19) Europäisches Patentamt
European Patent Office
Office européen des brevets

(11) **EP 3 118 699 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.07.2024  Patentblatt 2024/30**

(45) Hinweis auf die Patenterteilung:
**12.08.2020  Patentblatt 2020/33**

(21) Anmeldenummer: **16169744.6**

(22) Anmeldetag: **14.05.2016**

(51) Internationale Patentklassifikation (IPC):
**B23F 23/00** (2006.01)    **G05B 19/4093** (2006.01)
**G05B 19/4097** (2006.01)

(52) Gemeinsame Patentklassifikation (CPC):
**B23F 23/003; G05B 19/40937;** G05B 2219/35035; G05B 2219/36198; Y02P 90/02

(54) **VERFAHREN ZUR HERSTELLUNG EINES VERZAHNTEN WERKSTÜCKES MIT MODIFIZIERTER OBERFLÄCHENGEOMETRIE**

METHOD FOR PRODUCING A TOOTHED WORKPIECE WITH MODIFIED SURFACE GEOMETRY

PROCÉDÉ DE FABRICATION D'UNE PIÈCE DENTÉE COMPRENANT UNE GÉOMÉTRIE DE SURFACE MODIFIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2015  DE 102015008956**

(43) Veröffentlichungstag der Anmeldung:
**18.01.2017  Patentblatt 2017/03**

(73) Patentinhaber: **Liebherr-Verzahntechnik GmbH 87437 Kempten (DE)**

(72) Erfinder: **Würfel, Robert 87499 Wildpoldsried (DE)**

(74) Vertreter: **Behr, Wolfgang et al Lorenz Seidler Gossel Rechtsanwälte Patentanwälte Partnerschaft mbB Widenmayerstraße 23 80538 München (DE)**

(56) Entgegenhaltungen:
**EP-A1- 1 995 010       EP-A1- 3 050 658**
**WO-A1-2010/060596     WO-A1-99/47300**
**DE-A1- 102012 015 846    DE-A1- 102012 015 846**
**DE-A1- 19 624 842      DE-A1- 19 706 867**
**DE-A1- 19 911 235**

• **"Kontinuierliches Wälzschleifen von Verzahnungen", vol. 3, July 2008, REISHAUER AG, WALLISELLEN (CH), ISBN: 978-3-033-01447-3, article SCHRIEFER H; THYSSEN W; WIRZ W; SCACCHI G; GRETLER M: "Kontinuierliches Wälzschleifen von Verzahnungen", pages: 1 - 158**

**EP 3 118 699 B2**

**Beschreibung**

Die vorliegende Erfindung betrifft ein Verfahren zur Herstellung eines verzahnten Werkstückes mit modifizierter Oberflächengeometrie durch ein Diagonalwälzverfahren mittels eines modifizierten Werkzeuges. Das Werkzeug weist dabei eine Modifikation der Oberflächengeometrie auf, welche durch das Diagonalwälzverfahren eine entsprechende Modifikation auf der Oberfläche des Werkstückes erzeugt.

Aus der DE 10 2012 015 846A1 ist ein Verfahren bekannt, bei welchem durch Zusatzbewegungen beim Abrichten auf dem Werkzeug eine Modifikation der Oberflächengeometrie erzeugt wird, welche auf der Zahnflanke im Wälzbild zumindest lokal in einer ersten Richtung einen konstanten Wert aufweist und in einer zweiten Richtung, welche senkrecht zur ersten Richtung verläuft, durch eine Funktion f(x) gegeben ist. Durch das Diagonalwälzverfahren wird diese Modifikation der Oberflächengeometrie des Werkzeuges auf das Werkstück übertragen. Aus der EP 1 995 010A1 und der WO 2010/060596A1 ist ein Verfahren bekannt, durch Änderungen des Achsabstands während des Abrichtens eine Schnecke über ihre Breite ballig abzurichten. Weiterhin wird beim Bearbeiten des Werkstückes mit dieser ballig abgerichteten Schnecke der Achsabstand zwischen Werkzeug und Werkstück ballig verändert. Die sich hierdurch ergebende Überlagerung der beiden Modifikationen soll die Verschränkung minimieren, welche auf zwei Flankenlinien bestimmt wird. Aus der DE3704607 A1 ist ein Diagonalwälzverfahren bekannt, bei welchem eine Schnecke eingesetzt wird, deren Flankenwinkel sich auf linker und rechter Flanke von einem Maximalwert an einem Ende der Schnecke zu einem Minimalwert am anderen Ende der Schnecke abnimmt, um die Verschränkung einer durch eine Achsabstandsänderung beim Diagonalwälzverfahren erzeugten Breitenballigkeit auszugleichen. Aus der DE 196 248 42 A1 und der DE 197 068 67 A1 sind Verfahren bekannt, bei denen durch eine stetige Änderung der Position des Abrichters zum Werkzeug beim Abrichten eine Schnecke erzeugt wird, deren Profilwinkel sich über ihre Breite verändert. Die stetige Änderung der Position des Abrichters wird dabei auf Grundlage einer gewünschten Modifikation des Werkstückes ermittelt. Aus der DE 10 2005 030 846 A1 und der DE 10 2006 061 759 A1 sind ebenfalls Verfahren bekannt, bei welchen eine Schnecke durch eine entsprechende Abrichtkinematik entweder über ihre gesamte Breite mit einem konstant modifizierten Profilwinkel hergestellt wird, oder der Profilwinkel über die Schneckenbreite modifiziert wird. Ein zweiflankiges Abrichten zum verschränkungsfreien Wälzschleifen ist aus *Kapp, Effizient und Produktiv mit Technologischer Flexibilität, Jose Lopez,* bekannt.

EP 1 995 010 A1 und WO 2010/060596 A1 zeigen ein Verfahren zur Bearbeitung der Flanken im Wesentlichen zylindrischer, aber breitenballig modifizierter Verzahnungen im Diagonal-Wälzverfahren, bei welchem ein schneckenförmiges Werkzeug verwendet wird, das in Richtung seiner Drehachse ballig modifiziert ist, wobei die Balligkeit positiv oder negativ (hohlballig) sein kann. Die natürliche Schränkung, die bei dem zu fertigenden Werkstück aufgrund der geforderten Breitenballigkeit entsteht, wird berechnet. Der Betrag und der Verlauf der Balligkeit des Werkzeuges in Richtung der Werkzeuglänge sowie das Diagonalverhältnis werden so abgestimmt, dass beim Verzahnen eine Schränkung entsteht, die, der natürlichen Schränkung überlagert, die geforderte Schränkung ergibt.

Aufgabe der vorliegenden Erfindung ist es, ein Verfahren zur Herstellung eines verzahnten Werkstückes zur Verfügung zu stellen, welches eine größere Flexibilität bei der Vorgabe der gewünschten Modifikation der Oberflächengeometrie des Werkstückes erlaubt.

Diese Aufgabe wird erfindungsgemäß durch ein Verfahren gemäß Anspruch 1 gelöst. Vorteilhafte Ausgestaltungen der vorliegenden Erfindung sind Gegenstand der Unteransprüche.

Die vorliegende Erfindung zeigt ein Verfahren zur Herstellung eines verzahnten Werkstückes mit modifizierter Oberflächengeometrie durch ein Diagonalwälzverfahren mittels eines modifizierten Werkzeuges. In einer bevorzugten Ausgestaltung wird dabei ein Werkzeug eingesetzt, dessen Oberflächengeometrie eine Modifikation umfasst, welche im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen $F_{FtL,1}$ und bevorzugt $F_{FtC,1}$ gebildet werden. Die erste Richtung des Werkzeuges weist dabei bevorzugt einen Winkel $\rho_{FS}$ ungleich null zur Werkzeugbreitenrichtung auf. Erfindungsgemäß wird eine Modifikation eingesetzt, deren Steigung in einer ersten Richtung des Werkzeuges, welche einen Winkel $\rho_{F1}$ ungleich null zur Werkzeugbreitenrichtung einschließt, in Abhängigkeit von dem Werkzeugdrehwinkel und / oder der Werkzeugbreitenposition variiert. Diese gezielte Modifikation des Werkzeuges erzeugt durch das Diagonalwälzverfahren eine entsprechende Modifikation auf der Oberfläche des Werkstückes. Erfindungsgemäß ist dabei vorgesehen, dass eine gewünschte Modifikation der Oberflächengeometrie des Werkstückes vorgegeben wird und eine zur Erzeugung dieser gewünschten Modifikation geeignete Modifikation der Oberflächengeometrie des Werkzeuges in Kombination mit einem zur Erzeugung der gewünschten Modifikation geeigneten Diagonalverhältnis des Diagonalwälzverfahrens bestimmt wird.

Durch die vorliegende Erfindung ergeben sich im Vergleich zum Stand der Technik zum einen neue Möglichkeiten der Vorgabe der Oberflächengeometrie des Werkzeuges, welche dementsprechend zusätzliche Möglichkeiten bei der Vorgabe der gewünschten Modifikation der Oberflächengeometrie des Werkstückes erlaubt. Weiterhin wird erfindungsgemäß das Zusammenspiel zwischen der Oberflächengeometrie des Werkzeuges und dem Diagonalverhältnis des zur Bearbeitung des Werkstückes eingesetzten Diagonalwälzverfahrens berücksichtigt, und diese so aufeinander abgestimmt, dass sich die gewünschte Modifikation des Werkstückes ergibt. Dadurch, dass nicht mit einem vorgegebenen Diagonalverhältnis gearbeitet wird, sondern dieses in Abhängigkeit von der gewünschten Modifikation der Oberflächengeometrie des Werkzeuges bestimmt wird, ergibt sich eine erheblich erhöhte Flexibilität im Hinblick auf die durch das erfindungsgemäße Verfahren herstellbaren Oberflächengeometrien des Werkstückes.

Erfindungsgemäß wird das Diagonalverhältnis dabei so eingestellt, dass beim Diagonalwälzverfahren die erste Richtung des Werkzeuges auf eine zur Erzeugung der gewünschten Modifikation des Werkstückes geeignete erste Richtung des Werkstückes abgebildet wird. Bevorzugt wird dabei das Diagonalverhältnis durch eine Ausgleichsrechnung und / oder analytisch bestimmt.

Gemäß der vorliegenden Erfindung kann die gewünschte Modifikation der Oberflächengeometrie des Werkstückes in einer bevorzugten Ausgestaltung als eine Modifikation vorgebbar sein oder eine Modifikation umfassen, welche im Wälzbild zumindest lokal in einer ersten Richtung des Werkstückes durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen $F_{FtL,2}$ und $F_{FtC,2}$ gebildet werden. Dies entspricht der oben näher erläuterten, ersten Variante der Oberflächengeometrie des Werkzeuges.

Erfindungsgemäß wird die gewünschte Modifikation der Oberflächengeometrie des Werkstückes als eine Modifikation vorgegeben, deren Steigung in Abhängigkeit von der Werkstückbreitenposition variiert. Insbesondere kann dies der oben beschriebenen Oberflächengeometrie des Werkzeuges entsprechen.

Die erweiterten Möglichkeiten im Hinblick auf die Modifikation der Oberflächengeometrie des Werkzeuges erlauben damit zusätzliche Möglichkeiten bei der gewünschten Modifikation der Oberflächengeometrie des Werkstückes. Erfindungsgemäß wird dabei die erste Richtung der Modifikation des Werkstückes vorgegeben und das Diagonalverhältnis so gewählt, dass die erste Richtung der Modifikation des Werkzeuges auf die erste Richtung der Modifikation des Werkstückes abgebildet wird. Die vorliegende Erfindung berücksichtigt dabei, dass die erste Richtung der Modifikation des Werkzeuges üblicherweise nur schwierig und / oder innerhalb gewisser Grenzen verändert werden kann. Durch die zusätzliche Anpassung des Diagonalverhältnisses ergeben sich damit größere Möglichkeiten bei der Wahl der ersten Richtung der Modifikation des Werkstückes.

Im Rahmen der vorliegenden Erfindung ist bevorzugt vorgesehen, dass die Koeffizienten-Funktionen $F_{FtC,1}$ und/oder $F_{FtL,1}$ der Modifikation der Oberflächengeometrie des Werkzeuges zumindest innerhalb bestimmter Randbedingungen frei wählbar sind, um die gewünschte Modifikation der Oberflächengeometrie des Werkstückes zu erzeugen. Insbesondere kann dies durch eine entsprechende Beeinflussung des Abrichtprozesses des Werkzeuges erfolgen.

Alternativ oder zusätzlich kann vorgesehen sein, dass die Koeffizienten-Funktionen $F_{FtC,2}$ und/oder $F_{FtL,2}$ und / oder die erste Richtung der Modifikationen der Oberflächengeometrie des Werkstückes zumindest innerhalb bestimmter Randbedingungen frei vorgebbar und / oder wählbar sind.

Alternativ oder zusätzlich kann auch die Steigung der Modifikation der Oberfläche des Werkzeuges als Funktion der Werkzeugbreitenposition zumindest innerhalb bestimmter Randbedingungen frei wählbar sein. Bevorzugt können dabei Daten, welche den Verlauf der Modifikation in der ersten Richtung in Abhängigkeit von der Werkzeugbreitenposition bestimmen, vorgebbar sein.

Alternativ oder zusätzlich kann vorgesehen sein, dass die Steigung der Modifikation der Oberfläche des Werkstückes als Funktion der Werkstückbreitenposition zumindest innerhalb bestimmter Randbedingungen frei wählbar ist. Insbesondere kann dabei die Steigung der Modifikation der Oberfläche des Werkstückes in Richtung einer ersten Richtung als Funktion der Werkstückbreitenposition zumindest innerhalb bestimmter Randbedingungen frei wählbar sein, wobei vorteilhafterweise auch die erste Richtung innerhalb bestimmter Randbedingungen frei wählbar ist.

Bevorzugt können dabei neben der ersten Richtung der Modifikation der Oberflächengeometrie des Werkstückes Daten, welche den Verlauf der Modifikation in der ersten Richtung in Abhängigkeit von der Werkstückbreitenposition bestimmen, vorgebbar sein.

Erfindungsgemäß ist vorgesehen, dass das Diagonalverhältnis in Abhängigkeit der ersten Richtung der Modifikation auf dem Werkstück bestimmt wird. Wie oben beschrieben erfolgt dies dadurch, dass eine technologisch herstellbare erste Richtung auf dem Werkzeug bestimmt wird, und das Diagonalverhältnis so eingestellt wird, dass die erste Richtung auf dem Werkzeug auf die erste Richtung auf dem Werkstück abgebildet wird.

Erfindungsgemäß kann dabei vorgesehen sein, dass die Modifikation der Oberflächengeometrie des Werkzeuges aus der gewünschten Modifikation der Oberflächengeometrie des Werkstückes mittels einer Umkehrung einer Zuordnungsfunktion, welche die Abbildung der Oberfläche des Werkzeuges auf die Oberfläche des Werkstückes beim Diagonalwälzschleifen beschreibt, bestimmt wird. Diese Zuordungsfunktion sowie ihre Umkehrung hängt dabei von dem gewählten Diagonalverhältnis ab. Insbesondere kann dabei die zur Herstellung der gewünschten Modifikation der Oberflächengeometrie des Werkstückes geeignete Modifikation der Oberflächengeometrie des Werkzeuges und das hierfür geeignete Diagonalverhältnis dadurch bestimmt werden, dass das Diagonalverhältnis sowie die variablen Parameter der Modifikation der Oberflächengeometrie des Werkzeuges im Rahmen einer Ausgleichsrechnung variiert werden, um eine Kombination aus Modifikation der Oberflächengepmetrie des Werkzeuges und Diagonalverhältnis zu finden, welche die gewünschte Modifikation möglichst gut annähert. Bei einer relativ großen Klasse von Funktionen ist dabei sogar eine im Wesentlichen exakte Bestimmung möglich.

Bevorzugt erfolgt die Bestimmung dabei unter Verwendung einer Funktion, welche die Abbildung der Oberfläche des Werkzeugs auf die Oberfläche des Werkstücks beim Diagonalwälzschleifen analytisch beschreibt. Insbesondere kann dabei die oben beschriebene Zuordnungsfunktion analytisch darstellbar sein.

Erfindungsgemäß kann die gewünschte Modifikation der Oberflächengeometrie des Werkstückes als stetige Funktion und / oder auf einer Punktewolke vorgegeben werden. Bevorzugt kann die stetige Funktion dabei auf einer Fläche auf der Zahnflanke vorgegeben werden, und / oder die Punktewolke eine Fläche auf der Zahnflanke aufspannen. Die vorliegende Erfindung ist damit nicht darauf beschränkt, die gewünschte Modifikation nur an einer oder mehreren Linien oder Punkten der Oberfläche vorzugeben, sondern kann über eine Fläche vorgeben werden, insbesondere über die gesamte Fläche der Zahnflanke.

Bevorzugt wird die Modifikation der Oberflächengeometrie des Werkzeuges als stetige Funktion und / oder auf einer Punktewolke bestimmt. Bevorzugt wird die stetige Funktion dabei auf einer Fläche auf der Zahnflanke bestimmt und / oder die Punktewolke spannt eine Fläche auf der Zahnflanke auf. Insbesondere kann dabei die Modifikation der Oberflächengeometrie des Werkzeuges auf der gesamten Zahnflanke entweder als stetige Funktion oder auf einer entsprechenden Punktewolke bestimmt werden.

In einer möglichen Ausführung der vorliegenden Erfindung kann die Modifikation der Oberflächengeometrie des Werkstückes an mindestens zwei Wälzwinkeln als Funktion der Werkzeugbreitenposition vorgebbar sein und / oder wählbar sein, wobei für die dazwischenliegenden Wälzwinkel-Bereiche eine Interpolation erfolgt. Weiterhin kann vorgesehen sein, dass die Modifikation der Oberflächengeometrie des Werkzeuges im Rahmen der Bestimmung und / oder Vorgabe an mindestens zwei Wälzwinkeln als Funktion der Werkzeugbreitenposition variierbar ist und für die dazwischenliegenden Wälzwinkel-Bereiche eine Interpolation erfolgt. Wird dabei zur Bestimmung der geeigneten Oberflächengeometrie des Werkzeuges eine Ausgleichsrechnung und / oder Abstandsfunktion eingesetzt, so erfolgt die Ausgleichsrechnung dabei bevorzugt über die gesamte Flanke und damit auch über den interpolierten Bereich, und nicht nur über die zwei oder drei Wälzwinkel, an welchen die Modifikation als Funktion der Werkzeugbreitenposition variierbar ist.

Erfindungsgemäß kommt die vorliegende Erfindung bei abrichtbaren Werkzeugen zum Einsatz. Hierbei wird die Modifikation der Oberflächengeometrie des Werkzeuges während des Abrichtprozesses erzeugt.

Dabei ist vorgesehen, dass die Modifikation der Oberflächengeometrie des Werkzeuges durch die Modifikation einer Relativposition zwischen Werkzeug und Abrichter beim Abrichten erzeugt wird, wobei der Abrichter beim Abrichten in Linienkontakt mit dem Werkzeug steht und die erste Richtung der Modifikation der Oberflächengeometrie des Werkzeuges der Eingriffslinie des Abrichters beim Abrichten des Werkzeuges entspricht und / oder durch diese vorgegeben ist.

In einer ersten Ausführungsform erfolgt das Abrichten dabei zweiflankig. Dies kann insbesondere dann erfolgen, wenn die Oberflächengeometrie des Werkzeuges durch das Abrichten eine Modifikation erhalten soll, welche auf beiden Flanken jeweils im Wälzbild zumindest lokal in einer ersten Richtung des Werkzeuges durch eine konstante oder lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizientenfunktionen $F_{FtC,1}$ für den konstanten Anteil bzw. $F_{FtL,1}$ für den linearen Anteil gebildet werden. Alternativ oder zusätzlich kann dies erfolgen, wenn die Oberflächengeometrie des Werkzeuges durch das Abrichten jeweils auf beiden Flanken eine Modifikation erhalten soll, deren Zahndicke und/oder Steigung in Abhängigkeit von dem Werkzeugdrehwinkel und / oder der Werkzeugbreitenposition variiert bzw. deren Balligkeit nicht in Abhängigkeit von dem Werkzeugdrehwinkel und / oder der Werkzeugbreitenposition variiert.

In einer zweiten Ausführungsform erfolgt das Abrichten dagegen einflankig. Das einflankige Abrichten kann auch dann sinnvoll sein, wenn die Steigung auf der rechten Flanke zu weit vom negativen Wert der Steigung auf der linken Flanke abweicht oder ein zweiflankiges Abrichten aus anderen Gründen nicht möglich ist, z.B. weil kein geeigneter Abrichter zur Verfügung steht.

Erfindungsgemäß kann die Relativposition des Abrichters zum Werkzeug beim Abrichten mit Linienkontakt gezielt so eingestellt werden, dass sich die Berührlinie zwischen Abrichter und Werkzeug auf dem Abrichter verschiebt, um hierdurch das entlang der Berührlinie aktive, auf das Werkzeug übertragene Profil zu beeinflussen. Bevorzugt wird hierdurch die gewünschte Modifikation auf dem Werkzeug erzeugt. Insbesondere kann dabei die Steigung entlang der Berührlinie auf dem Werkzeug eingestellt bzw. verändert werden. Diese Berührlinie auf dem Werkzeug definiert dabei bevorzugt die erste Richtung der Modifikation auf dem Werkzeug.

Allgemein wird als Steigung der gezielten Modifikation des Werkzeuges im Sinne der vorliegenden Erfindung die Steigung in einer ersten Richtung des Werkzeuges bezeichnet, welche einen Winkel $\rho_{F1}$ ungleich null zur Werkzeugbreitenrichtung einschließt, und insbesondere einen Anteil in Profilrichtung aufweist, d. h. die Steigung der Modifikation entspricht der Profilwinkelabweichung.

Weiterhin wird als Balligkeit der Modifikation des Werkzeuges im Sinne der vorliegenden Erfindung eine Balligkeit in einer ersten Richtung, welche einen Winkel $\rho_{F1}$ ungleich null zur Werkzeugbreitenrichtung einschließt, bezeichnet, und insbesondere einen Anteil in Profilrichtung aufweist, d. h. die Balligkeit der Modifikation entspricht einer Profilballigkeit.

Da die Richtung der Eingriffslinie des Abrichters auf dem Werkzeug beim Abrichten und damit die erste Richtung der Modifikation der Oberflächengeometrie des Werkzeuges jedoch nicht in einem beliebigen Umfang verändert werden kann, ist die erste Richtung der Modifikation der Oberflächengeometrie des Werkzeuges zumindest nicht über einen größeren Bereich frei wählbar. Dies erfordert erfindungsgemäß eine entsprechende Anpassung des Diagonalverhältnisses, um die erste Richtung der Modifikation der Oberflächengeometrie des Werkstückes über einen größeren Bereich wählen zu können.

Weiterhin wird als Steigung der gezielten Modifikation des Werkstückes im Sinne der vorliegenden Erfindung die Steigung in einer ersten Richtung des Werkstückes bezeichnet, welche einen Winkel $\rho_{F2}$ zur Werkstückbreitenrichtung einschließt, wobei der Winkel $\rho_{F2}$ jedoch auch null sein kann, bevorzugt aber ungleich null ist. Weiterhin wird als Balligkeit der Modifikation des Werkstückes im Sinne der vorliegenden Erfindung eine Balligkeit in einer ersten Richtung, wobei der Winkel $\rho_{F2}$ jedoch auch null sein kann, bevorzugt aber ungleich null ist.

Bevorzugt wird das Werkzeug dabei mittels einer Profil- oder Formrolle modifiziert abgerichtet. Die erfindungsgemäße Profil- oder Formrolle kann dabei insbesondere über eine Rotationsachse drehbar sein, und ein rotationssymmetrisches Profil aufweisen.

Gemäß einer ersten Variante kann die Profil- oder Formrolle beim Abrichten vom Fußbereich bis zum Kopfbereich mit dem Zahn des Werkzeuges in Kontakt stehen, sodass die Modifikation über die gesamte Zahnhöhe in einem Hub erfolgt. Hierdurch ergibt sich ein besonders schnelles Abrichtverfahren.

In einer zweiten Variante kann die Profil- oder Formrolle beim Abrichten nur in Teilbereichen zwischen Fuß und Kopf mit dem Zahn des Werkzeuges in Kontakt stehen, sodass die gezielte Modifikation über die gesamte Zahnhöhe in mehreren Hüben und jeweils unterschiedlicher relativer Positionierung des Abrichters und/oder unterschiedlichen Abrichtern und/oder unter Einsatz unterschiedlicher Bereiche eines Abrichters erfolgt. Hierdurch verlängert sich zwar das Abrichtverfahren. Es sind jedoch noch mehr Variationen bei der Wahl der Oberflächengeometrie des Werkzeuges möglich, da die erfindungsgemäßen Modifikationen der Oberflächengeometrie für jeden Hub separat gewählt werden können. Das Abrichten erfolgt jedoch bevorzugt weiterhin in Linienkontakt, sodass sich immer noch ein relativ effizientes Abrichtverfahren ergibt.

Unabhängig von der gewählten Variante wird die Modifikation der Oberflächengeometrie des Werkzeuges bevorzugt dadurch erzeugt, dass die Position des Abrichters zum Werkzeug beim Abrichten in Abhängigkeit von dem Werkzeugdrehwinkel und/oder der Werkzeugbreitenposition variiert wird, wobei das Erzeugen der gezielten Modifikation auf dem Werkzeug erfolgt, indem bei der relativen Positionierung zwischen Abrichter und Werkzeug mindestens drei Freiheitsgrade zur Erzeugung der gewünschten Modifikation genutzt werden. Bevorzugt werden vier oder gegebenenfalls sogar fünf Freiheitsgrade eingesetzt. Bevorzugt sind die Freiheitsgrade dabei unabhängig voneinander zur Erzeugung der gewünschten Modifikation einstellbar.

Insbesondere kann vorgesehen sein, dass mindestens drei, vier oder alle der folgenden fünf Freiheitsgrade zur Erzeugung der gezielten Modifikation auf dem Werkzeug eingesetzt werden: Drehwinkel des Werkzeugs, axiale Position des Werkzeugs, y-Position des Abrichters, Achsabstand und / oder Achskreuzwinkel.

Bevorzugt wird die axiale Position des Werkzeuges, d. h. die Werkzeugbreitenposition dazu genutzt, die Berührlinie des Abrichters auf dem Werkzeug zu verschieben. Von den verbleibenden vier Freiheitsgraden werden dabei bevorzugt zwei, drei oder vier Freiheitsgrade unabhängig voneinander eingestellt, um die gezielte Modifikation entlang der Berührlinie zu erzeugen.

Erfindungsgemäß kann vorgesehen sein, dass eine gewünschte Modifikation der Oberflächengeometrie des Werkstückes vorgegeben wird, wobei in Abhängigkeit der gewünschten Modifikation der Oberflächengeometrie des Werkstückes geeignete Koeffizienten-Funktionen $F_{FtC,1}$ und/oder $F_{FtL,1}$ der Oberflächengeometrie des Werkzeuges und ein geeignetes Diagonalverhältnis bestimmt werden.

Bevorzugt werden dabei in Abhängigkeit der gewünschten Modifikation der Oberflächengeometrie des Werkstückes eine geeignete Variation der Position des Abrichters zum Werkzeug beim Abrichten in Abhängigkeit vom Werkzeugdrehwinkel und / oder der Werkzeugbreitenposition und ein geeignetes Diagonalverhältnis bestimmt. Insbesondere wird dabei die geeignete Variation der Position des Abrichters zum Werkzeug beim Abrichten so ermittelt, dass sich jeweils die gewünschte Geometrie entlang der ersten Richtung des Werkzeuges, welche durch die Berührlinie des Abrichters bestimmt wird, ergibt. Das Diagonalverhältnis wird dann so gewählt, dass die erste Richtung des Werkzeuges auf die erste Richtung des Werkstückes abgebildet wird.

Weiterhin kann erfindungsgemäß eine gewünschte Ausrichtung der Modifikation der Oberflächengeometrie des Werkstückes vorgegeben und das Diagonalverhältnis so eingestellt werden, dass sich die gewünschte Ausrichtung der Modifikation beim Diagonalwälzbearbeiten ergibt.

Gemäß der vorliegenden Erfindung kann das Diagonalverhältnis dabei in einer ersten Variante zumindest über jeden Hub konstant gehalten werden. Dies entspricht einer konstanten ersten Richtung der Modifikation über die gesamte Werkstückbreite.

Gemäß einer Weiterentwicklung der vorliegenden Erfindung kann das Diagonalverhältnis im Rahmen der Bearbeitung eines Werkstückes verändert werden. Dies ermöglicht eine noch größere Flexibilität im Hinblick auf die Ausgestaltung des Bearbeitungsverfahrens, die erzielbaren Modifikationen sowie die Berücksichtigung fertigungstechnischer Aspekte.

Erfindungsgemäß kann dabei zur Bearbeitung unterschiedlicher Bereiche des Werkstückes und / oder bei der Verwendung unterschiedlicher Bereiche des Werkzeuges mit unterschiedlichen Diagonalverhältnissen gearbeitet werden.

Die unterschiedlichen Diagonalverhältnisse können dabei während dem gleichen Bearbeitungshub eingesetzt werden, und / oder es können unterschiedliche Hübe mit unterschiedlichen Diagonalverhältnissen erfolgen.

Gemäß der vorliegenden Erfindung ist es dabei möglich, bei der Verwendung unterschiedlicher Bereiche des Werkzeuges zur Bearbeitung des gleichen Bereiches des Werkstückes mit unterschiedlichen Diagonalverhältnissen zu arbeiten. Insbesondere können dabei für unterschiedliche Hübe, welche zur Bearbeitung des gleichen Bereiches eingesetzt werden, unterschiedliche Diagonalverhältnisse eingesetzt werden. In einer möglichen Ausführungsform der vorliegenden Erfindung wird jedoch auch hier innerhalb der jeweiligen Bereiche jeweils mit einem konstanten Diagonalverhältnis gearbeitet.

Alternativ oder zusätzlich kann zur Bearbeitung unterschiedlicher Bereiche des Werkstücks mit unterschiedlichen Diagonalverhältnissen gearbeitet werden. Dabei kann das Diagonalverhältnis verändert werden, während im Rahmen der Verzahnbearbeitung die Breite der Verzahnung abgefahren wird. Gemäß einer bevorzugten Ausführungsform der vorliegenden Erfindung kann dabei innerhalb der jeweiligen Bereiche jedoch jeweils mit einem konstanten Diagonalverhältnis gearbeitet werden.

Insbesondere kann dabei die Veränderung des Diagonalverhältnisses dazu eingesetzt werden, um die Ausrichtung der sich auf dem Werkstück ergebenden Modifikationen zu verändern. Dabei wird im Diagonalwälzverfahren die modifizierte Oberfläche des Werkzeuges auf die Oberfläche des Werkstückes abgebildet, wobei diese Abbildung vom gewählten Diagonalverhältnis abhängt. Durch die Veränderung des Diagonalverhältnisses während der Bearbeitung unterschiedlicher Bereiche des Werkstückes kann damit in diesen unterschiedlichen Bereichen des Werkstückes eine unterschiedliche Ausrichtung der Modifikation erreicht werden.

Wird dabei in zwei oder mehr Bereichen jeweils mit einem konstanten, jedoch unterschiedlichen Diagonalverhältnis gearbeitet, ergeben sich dementsprechend unterschiedliche, jedoch innerhalb der Bereiche konstante Ausrichtungen der Modifikationen. Wird dagegen das Diagonalverhältnis innerhalb eines Bereiches variiert, ergibt sich eine entsprechende Variation in der Ausrichtung. Ist das Diagonalverhältnis dabei durch eine stetige, nicht konstante Funktion gegeben, ergibt sich dementsprechend eine stetige Veränderung in der Ausrichtung der Modifikation.

Die vorliegende Erfindung ist daher nicht auf den Einsatz jeweils konstanter Diagonalverhältnisse für gewisse Bereiche beschränkt. Vielmehr können die Variationen des Diagnolaverhältnisses über eine solche bereichsweise konstante Variation hinausgehen.

Gemäß der vorliegenden Erfindung kann das Diagonalverhältnis während der Bearbeitung des Werkstücks in Abhängigkeit von dem Axialvorschub des Werkstückes und / oder Werkzeuges variiert werden. Bevorzugt ist das Diagonalverhältnis dabei zumindest in einem Bereich des Axialvorschubes als eine stetige, nicht-konstante Funktion des Axialvorschubs gegeben. Insbesondere kann das Diagonalverhältnis dabei in Abhängigkeit von dem Axialvorschub frei vorgebbar sein. Bevorzugt wird eine Variation des Diagonalverhältnisses eingesetzt, während ein modifizierter Bereich des Werkzeuges zur Bearbeitung des Werkstückes eingesetzt wird.

Gemäß einer bevorzugten Ausführungsform der vorliegenden Erfindung wird hierbei der Verlauf mindestens einer Linie der Modifikation auf dem Werkstück vorgegeben, entlang welcher die Modifikation durch eine lineare und / oder quadratische Funktion gegeben ist, und hieraus die Variation des Diagonalverhältnisses in Abhängigkeit vom Axialvorschub und insbesondere die stetige, nicht-konstante Funktion, durch welche dieser gegeben ist, bestimmt. Der nicht-konstante Verlauf des Diagonalverhältnisses erlaubt es dabei, auch solche Modifikationen auf dem Werkstück zu erzeugen, bei welchen die Linien, auf denen die Modifikation durch eine lineare und / oder quadratische Funktion gegeben ist, gekrümmt sind.

Die erfindungsgemäße Variation des Diagonalverhältnisses kann dabei sowohl bei zylindrischen, als auch bei konischen Werkzeugen eingesetzt werden. Der Einsatz konischer Werkzeuge wird dabei in folgenden noch näher beschrieben.

Das erfindungsgemäße Werkzeug kann dabei in einer ersten Variante mindestens einen modifizierten und einen unmodifizierten Bereich aufweisen. Bevorzugt weist das Werkzeug dabei zwei modifizierte Bereiche auf, zwischen welchen ein unmodifizierter Bereich liegt. Sind dabei zwei modifizierte Bereiche vorgesehen, können die Ausrichtung der Modifikationen und insbesondere die erste Richtung der Modifikationen in diesen Bereichen identisch sein. Hierdurch ergibt sich ein besonders einfaches Abrichtverfahren. Bevorzugt wird dann in den beiden modifizierten Bereichen mit unterschiedlichen Diagonalverhältnissen gearbeitet, um hierdurch eine unterschiedliche Ausrichtung der Modifikation auf dem Werkstück zu erreichen.

In einer zweiten Variante kann das Werkzeug zwei Bereiche mit unterschiedlichen Modifikationen aufweisen.

Insbesondere können die Modifikationen dabei eine unterschiedliche Ausrichtung, insbesondere eine unterschiedliche erste Richtung, aufweisen. Hierdurch ergeben sich noch größere Freiheitsgrade bei der Erzeugung unterschiedlich ausgerichteter Modifikationen auf dem Werkstück.

Weiterhin kann die zweite Variante auch mit der ersten Variante kombiniert werden, indem zusätzlich zu den zwei Bereichen mit unterschiedlichen Modifikationen ein unmodifizierter Bereich vorgesehen ist, welcher insbesondere zwischen den beiden modifizierten Bereichen angeordnet sein kann.

Sind mehrere modifizierte Bereiche vorgesehen, können sich die Modifikationen in den beiden Bereichen im Hinblick auf die Koeffizienten-Funktionen der Modifikation in der zweiten Richtung unterscheiden.

Erfindungsgemäß modifizierte Werkzeuge können dabei insbesondere dazu eingesetzt werden, um auf unterschiedlichen Bereichen des Werkstückes unterschiedliche Modifikationen vorzunehmen, beispielsweise an der Ober- und Unterkante unterschiedliche und insbesondere unterschiedlich ausgerichtete Endrücknahmen zu erzeugen.

In einer alternativen Ausgestaltung der vorliegenden Erfindung kann das Werkzeug mindestens zwei Bereiche aufweisen, welche nacheinander zur Bearbeitung des gleichen Bereiches des Werkstückes eingesetzt werden. Insbesondere kann es sich bei den beiden Bereichen dabei um einen Schruppbereich und einen Schlichtbereich handeln. Der Schruppbereich wird dabei eingesetzt, um einen größeren Materialabtrag bei geringerer Genauigkeit zu erreichen. Der Schlichtbereich wird dagegen nach der Schruppbearbeitung eingesetzt, um die Qualität der Oberflächengeometrie zu verbessern.

Vorteilhafterweise werden dabei die Bearbeitungsschritte mit den beiden Bereichen mit unterschiedlichen Diagonalverhältnissen durchgeführt. Insbesondere kann dabei beim Schruppschritt mit einem anderen Diagonalverhältnis gearbeitet werden als beim Schlichtschritt. Die Diagonalverhältnisse während derjeweiligen Bearbeitungsschritte können dagegen konstant gehalten werden.

Der Einsatz unterschiedlicher Diagonalverhältnisse in den beiden Werkzeugbereichen erlaubtes, die gegebene Werkzeugbreite besser zu nutzen. Insbesondere kann dabei einer der beiden Bereiche kürzer sein als der andere Bereich, obwohl diese zur Bearbeitung des gleichen Werkstückes eingesetzt werden. Entsprechend muss nur das Diagonalverhältnis an die jeweilige Breite des Bearbeitungsbereiches des Werkzeuges angepasst werden.

Bevorzugt nutzen dabei die zur Bearbeitung des Werkstücks eingesetzten Bereiche die gesamte Werkzeugbreite.

In einer bevorzugten Ausführungsform der vorliegenden Erfindung ist zumindest der Schlichtbereich modifiziert. Je nach Größe der Modifikation muss der Schruppbereich dagegen nicht unbedingt modifiziert sein. Er kann jedoch ebenfalls modifiziert sein.

Sind dabei beide Bereiche, und insbesondere sowohl der Schrupp- als auch der Schlichtbereich, modifiziert, so weisen die Modifikationen in einer möglichen Ausführungsform jeweils eine unterschiedliche Ausrichtung auf. Dabei ist die Modifikation, welche durch die beiden Bereiche auf dem Werkstück erzeugt werden soll, natürlich jeweils die gleiche. Durch die jeweils unterschiedlichen Diagonalverhältnisse würden identische Modifikationen in den beiden Bereichen jedoch unterschiedlich auf das Werkstück abgebildet. Bevorzugt sind die Modifikationen in den beiden Bereichen daher unterschiedlich ausgerichtet, sodass sie unter Berücksichtigung des unterschiedlichen Diagonalverhältnisses jeweils auf die gleiche Richtung auf dem Werkstück abgebildet werden. Insbesondere kann hierbei ein nicht-abrichtbares Werkzeug eingesetzt werden, da bei der Herstellung der Modifikationen auf einem solchen Werkzeug größere Freiheiten bestehen. Bei abrichtbaren Werkzeuges kann dagegen ggf. durch die Berührlinie des Abrichters eine Einschränkung bestehen.

In einer alternativen Ausführungsform können beide Bereiche, und insbesondere sowohl der Schrupp- als auch der Schlichtbereich, modifiziert sein und eine identische Ausrichtung der Modifikationen aufweisen. Solche Werkzeuge sind leichter durch erfindungsgemäßen Abrichtprozess herstellbar, da die Eingriffslinie des Abrichters in das Werkzeug und damit die Richtung der Modifikation auf dem Werkzeug kaum veränderbar sind. Durch die unterschiedlichen Diagonalverhältnisse in den beiden Bereichen führt dies zwar zu unterschiedlichen Ausrichtung der Modifikation auf dem Werkstück. Da der Schruppbereich jedoch ohnehin nur für eine Grobbearbeitung eingesetzt wird, und die endgültige Oberflächenform erst durch den Schlichtschritt erzeugt wird, kann dies in manchen Fällen hingenommen werden.

In diesem Fall führt die Modifikation des Schruppbereichs nur näherungsweise zu der gewünschten Modifikation auf der Verzahnung, wobei die tatsächliche Modifikation jedoch im erlaubten Toleranzbereich liegt. Bevorzugt wird das Diagonalverhältnis für den Schlichtschritt dabei so gewählt, dass sich die gewünschte Ausrichtung des Diagonalverhältnisses ergibt. Bevorzugt wird das Diagonalverhältnis für den Schruppschritt dagegen so gewählt, dass die tatsächliche Modifikation im erlaubten Toleranzbereich liegt. Ggf. kann dabei auch die Form der Modifikation, insbesondere die Koeffizienten-Funktionen im Schruppbereich gegenüber dem Schlichtbereich geändert werden.

Auch allgemein kann gemäß der vorliegenden Erfindung die Modifikation in mindestens einem Bereich des Werkzeuges, insbesondere im Schruppbereich, bei dem eingesetzten Diagonalverhältnis nur näherungsweise zu der gewünschten Modifikation auf der Verzahnung führen. Vorteilhafterweise werden die Form der Modifikation und das Diagonalverhältnis dabei so gewählt, dass die tatsächliche Modifikation im erlaubten Toleranzbereich liegt.

In einer weiteren Ausführungsform der vorliegenden Erfindung kann das Werkzeug mindestens zwei Bereiche aufweisen, welche nacheinander zur Bearbeitung unterschiedlicher Bereiche des Werkstückes eingesetzt werden. Erfindungsgemäß kann dabei die Bearbeitung in dem einen Bereich mit einem anderen Diagonalverhältnis erfolgen als in dem anderen Bereich.

Bevorzugt weist das Werkzeug dabei einen modifizierten und einen unmodifizierten Bereich auf, in welchen mit unterschiedlichen Diagonalverhältnissen gearbeitet wird.

Dabei kann das Diagonalverhältnis in dem unmodifizierten Bereich kleiner gewählt werden als in dem modifizierten Bereich, um die Breite des Werkzeuges zu verringern, da so der unmodifizierte Bereich zur Bearbeitung eines größeren Bereiches des Werkstückes einsetzbar ist und kürzer sein kann als bei einem konstanten Diagonalverhältnis. Das größere Diagonalverhältnis im modifizierten Bereich kann dagegen durch die gewünschte Ausrichtung der Modifikation auf der Zahnflanke oder die gewünschte Auflösung in die zweite Richtung bestimmt sein. In einer anderen Variante kann das Diagonalverhältnis im unmodifizierten Bereich größer sein als in dem modifizierten Bereich, um in diesem Bereich die Belastung des Werkzeuges zu verringern. Ein solches Vorgehen macht insbesondere dann Sinn, wenn der unmodifizierte Bereich mehr Material abtragen muss als der modifizierte Bereich.

Erfindungsgemäß kann dabei beispielsweise in einem Bereich, welcher zur Bearbeitung eines oberen oder unteren Endbereiches des Werkstückes eingesetzt wird, mit einem kleineren Diagonalverhältnis gearbeitet werden als in einem zur Bearbeitung eines mittleren Bereiches des Werkstückes eingesetzten Bereich. Denn bei der Bearbeitung des oberen oder unteren Endbereiches des Werkstückes taucht noch nicht das gesamte Werkzeug in das Werkstück ein, sodass die Belastungen hier niedriger sind.

In einer weiteren Variante der vorliegenden Erfindung kann das Werkzeug zwei modifizierte Bereiche aufweisen, zwischen welchen ein unmodifizierter Bereich liegt, wobei die Bereiche nacheinander zur Bearbeitung unterschiedlicher Bereiche des Werkstückes eingesetzt werden. Bevorzugt wird dabei zumindest in den beiden modifizierten Bereichen mit unterschiedlichen Diagonalverhältnissen gearbeitet. Insbesondere können hierdurch in den jeweiligen Bereichen des Werkstückes unterschiedliche Modifikationen erzeugt werden, und insbesondre Modifikationen mit unterschiedlicher Ausrichtung und insbesondere mit unterschiedlicher erster Richtung. Die beiden modifizierten Bereiche des Werkzeuges können dabei die gleiche Ausrichtung der Modifikation aufweisen. Alternativ können jedoch auch hier bereits unterschiedliche Ausrichtungen der Modifikation gewählt werden. Insbesondere kann es sich bei den beiden modifizierten Bereichen dabei um Bereiche zur Bearbeitung der unteren oberen Kante des Werkstückes handeln.

Bevorzugt sind die modifizierten und der unmodifizierte Bereich so angeordnet, dass der Verlauf des Kontaktpunktes zwischen dem Werkzeug und dem Werkstück bei der Bearbeitung in mindestens einer Schleifposition komplett im unmodifizierten Bereich liegt. Hierdurch wird sichergestellt, dass eine Position zur Verfügung steht, an welcher das Diagonalverhältnis geändert werden kann, ohne dass hierdurch die Geometrie der Verzahnung auf dem Werkstück beeinflusst würde. Dies wird dadurch erreicht, dass das Diagonalverhältnis in einer Schleifposition geändert wird, in welcher der Kontaktpunkt zwischen Werkzeug und Werkstück ausschließlich den unmodifizierten Bereich des Werkzeuges überstreicht, sodass hier keine Modifikation existiert, die durch das Diagonalverhältnis beeinflusst würde. Dabei kann in den beiden modifizierten Bereichen jeweils mit einem konstanten Diagonalverhältnis gearbeitet werden. In diesem Fall wird das Diagonalverhältnis bevorzugt solange konstant gehalten, wie der Kontaktpunkt zwischen Werkzeug und Werkstück durch einen der modifizierten Bereiche verläuft.

Alternativ zu einem solchen Vorgehen ist es jedoch denkbar, das Diagonalverhältnis beispielsweise in einem Übergangsbereich zwischen einem modifizierten und einem unmodifizierten Bereich stetig zu verändern. Hierdurch verlaufen die ersten Richtungen, in welchen die Modifikation konstant ist, in diesem Übergangsbereich jedoch nicht mehr parallel zueinander.

Neben dem erfindungsgemäßen Verfahren umfasst die vorliegende Erfindung weiterhin ein Werkzeug zur Durchführung eines Verfahrens, wie es oben beschrieben wurde. Insbesondere kann das Werkzeug mindestens einen modifizierten und einen unmodifizierten Bereich aufweisen, welche nacheinander zur Bearbeitung unterschiedlicher Bereiche des Werkstückes einsetzbar sind. Alternativ oder zusätzlich kann das Werkzeug zwei modifizierte Bereiche, zwischen welchen ein unmodifizierter Bereich liegt, aufweisen, welche nacheinander zur Bearbeitung unterschiedlicher Bereiche des Werkstückes einsetzbar sind. In einer ersten Variante weist zumindest einer der modifizierten Bereiche eine Modifikation der Oberflächengeometrie auf, welche im Wälzbild zumindest lokal in einer ersten Richtung des Werkzeuges durch eine lineare und / oder quadratische Funktion zumindest näherungsweise beschreibbar ist, wobei die Koeffizienten dieser linearen und / oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und / oder $F_{FtQ,1}$ gebildet werden. Die erste Richtung des Werkzeuges weist dabei bevorzugt einen Winkel $\rho_{FS}$ ungleich null zur Werkzeugbreitenrichtung auf. In einer zweiten Variante, welche ggf. mit der ersten Variante kombiniert werden kann, wird eine Modifikation eingesetzt, deren Steigung und / oder Balligkeit in Abhängigkeit von dem Werkzeugdrehwinkel und / oder der Werkzeugbreitenposition variiert

In einer möglichen Ausführungsform der vorliegenden Erfindung können die beiden modifizierten Bereiche des Werkzeuges unterschiedlich modifiziert sein, und insbesondere Modifikationen mit unterschiedlicher Ausrichtung aufweisen. Es sich jedoch auch eine Modifikationen mit der gleichen Ausrichtung in den beiden Bereichen denkbar.

Bevorzugt ist die Modifikation dabei so ausgestaltet, wie dies bereits im Hinblick auf die erfindungsgemäßen Verfahren dargestellt wurde.

Soll eine der später noch beschriebenen Verzahnmaschinen mit einem konischen Werkzeug eingesetzt werden, so weist diese bevorzugt eine Eingabe- und / oder Berechnungsfunktion auf, über welche unterschiedliche Diagonalverhältnisse und / oder ein variables Diagonalverhältnis vorgebbar und / oder bestimmbar sind. Insbesondere kann es die Eingabefunktion dabei erlauben, in unterschiedlichen Bereichen unterschiedliche Diagonalverhältnisse vorzugeben, und / oder ein über die Werkzeugbreite variables Diagonalverhältnis vorzugeben. Alternativ oder zusätzlich kann die Eingabefunktion eine Eingabe einer gewünschten Modifikation erlauben, und bestimmt die zur Erzeugung einer solchen Modifikation notwendigen Diagonalverhältnisse. Bevorzugt weist die Verzahnmaschine weiterhin eine Ansteuerungsfunktion auf, welche im Rahmen der Bearbeitung eines Werkstücks das Diagonalverhältnis verändert. Bevorzugt verändert die Ansteuerungsfunktion das Diagonalverhältnis dabei automatisiert.

Die erfindungsgemäße Steuerungsfunktion kann dabei mindestens zwei nacheinander erfolgende Bearbeitungsschritte durchführen, bei welchen ein jeweils anderer Bereich des Werkzeugs zur Bearbeitung des gleichen Bereiches des Werkstückes eingesetzt wird. Insbesondere kann es sich bei diesen Schritten um mindestens einen Schrupp- und mindestens einen Schlichtschritt handeln.

In einer möglichen Ausführungsform der vorliegenden Erfindung erfolgt die Ansteuerung durch die Steuerungsfunktion dabei so, dass die Bearbeitungsschritte mit unterschiedlichen Diagonalverhältnissen erfolgen. Insbesondere kann dabei der Schruppschritt und der Schlichtschritt mit unterschiedlichen Diagonalverhältnissen durchgeführt werden. Insbesondere kann hierbei ein nicht-abrichtbares Werkzeug eingesetzt werden.

Alternativ oder zusätzlich kann die Steuerungsfunktion im Verlauf eines Bearbeitungsschrittes mindestens einmal das Diagonalverhältnis ändern. Insbesondere kann die Steuerungsfunktion dabei das Diagonalverhältnis verändern, während im Rahmen eines Bearbeitungsschrittes die Breite der Verzahnung abgefahren wird. Bevorzugt arbeitet die Steuerungsfunktion dabei zur Bearbeitung unterschiedlicher Bereiche des Werkstückes mit unterschiedlichen Diagonalverhältnissen. Dabei kann eine Funktionsvariante vorgesehen sein, welche innerhalb der jeweiligen Bereiche mit einem konstanten Diagonalverhältnis arbeitet. Bevorzugt ist in diesem Fall eine Eingabefunktion vorgesehen, welche eine Definition der Bereiche und eine Vorgabe der jeweils dort vorgesehenen Diagonalverhältnisse erlaubt. Alternativ kann die Steuerungsfunktion das Diagonalverhältnis während der Bearbeitung des Werkstückes in Abhängigkeit von dem Axialvorschub des Werkstückes variieren. Insbesondere kann die Variation dabei so erfolgen, dass das Diagonalverhältnis zumindest in einem Bereich des Axialvorschubs als eine nicht-konstante, ggf. stetige Funktion des Axialvorschubs gegeben ist. Bevorzugt weist die Verzahnmaschine dabei eine Eingabefunktion auf, welche die Vorgabe der nicht-konstanten Funktion erlaubt.

Weiterhin bevorzugt weist die Verzahnmaschine eine Auswahloption auf, durch welche zwei oder mehr der oben näher dargestellten unterschiedlichen Eingabe- und / oder Steuerungsfunktionen ausgewählt werden können.

Gemäß einem weiteren Aspekt der vorliegenden Erfindung, und unabhängig von einer Variation des Diagonalverhältnisses, kann erfindungsgemäß ein Werkzeug mit einer konischen Grundform eingesetzt werden.

Der Erfinder der vorliegenden Erfindung hat dabei erkannt, dass durch ein Werkzeug, welches eine konische Grundform aufweist, die Flexibilität im Rahmen der Diagonalwälzbearbeitung gegenüber den bisher verwendeten Werkzeugen mit einer zylindrischen Grundform verbessert werden kann.

Das erfindungsgemäße Werkzeug mit einer konischen Grundform weist dabei bevorzugt eine Evolventenverzahnung auf, welche jedoch gegebenenfalls Modifikationen aufweisen kann. Evolventische Verzahnungen weisen dabei eine Geometrie auf, welche sich durch den Hüllschnitt zwischen einem Zylinder und einer Zahnstange ergibt. Die konische Grundform ergibt sich dabei dadurch, dass im Rahmen dieses Hüllschnittes die Drehachse des Zylinders gegen die Hauptebene der Zahnstange verkippt ist.

Gemäß einer bevorzugten Ausführungsform der vorliegenden Erfindung ist der Konuswinkel des Werkzeuges größer als 1', weiterhin bevorzugt größer als 30', und weiter bevorzugt größer als 1°. Durch einen entsprechend großen Konuswinkel können dabei auch größere Unterschiede zwischen den Modifikationen auf rechter und linker Zahnflanke erzeugt werden.

Bevorzugt ist der Konuswinkel des Werkzeuges jedoch kleiner als 50°, weiter bevorzugt kleiner als 20°, und weiterhin bevorzugt kleiner als 10°. Dies hat zum einen fertigungstechnische Gründe, da der Konuswinkel des Werkzeuges nicht beliebig groß gewählt werden kann. Weiterhin ist bei abrichtbaren Werkzeugen, soweit diese nicht ohnehin durch auf einem konischen Grundkörper aufgebrachtes Schleifmaterial gebildet sind, die Nutzhöhe des Werkzeuges umso kleiner, je größer der Konuswinkel des Werkzeuges ist.

Der Erfinder der vorliegenden Erfindung hat dabei erkannt, dass im Falle des Einsatzes eines konischen Werkzeuges der Konuswinkel als weiterer Freiheitsgrad zur Verfügung steht und dass gewisse Parameter der Makrogeometire des Werkzeuges und des Bearbeitungsvorgangs die Modifikationen auf rechter und linker Zahnflanke jeweils unterschiedlich beeinflussen, so dass durch eine entsprechende Wahl bzw. Einstellung dieser Parameter unterschiedliche Modifikationen auf der rechten und linken Zahnflanke des Werkstücks auch beim zweiflankigen Bearbeiten möglich sind.

Bevorzugt wird die gezielte Modifikation der Oberflächengeometrie des Werkzeuges dabei dadurch erzeugt, dass die Position des Abrichters zum Werkzeug beim Abrichten zusätzlich zu der durch den Konuswinkel notwendigen Zustellung in Abhängigkeit von dem Werkzeugdrehwinkel und / oder der Werkzeugbreitenposition variiert wird. Hierdurch lassen sich durch ein besonders einfaches Verfahren vielfältige Modifikationen erzeugen. Das Abrichten des Werkzeuges kann dabei einflanking oder zweiflankig erfolgen.

Gemäß der vorliegenden Erfindung werden bevorzugt auf der linken und rechten Zahnflanke des Werkstückes unterschiedliche Modifikationen erzeugt. Bevorzugt wird hierzu der Freiheitsgrad genutzt, welcher durch den Konuswinkel des Werkzeuges mit einer konischen Grundform gegeben ist. Bevorzugt werden dabei Modifikationen mit unterschiedlicher Ausrichtung auf der linken und rechten Zahnflanke erzeugt. Insbesondere kann dabei die erste Richtung, in welcher die Modifikation konstant ist, auf der linken und der rechten Zahnflanke unterschiedlich sein.

Weiterhin kann die vorliegende Erfindung auch eingesetzt werden, um eine Verzahnung des Werkstückes zu bearbeiten bzw. zu erzeugen, welche auf linker und rechter Zahnflanke asymmetrisch ist.

Bevorzugt erfolgt die Bearbeitung des Werkstückes erfindungsgemäß zweiflankig. In diesem Fall steht sowohl die linke als auch die rechte Zahnflanke während des Verzahnwälzverfahrens mit dem Werkzeug in Kontakt. Das zweiflankige Wälzbearbeiten hat dabei den Vorteil, dass gegenüber einem einflankigen Bearbeiten die Bearbeitungszeit erheblich verkürzt werden kann. Das zweiflankige Wälzbearbeiten hat jedoch den Nachteil, dass die Bearbeitungsverfahren für die linke und rechte Flanke nicht unterschiedlich gewählt werden können. Insbesondere muss für linke und rechte Flanke mit dem gleichen Diagonalverhältnis gearbeitet werden. Durch das erfindungsgemäß vorgesehene konische Werkzeug wird dennoch die Bereitstellung unterschiedlicher Modifikationen auf der linken und rechten Zahnflanke des Werkstückes ermöglicht.

Erfindungsgemäß kann das Werkstück eine zylindrische oder eine konische Grundform aufweisen. In beiden Fällen kann das erfindungsgemäße, konische Werkzeug eingesetzt werden.

Bevorzugt wird dabei erfindungsgemäß durch eine geeignete Wahl des Konuswinkels eine gewünschte Ausrichtung der Modifikation auf der linken und rechten Zahnflanke erreicht. Insbesondere umfasst das vorliegende Verfahren dabei einen Schritt der Vorgabe einer gewünschten Ausrichtung der Modifikation auf der linken und rechten Zahnflanke, und der Bestimmung eines hierfür geeigneten Konuswinkels.

Bei dem erfindungsgemäßen Bearbeitungsverfahren wird bevorzugt der Axialvorschub des Werkzeuges mit einer Zustellbewegung des Werkzeuges an das Werkstück überlagert. Bevorzugt erfolgt die überlagerte Bewegung dabei in Konusrichtung. Hierdurch wird erreicht, dass während des Bearbeitungsverfahrens das Werkzeug trotz der konischen Grundform die gleiche Eingriffstiefe in das Werkstück aufweist. Insbesondere erfolgt die Zustellbewegung dabei in linearer Abhängigkeit vom Axialvorschub. Bevorzugt hängt der Proportionalitätsfaktor zwischen dem Axialvorschub und der Zustellbewegung des Werkzeuges dabei von dem Konuswinkel ab und entspricht bevorzugt dem Tangens des Konuswinkels. Die zur Herstellung der Modifikation notwendigen Modifikationen der Abrichtkinematik können mit dieser Bewegung überlagert werden

Neben dem erfindungsgemäßen Verfahren umfasst die vorliegende Erfindung weiterhin ein Werkzeug zur Verzahnbearbeitung eines Werkstückes durch ein Diagonalwälzverfahren, welches eine konische Grundform aufweist. Dabei weist das Werkzeug eine Modifikation seiner Oberflächengeometrie auf, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert. Bevorzugt ist der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist Durch das erfindungsgemäße Werkzeug ergeben sich dabei die Vorteile, welche bereits oben näher beschrieben wurden.

Bevorzugt handelt es sich bei dem Werkzeug dabei um ein abrichtbares Werkzeug. In einer möglichen Ausführungsform kann das Werkzeug dabei einen Grundkörper aufweisen, auf welchem eine Schicht Schleifmaterial aufgebracht ist, deren Form durch einen Abrichtprozess veränderbar ist.

In einer möglichen Ausführungsform kann dabei bereits der Grundkörper eine konische Grundform aufweisen, um auch bei einer konischen Grundform des fertigen Werkzeuges eine gleichmäßige Dicke der zur Verfügung stehenden Schicht an Schleifmaterial bereitzustellen. Die vorliegende Erfindung kann jedoch auch mit Werkzeugen mit einem zylindrischen Grundkörper, auf welchem eine zylindrische Schicht an Schleifmaterial aufgebracht ist, eingesetzt werden. Hierdurch hat man größere Freiheiten bei der Wahl des Konuswinkels.

Bei dem erfindungsgemäßen Werkzeug kann es sich dabei insbesondere um eine Schleifschnecke handeln.

Gemäß der vorliegenden Erfindung kann dabei die Modifikation des Werkzeuges auf rechter und linker Flanke identisch sein oder zumindest die gleiche Ausrichtung aufweisen. Bevorzugt werden unterschiedliche oder unterschiedlich ausgerichtete Modifikationen auf der rechten und linken Flanke des Werkstücks dann ausschließlich über den Konuswinkel erzeugt.

Gemäß der vorliegenden Erfindung kann dabei die Modifikation auf rechter und linker Flanke des Werkzeuges unterschiedlich sein. Insbesondere kann die Modifikation dabei auf linker und rechter Flanke unterschiedliche Ausrichtungen, insbesondere unterschiedliche erste Richtungen aufweisen. Alternativ oder zusätzlich kann die Modifikation auf linker und rechter Flanke durch unterschiedliche Koeffizienten-Funktionen in der zweiten Richtung gegeben sein. Die unterschiedlichen Modifikationen auf linker und rechter Flanke des Werkstückes, welche durch das erfindungsgemäße Verfahren erzeugt werden, ergeben sich damit zum einen durch die unterschiedlichen Modifikationen auf rechter und linker Flanke des Werkzeuges, und zum anderen durch die konische Grundform des Werkzeuges.

Soll eine der später noch beschriebenen Verzahnmaschinen mit einem konischen Werkzeug eingesetzt werden, so weist diese bevorzugt eine Eingabe- oder Bestimmungsfunktion auf, über welche der Konuswinkel des Werkzeuges und / oder des Werkstückes eingebbar und / oder bestimmbar ist. Weiterhin bevorzugt weist die Verzahnmaschine eine Ansteuerungsfunktion auf, welche die NC-Achsen der Verzahnmaschine so ansteuert, dass bei der Bearbeitung ein Werkzeug mit einer konischen Grundform im Diagonalwälzverfahren auf dem Werkstück abwälzt. Bevorzugt wird dabei der Axialvorschub des Werkzeuges mit einer Zustellbewegung des Werkzeuges an das Werkstück überlagert. Weiterhin bevorzugt erfolgt die sich hierdurch ergebende überlagerte Bewegung in Konusrichtung. Alternativ oder zusätzlich kann die Verzahnmaschine das Abrichten eines konischen Werkzeuges erlauben, wobei die Verzahnmaschine hierfür bevorzugt eine Ansteuerungsfunktion aufweist, welche die NC-Achsen der Verzahnmaschine so ansteuert, dass beim Abrichten des Werkzeuges mit einer konischen Grundform der Abrichter der konischen Grundform folgt.

Die erfindungsgemäße Verzahnmaschine kann weiterhin eine Eingabefunktion umfassen, die die Eingabe einer gewünschten Modifikation des Werkstückes erlaubt. Weiterhin bevorzugt ist in diesem Fall auch eine Berechnungsfunktion vorgesehen, die die zur Erzeugung der Modifikationen benötigten Veränderungen der Maschinenkinematik während Abrichtprozesses und/oder den benötigten Konuswinkel und/oder den benötigten Profilwinkel bestimmt. Insbesondere können dabei die Veränderungen der Maschinenkinematik, welcher der durch den Konuswinkel vorgegebenen Zustellungsbewegung des Abrichters an das Werkzeug überlagert werden, berechnet werden. Weiterhin kann die Berechnungsfunktion das notwendige Diagonalverhältnis berechnen.

Alternativ oder zusätzlich kann die Verzahnmaschine eine Eingabefunktion umfassen, durch welche gewünschte Modifikationen des Werkzeuges und/oder der benötigte Konuswinkel und / oder den benötigten Profilwinkel und/oder die zur Erzeugung dieser Modifikationen benötigten Veränderungen der Maschinenkinematik während des Abrichtprozesses eingebbar sind. Diese können dann beispielsweise extern berechnet und über die Eingabefunktion der Verzahnmaschine zugeführt werden.

Weiterhin bevorzugt weist die Verzahnmaschine eine Ansteuerungsfunktion auf, welche die Maschinenkinematik während des Bearbeitungsprozesses und / oder des Abrichtprozesses entsprechend verändert.

Die erfindungsgemäße Verzahnmaschine kann dabei insbesondere mit einem konischen Werkzeug, wie es oben näher beschrieben wurde, ausgestattet werden.

Wie bereits oben dargelegt kann das erfindungsgemäße Werkzeug mit einer konischen Grundform im Rahmen eines Bearbeitungsvorgangs eingesetzt werden, bei welchem das Diagonalverhältnis bei der Bearbeitung eines Werkstückes variiert wird. Ein konisches Werkzeug kann jedoch genauso auch dann eingesetzt werden, wenn eine solche Variation des Diagonalverhältnisses nicht erfolgt und das Diagonalverhältnis zumindest für einen und gegebenenfalls auch für alle Hübe, mit welchen die Verzahnung bearbeitet wird, konstant ist.

Erfindungsgemäß ist es zudem möglich, die oben näher definierte, durch eine modifizierte Oberflächengeometrie des Werkzeugs erzeugte Modifikation des Werkstücks mit weiteren Modifikationen zu überlagern. Insbesondere kann die durch die gezielte Modifikation des Werkzeuges erzeugte Modifikation des Werkstücks mit einer Profilmodifikation und/oder einer durch eine Veränderung der Maschinenkinematik während des Bearbeitungsprozesses des Werkstückes hervorgerufenen Modifikation überlagert werden.

Die Überlagerung mit einer Profilmodifikation kann dabei bereits auf dem Werkzeug erfolgen. Insbesondere kann das Werkzeug neben der oben definierten Modifikation noch eine Profilmodifikation umfassen, so dass die Gesamtmodifikation der Oberflächengeometrie des Werkzeuges sich als die Summe der oben definierten Modifikation und einer Profilmodifikation ergibt. Diese wird dann durch das Diagonalwälzverfahren auf das Werkstück übertragen und dabei ggf. mit einer durch eine Veränderung der Maschinenkinematik beim Diagonalwälzverfahren erzeugten Modifikation überlagert.

Neben den erfindungsgemäßen Verfahren umfasst die vorliegende Erfindung weiterhin eine Verzahnmaschine zum Bearbeiten eines Werkstückes mit einem Werkzeug im Diagonalwälzverfahren und / oder zum Abrichten eines Werkzeuges mit einem Abrichter in Linienkontakt zur Durchführung eines Verfahrens, wie es oben näher beschrieben wurde.

Die Verzahnmaschine kann eine Bearbeitungsmaschine umfassen, mit welcher ein in einer Werkstückaufnahme aufgenommenes Werkstück durch ein in einer Werkzeugaufnahme aufgenommenes Werkzeug bearbeitet werden kann. Die Werkzeugaufnahme ist dabei bevorzugt an einem Bearbeitungskopf angeordnet, welcher über entsprechende Bewegungsachsen zur Erzeugung einer Relativbewegung zwischen Werkzeug und Werkstück zur Bearbeitung des Werkstückes aufweist. Die Werkstückaufnahme und die Werkzeugaufnahme weisen dabei jeweils Rotationsachsen auf, deren Bewegung miteinander gekoppelt werden kann, um die Wälzbearbeitung durchzuführen.

Die Verzahnmaschine kann eine Abrichtmaschine umfassen. Diese weist bevorzugt eine Abrichteraufnahme auf, über welche der Abrichter um eine Rotationsachse gedreht werden kann. Weiterhin bevorzugt weist die Abrichtmaschine eine Werkzeugaufnahme auf, in welche das Werkzeug eingespannt und über welche das Werkzeug um seine Rotationsachse gedreht werden kann. Weiterhin sind Bewegungsachsen vorgesehen, über welche die für das erfindungsgemäße Abrichten notwendigen Relativbewegungen zwischen Abrichter und Werkzeug erzeugbar sind.

Besonders bevorzugt handelt es sich bei der erfindungsgemäßen Verzahnmaschine um eine Kombination aus einer Bearbeitungsmaschine und einer Abrichtmaschine. Bevorzugt teilen sich dabei Abrichtmaschine und Bearbeitungsmaschine die Werkzeugaufnahme. In diesem Fall kann ein in der Werkzeugaufnahme eingespanntes Werkzeug zum einen dazu eingesetzt werden, um ein Werkstück zu bearbeiten. Weiterhin ist es möglich, das in dieser Werkzeugaufnahme eingespannte Werkzeug abzurichten, ohne dass das Werkzeug ausgespannt und in einer anderen Werkzeugaufnahme wieder eingespannt werden müsste.

Bei den Bewegungsachsen der Verzahnmaschine handelt es sich bevorzugt um NC-Achsen. Die Verzahnmaschine weist bevorzugt eine Steuerung zur Ansteuerung der NC-Achsen der Verzahnmaschine auf. Bevorzugt ist die Steuerung dabei so programmiert, dass ein erfindungsgemäßes Verfahren auf der Verzahnmaschine durchführbar ist. Insbesondere weist die Steuerung dabei Funktionen zur Durchführung eines erfindungsgemäßen Verfahrens auf.

Die erfindungsgemäße Verzahnmaschine weist bevorzugt eine Eingabefunktion auf, über welche eine gewünschte Modifikation der Oberflächengeometrie des Werkstückes vorgebbar ist. Weiterhin weist die Verzahnmaschine bevorzugt eine Ansteuerungsfunktion auf, welche die zur Bereitstellung der Modifikation der Oberflächengeometrie des Werkstückes geeignete Modifikation der Oberflächengeometrie des Werkzeuges und ein geeignetes Diagonalverhältnis bestimmt.

Bevorzugt erzeugt die Ansteuerungsfunktion dabei die Modifikation der Oberflächengeometrie des Werkzeuges während des Abrichtens, insbesondere durch entsprechende Ansteuerung der Bewegungsachsen der Abrichtmaschine. Alternativ oder zusätzlich kann die Ansteuerungsfunktion das Diagonalwälzverfahren zur Bearbeitung des Werkstückes mit dem zur Herstellung der gewünschten Modifikation der Oberflächengeometrie des Werkstückes geeigneten Diagonalverhältnis durchführen.

Die Verzahnmaschine kann weiterhin eine Abrichtfunktion zum modifizierten Abrichten des Werkzeuges aufweisen, welche die Position des Abrichters zum Werkzeug beim Abrichten in Abhängigkeit von dem Werkzeugdrehwinkel und / oder der Werkzeugbreitenposition variiert. Bevorzugt stellt die Abrichtfunktion dabei zumindest die Eingriffstiefe und den Eingriffswinkel des Abrichters in Abhängigkeit von dem Werkzeugdrehwinkel und / oder der Werkzeugbreitenposition ein, insbesondere als eine variable Funktion des Werkzeugdrehwinkels und / oder der Werkzeugbreitenposition. Alternativ oder zusätzlich kann die Abrichtfunktion bei der relativen Positionierung zwischen Abrichter und Werkzeug mindestens drei und bevorzugt vier oder fünf Freiheitsgrade der Verzahmaschine zur Erzeugung der gewünschten Modifikation nutzen. Bevorzugt sind die Freiheitsgrade dabei unabhängig voneinander zur Erzeugung der gewünschten Modifikation ansteuerbar.

Die Eingabefunktion kann dabei erfindungsgemäß so ausgestaltet sein, dass sie die Vorgabe der gewünschten Modifikation der Oberflächengeometrie des Werkstückes als stetige Funktion und / oder auf einer Punktewolke erlaubt. Bevorzugt ist die stetige Funktion dabei auf einer Fläche auf der Zahnflanke vorgebbar und / oder die Punktewolke spannt eine Fläche auf der Zahnflanke auf. Insbesondere kann dabei vorgesehen sein, dass die gewünschte Variation über die gesamte Zahnflanke vorgebbar ist.

Gemäß einer möglichen Ausführungsform der vorliegenden Erfindung kann die Eingabefunktion die Vorgabe der gewünschten Modifikation der Oberflächengeometrie des Werkstückes an mindestens zwei oder drei Wälzwinkeln als eine Funktion der Werkstückbreitenposition erlauben und für die dazwischen liegenden Wälzwinkelbereiche eine Interpolation vornehmen.

Bevorzugt bestimmt die Verzahnmaschine die Modifikation der Oberflächengeometrie des Werkzeuges, welche zur Herstellung der gewünschten Modifikation der Oberflächengeometrie des Werkstückes notwendig ist, als stetige Funktion und / oder auf einer Punktewolke. Alternativ oder zusätzlich kann die Verzahnmaschine die Vorgabe der Modifikation der Oberflächengeometrie des Werkzeuges als stetige Funktion und / oder auf einer Punktewolke erlauben.

Bevorzugt wird dabei die stetige Funktion auf einer Fläche auf der Zahnflanke bestimmt und / oder ist auf dieser vorgebbar. Alternativ oder zusätzlich kann die Punktewolke eine Fläche auf der Zahnflanke aufspannen. Insbesondere kann die Modifikation dabei auf der gesamten Zahnflanke bestimmt werden und / oder auf dieser vorgebbar sein.

Bevorzugt ist die Modifikation der Oberflächengeometrie des Werkzeuges im Rahmen der Bestimmung und / oder Vorgabe an mindestens zwei Wälzwinkeln als eine Funktion der Werkzeugbreitenposition variierbar, wobei die Steuerung für die dazwischenliegenden Wälzwinkelbereiche eine Interpolation vornimmt.

Weiterhin kann vorgesehen sein, dass die Verzahnmaschine die Vorgabe einer gewünschten Modifikationen der Oberflächengeometrie des Werkstückes als eine Funktion erlaubt, welche im Wälzbild zumindest lokal in einer ersten Richtung des Werkstückes durch eine lineare Funktion zumindest näherungsweise beschreibbar ist, wobei die Koeffizienten dieser linearen Funktion in einer zweiten Richtung des Werkstückes, welche senkrecht zur ersten Richtung verläuft, durch Koeffizienten-Funktionen $F_{FtC,2}$ und/oder $F_{FtL,2}$ gebildet werden, wobei bevorzugt die Koeffizienten-

Funktion $F_{FtI,2}$ und / oder $F_{FtII,2}$ und / oder die erste Richtung der Modifikationen der Oberflächengeometrie des Werkstückes zumindest innerhalb bestimmter Randbedingungen frei vorgebbar und / oder wählbar ist. Insbesondere kann die Eingabefunktion dabei entsprechende Eingabefelder zur Eingabe von Daten enthalten, aus welchen die Koeffizientenfunktionen und / oder die erste Richtung innerhalb der Steuerung ermittelt werden und / oder durch welche diese festgelegt werden.

Weiterhin kann die Verzahnmaschine die Vorgabe einer gewünschten Modifikation der Oberflächengeometrie des Werkstückes als eine Funktion erlauben, welche in einer ersten Richtung einer Steigung aufweist, die in Werkstückbreitenrichtung, d. h. in einer zweiten Richtung, variiert. Insbesondere können hierfür entsprechende Eingabefelder innerhalb der Eingabefunktion vorgesehen sein, über welche die Steigung als eine Funktion der Werkstückbreitenrichtung definierbar ist.

Gemäß einer möglichen Ausführungsform der vorliegenden Erfindung kann die Modifikation der Oberflächengeometrie des Werkstückes an mindestens zwei Wälzwinkeln als Funktion der Werkzeugbreitenposition vorgebbar sein, wobei die Steuerung für die dazwischen liegenden Wälzwinkelbereiche eine Interpolation vornimmt. Durch die Vorgabe an zwei Wälzwinkeln kann die Steigung der Modifikation vorgegeben.

Weiterhin kann vorgesehen sein, dass die Verzahnmaschine die Vorgabe und / oder Bestimmung einer Modifikationen der Oberflächengeometrie des Werkzeuges als eine Funktion erlaubt, welche im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen $F_{FtC,1}$ und/oder $F_{FtL,1}$ gebildet werden, wobei bevorzugt die Koeffizienten-Funktionen $F_{FtC,1}$ und/oder $F_{FtL,1}$ der Modifikation der Oberflächengeometrie des Werkzeuges zumindest innerhalb bestimmter Randbedingungen frei wählbar und / oder variierbar sind. Insbesondere können dabei die entsprechenden Koeffizientenfunktionen im Rahmen einer Ausgleichsrechnung variierbar sein, um eine Modifikation des Werkzeuges zu ermitteln, welche die gewünschte Modifikation des Werkstückes möglichst gut erzeugt. Gegebenenfalls können die Koeffizientenfunktionen jedoch auch analytisch aus den Daten, welche zur gewünschten Modifikation des Werkstückes eingegeben wurden, durch die Steuerung bestimmt werden.

Weiterhin kann vorgesehen sein, dass die Verzahnmaschine die Vorgabe und / oder Bestimmung einer Modifikation der Oberflächengeometrie des Werkzeuges als eine Funktion erlaubt, welche in einer ersten Richtung eine Steigung aufweist, welche in Werkstückbreitenrichtung variiert.

Insbesondere kann die Modifikation der Oberflächengeometrie des Werkzeuges im Rahmen der Bestimmung und / oder Vorgabe an mindestens zwei Wälzwinkeln als Funktion der Werkstückbreitenposition vorgebbar und / oder variierbar sein, wobei die Steuerung für die dazwischen liegenden Wälzwinkelbereiche eine Interpolation vornimmt.

Bevorzugt ist die erfindungsgemäße Verzahnmaschine bzw. sind die erfindungsgemäßen Funktionen der Verzahnmaschine dabei so ausgestaltet, dass sie die oben näher dargestellten Verfahren implementieren, die oben dargestellten Eingaben erlauben und / oder die oben dargestellten Bestimmungen oder Ansteuerungen vornehmen.

Die vorliegende Erfindung umfasst weiterhin ein Computerprogramm mit einer Eingabefunktion zur Eingabe von Daten zu einer gewünschten Modifikation der Oberflächengeometrie des Werkstückes und mit einer Funktion zur Bestimmung der Modifikation des Werkzeuges und des Diagonalverhältnisses, wobei die Funktionen ein Verfahren implementieren, wie es oben dargestellt wurde. Insbesondere kann das Computerprogramm dabei die Funktionen aufweisen, welche oben im Hinblick auf die Funktionen der Verzahnmaschine dargestellt wurden.

Bevorzugt kann das Computerprogramm dabei auf einer Verzahnmaschine installiert werden, um ein erfindungsgemäßes Verfahren mit der Verzahnmaschine durchführen zu können. Alternativ kann das Computerprogramm eine Ausgabefunktion für Daten zur Verwendung auf einer Verzahnmaschine aufweisen.

Im folgenden werden noch einmal einige Merkmale beschrieben, welche sich auf alle Aspekte der vorliegenden Erfindung beziehen:

Bei dem erfindungsgemäßen Wälzbearbeitungsverfahren handelt es sich bevorzugt um ein Wälzschleifverfahren. Bei dem Werkzeug, welches erfindungsgemäß abgerichtet bzw. eingesetzt wird, handelt es sich bevorzugt um eine Schleifschnecke.

Bevorzugt sind das erfindungsgemäße Verfahren und die erfindungsgemäßen Vorrichtungen bzw. Werkzeuge so ausgestaltet, dass erfindungsgemäß eine evolventische Verzahnung auf dem Werkstück erzeugt wird. Die erfindungsgemäß eingesetzten bzw. herstellbaren Modifikationen der Oberflächengeometrie des Werkzeugs und/oder des Werkstücks sind daher bevorzugt Modifikationen einer evolventischen Oberflächengeometrie.

Im Hinblick auf die erfindungsgemäß definierte Funktion, welche die Modifikation des Werkzeuges oder Werkstückes zumindest näherungsweise beschreibt und welche im Wälzbild in einer ersten Richtung durch eine konstante und/oder lineare Funktion zumindest näherungsweise beschreibbar ist, wobei die Koeffizienten dieser konstanten und/oder linearen Funktion in einer zweiten Richtung, welche senkrecht zur ersten Richtung verläuft, durch Koeffizienten-Funktionen $F_{FtC,1/2}$ und/oder $F_{FtL,1/2}$ gebildet werden, kann es sich bei $F_{FtC,1/2}$ um die Koeffizienten-Funktion für den konstanten Anteil, bei $F_{FtL,1/2}$ um die Koeffizienten-Funktion für den linearen Anteil der Modifikation des Werkzeugs oder Werkstücks in der ersten Richtung handeln.

Bevorzugt ist dabei $F_{FtC,1/2}$ nicht-konstant und hängt weiter bevorzugt nicht-linear von der Position in der zweiten Richtung ab. Weiterhin ist $F_{FtL,1/2}$ bevorzugt nicht-konstant und hängt weiter bevorzugt linear oder nicht-linear von der Position in der zweiten Richtung ab.

Bevorzugt ist die Modifikation des Werkstückes oder Werkzeuges im Wälzbild nicht nur lokal, sondern zumindest in einem Teilbereich der Verzahnung und ggf. auch über die gesamte Verzahnung auch global zumindest näherungsweise durch die oben ggf. näher spezifizierte konstante, lineare und/oder quadratische Funktion beschreibbar ist, wobei die Koeffizienten dieser konstanten, linearen und/oder quadratischen Funktion in einer zweiten Richtung, welche senkrecht zur ersten Richtung verläuft, durch Koeffizienten-Funktionen $F_{FtC,1/2}$ für den konstanten Anteil sowie $F_{FtL,1/2}$ für den linearen Anteil gebildet werden.

Wird in der vorliegenden Anmeldung davon gesprochen, dass eine Modifikation zumindest näherungsweise durch eine bestimmte Funktion beschreibbar ist, so bedeutet dies bevorzugt, dass die bestimmte Funktion die Modifikation im Rahmen einer vorgegebenen zulässigen Toleranz beschreibt und/oder dass die Differenz zwischen der bestimmten Funktion und der Modifikation innerhalb eines vorgegebenen zulässigen Toleranzbereiches liegt. Das erfindungsgemäße Verfahren kann dabei den Schritt der Vorgabe einer zulässigen Toleranz und/oder eines zulässigen Toleranzbereiches enthalten. Weiterhin kann die erfindungsgemäße Verzahnmaschine bzw. das Computersystem oder Computerprogramm eine Funktion zur Vorgabe einer zulässigen Toleranz und/oder eines zulässigen Toleranzbereiches umfassen.

Die vorliegende Erfindung wird nun anhand von Ausführungsbeispielen und Zeichnungen näher beschrieben, wobei die Erzeugung von in Werkzeugbreiterichtung variierenden Profilballigkeiten nicht beansprucht wird.

Kurzbeschreibung der Figuren:

Die Figuren zeigen beispielhaft nur w-z-Diagramme zylindrischer Verzahnungen. Die w-z-Diagramme konischer Verzahnungen sind im Allgemeinen nicht rechteckig, meist trapezförmig, da sich der Auswertebereich des Wälzwegs über die Verzahnbreite ändert.

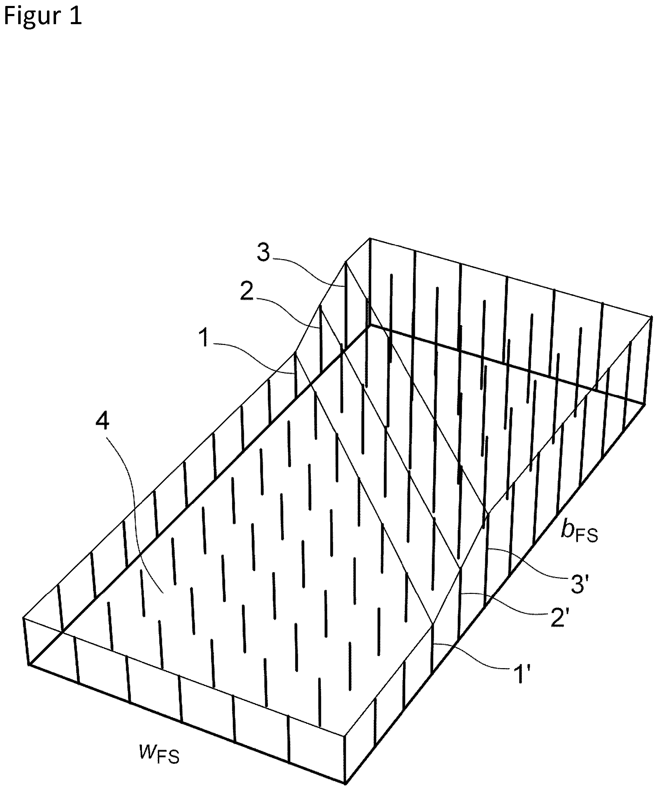

Figur 1  zeigt schematisch einen Abschnitt der Flanke eines Schneckengangs mit Vektoren in Normalenrichtung für eine nicht über die ganze Breite abgerichtete Schnecke. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke der nicht modifizierten Schnecke, auf die die Vektoren gestellt werden. Die Vektoren 1 und 1' wurden bereits von der Berührline überstrichen und sind somit vollständig gekürzt. Die Vektoren 2 und 2' wurden bereits mindestens einmal gekürzt, jedoch noch nicht von der Berührlinie überstrichen. Die Vektoren 3 und 3' wurden noch nicht gekürzt und haben somit noch die Länge dem gewählten Aufmaß entsprechend.

Figur 2  zeigt eine topologische Modifikation $f_{nFS}(w_{FS}, b_{FS})$ einer Schnecke, mit der Berührline 10 zwischen Abrichter und Schnecke und mit den vier frei vorgebaren Linien $w_{FSi}(b_{FS})$ 11, 12, 13 und 14, entlang derer die Sollmodifikation beim Abrichten exakt erreicht werden soll.

Figur 3  zeigt eine topologische Modifikation $f_{nFS}(w_{FS}, b_{FS})$ einer Schnecke, die mit einem Abrichter abgerichtet wurde, der zum Abrichten von Schnecken ausgelegt wurde, welche beim Wälzschleifen eine lineare Fußrücknahme an der Verzahnung erzeugen. Solche Abrichter weisen auf einen bestimmten Radius einen Knick auf, welcher den Übergang von Hauptprofil zur Fußrücknahme markiert. In der Figur wurde dieser Radius auf dem Abrichter über die Schneckenbreite verschiedenen Radien auf der Schnecke zugeordnet, sodass dieser Knick 15 auf der Schnecke in einem Bogen verläuft.

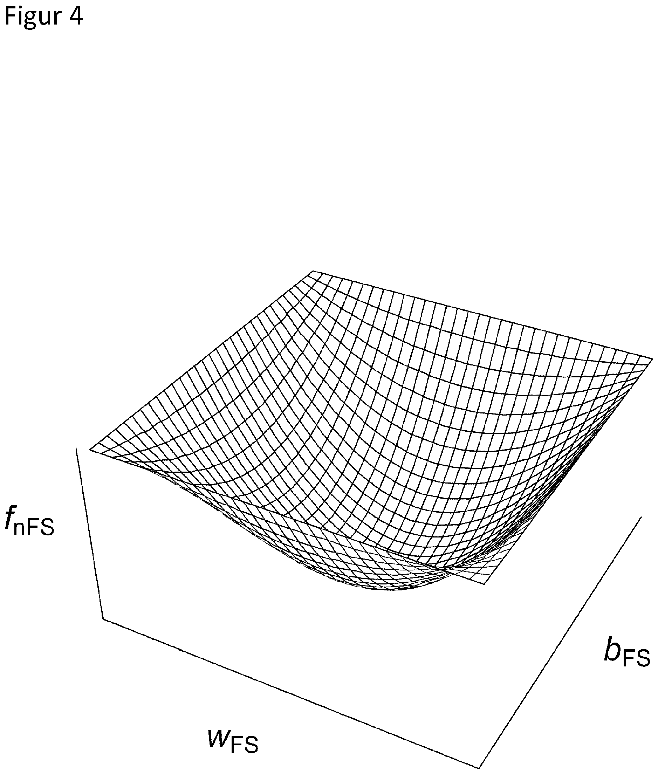

Figur 4  zeigt am Beispiel einer evolventischen Schnecke beispielhaft eine topologische Modifikation, welche mit der Erfindung beim Abrichten sehr genau angenähert werden kann. Die Modifikation ist definiert als Produkt einer Breiten- und einer Profilballigkeit.

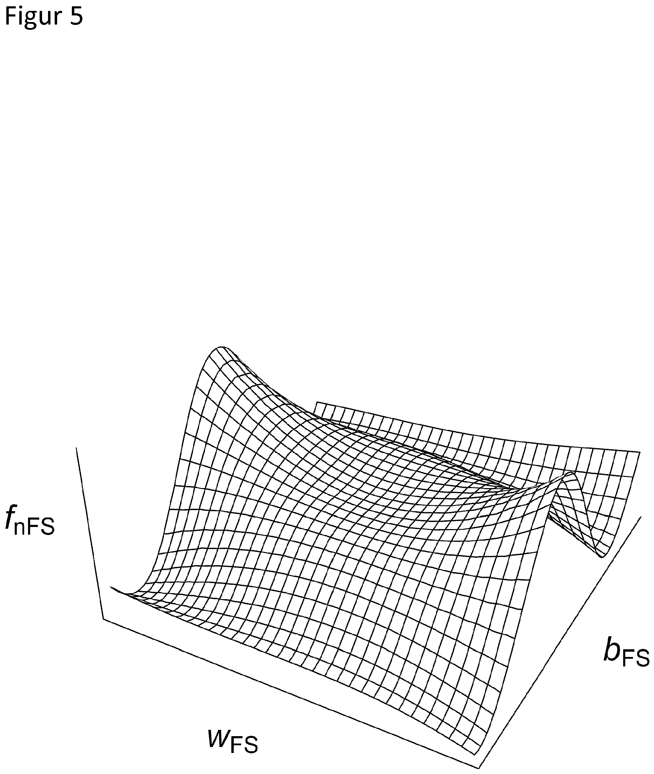

Figur 5  zeigt am Beispiel einer evolventischen Schnecke beispielhaft eine topologische Modifikation, welche mit der Erfindung abgerichtet werden kann. Die Modifikation ist definiert als sinusförmige Welle mit von $w_{FS}$ und $b_{FS}$ abhängiger Amplitude, wobei die Amplitude zu den Rändern hin zunimmt.

Figur 6  zeigt am Beispiel einer evolventischen Schnecke und einer damit geschliffenen evolventischen Verzahnung, welche Achskorrekturen $\Delta K$ und welche axiale Position der Schnecke $v_{zS}$ in Abhängigkeit der auf der Verzahnung zu erzeugenden Profilballigkeit $c_{\alpha V}$ einzustellen sind. Die Diagramme zeigen nahezu den ganzen Bereich der mit der gewählten Schnecke und dem gewählten Abrichter auf dieser Verzahnung erzeugbaren Profilballigkeiten.

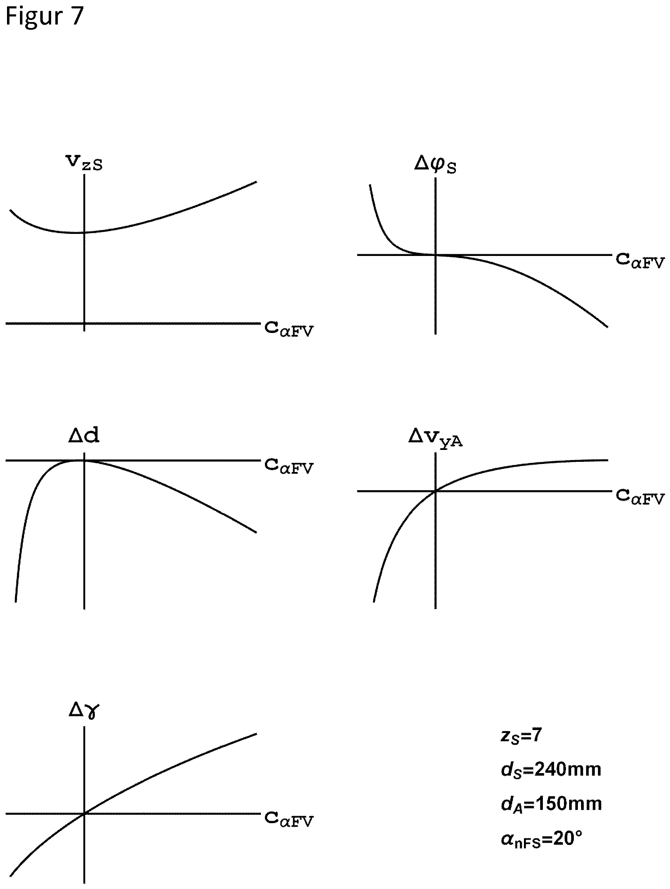

Figur 7  zeigt die gleichen Diagramme wie Figur 6, jedoch auf einen kleineren Bereich der Profilballigkeit $c_{\alpha FV}$ reduziert, um die Verläufe für kleine Profilballigkeiten besser darzustellen.

Figur 8  zeigt Diagramme wie in Figur 7 mit dem selben Bereich der Profilballigkeit $c_{\alpha FV}$, jedoch für verschiedene Schneckendurchmesser $d_S$

Figur 9  zeigt Diagramme wie in Figur 7 mit dem selben Bereich der Profilballigkeit $c_{\alpha FV}$, jedoch für einen anderen Schneckendurchmesser $d_S$ und verschiedene

Figur 10    Gangzahlen $z_S$. zeigt Diagramme wie in Figur 7 mit dem selben Bereich der Profilballigkeit $c_{\alpha FV}$, jedoch für einen anderen Schneckendurchmesser $d_S$ und verschiedene Durchmesser des Abrichters $d_A$.

Figur 11    zeigt Diagramme wie in Figur 7 mit dem selben Bereich der Profilballigkeit $c_{\alpha FV}$ jedoch für einen anderen Schneckendurchmesser $d_S$ und verschiedene Profilwinkel der Schnecke $\alpha_{nFS}$.

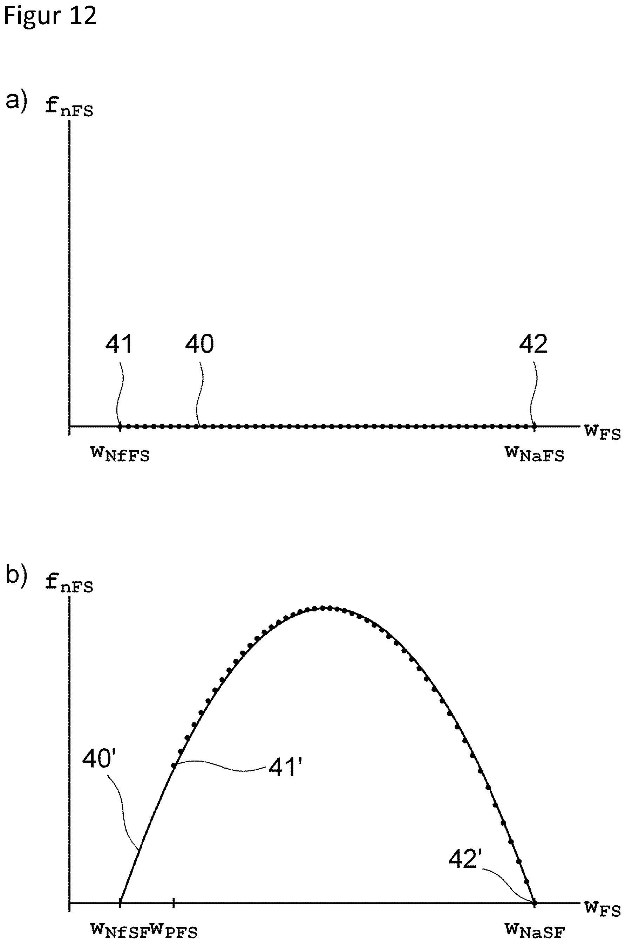

Figur 12    a) zeigt die Profilmodifikation 40 auf einer nicht modifizierten Schnecke, welche mit nicht korrigierter Kinematik mit einem Abrichter abgerichtet wurde, der für ein gerades Profil ohne Profilkorrektur ausgelegt wurde. Die Punkte zeigen die tatsächlich gefertigte Profilmodifikation $f_{nS}$, welche über dem ganzen Profil 0 ist. Jeder dieser Punkte entspricht einem Radius auf dem Abrichter. Die Figur zeigt so, welcher Radius auf dem Abrichter welchen Wälzweg auf der Schnecke abrichtet. Der Abrichter wurde so ausgelegt, dass beim Abrichten mit nicht korrigierter Kinematik, der Punkt 42 am Kopfformkreis $w_{NaFS}$ und der Punkt 41 am Fußformkreis $w_{NfFS}$ liegt.
b) zeigt eine Profilballigkeit (Sollmodifikation) 40' auf einer Schnecke, welche mit dem Abrichter aus a), jedoch mit einer Abrichtkinematik gemäß der 3-Punkt-Methode abgerichtet wurde. Auch hier zeigen die Punkte die tatsächlich gefertigte Profilmodifikation $f_{nFS}$. Die Figur zeigt, dass bei Verwendung der 3-Punkt-Methode und fixieren des Punkts 42' am Kopfformkreis, der zu Punkt 41' passende Radius auf dem Abrichter nicht mehr den Fußformkreis abrichtet, sondern $w_{PS}$. Des Weiteren zeigt die Figur die geringe Abweichung der Punkte von der Sollmodifikation.

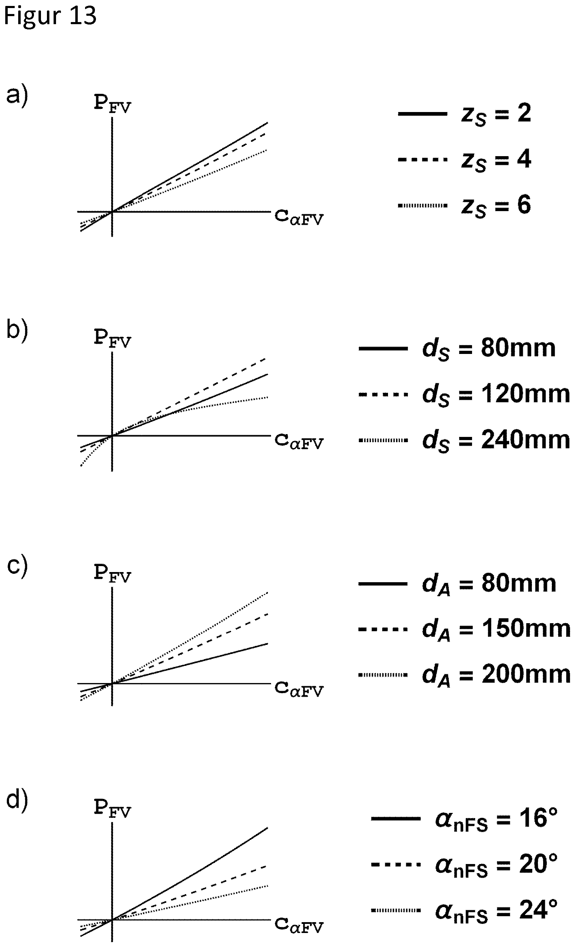

Figur 13    zeigt die Abhängigkeit der relativen Profilstreckung $P_{FV}$ von der mit der 3-Punkt-Methode erzeugten Balligkeit auf der Verzahnung $c_{\alpha FV}$ für

a) verschiedene Gangzahlen der Schnecke $z_S$,
b) verschiedene Durchmesser der Schnecke $d_S$,
c) verschiedene Durchmesser des Abrichters $d_A$ und
d) verschiedene Profilwinkel der Schnecke $\alpha_{nFS}$.

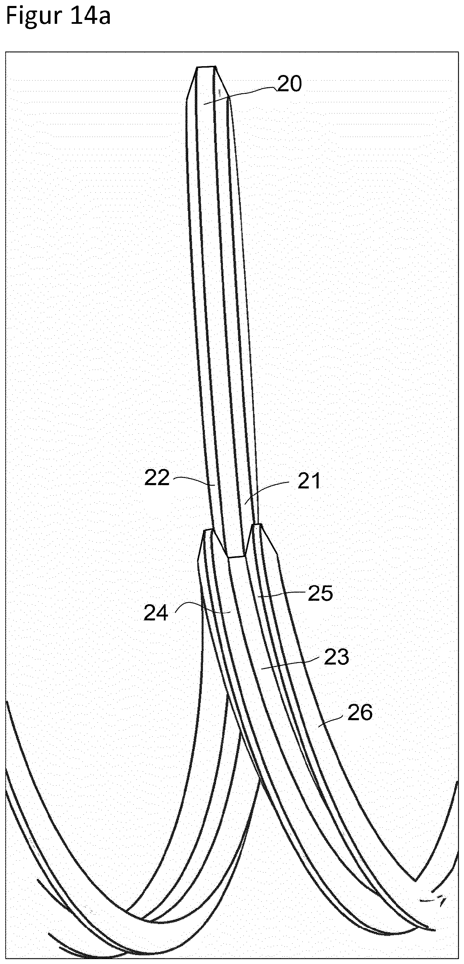

Figur 14a   zeigt zwei benachbarte Schneckengänge einer mehrgängigen Schnecke und einen Abrichter, mit einer relativen Lage, wie sie dem einflankigen Abrichten nach dem Stand der Technik entspricht. Die linke Flanke 24 des ersten Schneckengangs wird mit der linken Flanke 22 des Abrichters abgerichtet. Die äußere Mantelfläche 20 des Abrichters richtet den Zahngrund 23 zwischen den beiden Gängen zu einem großen Teil ab. Die rechte Flanke 25 des zweiten Schneckengangs und die rechte Flanke 21 des Abrichters berühren und durchdringen sich nicht.

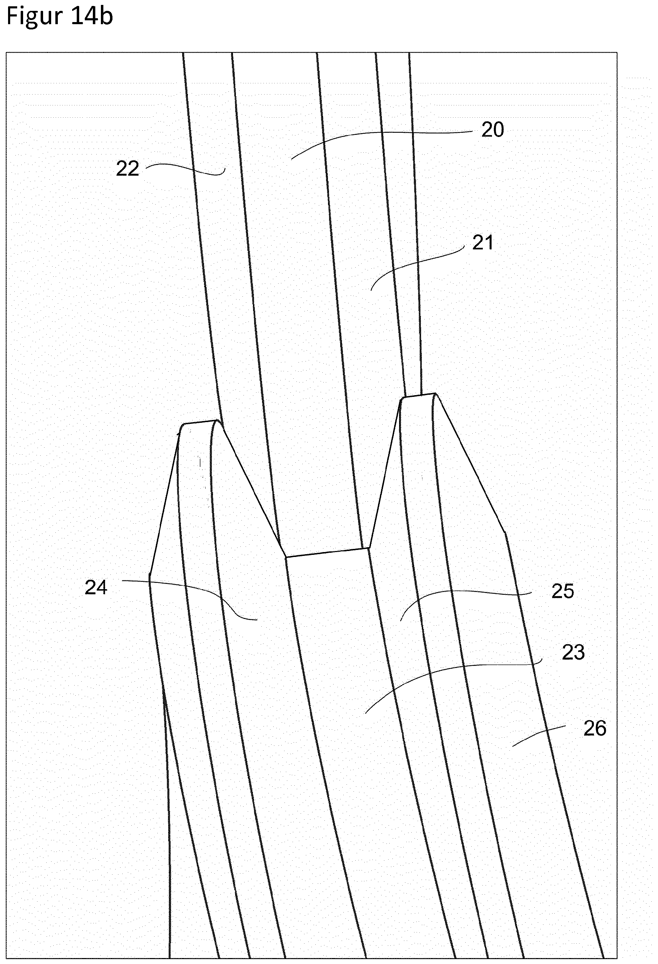

Figur 14b   zeigt einen vergrößerten Ausschnitt aus Figur 14a.

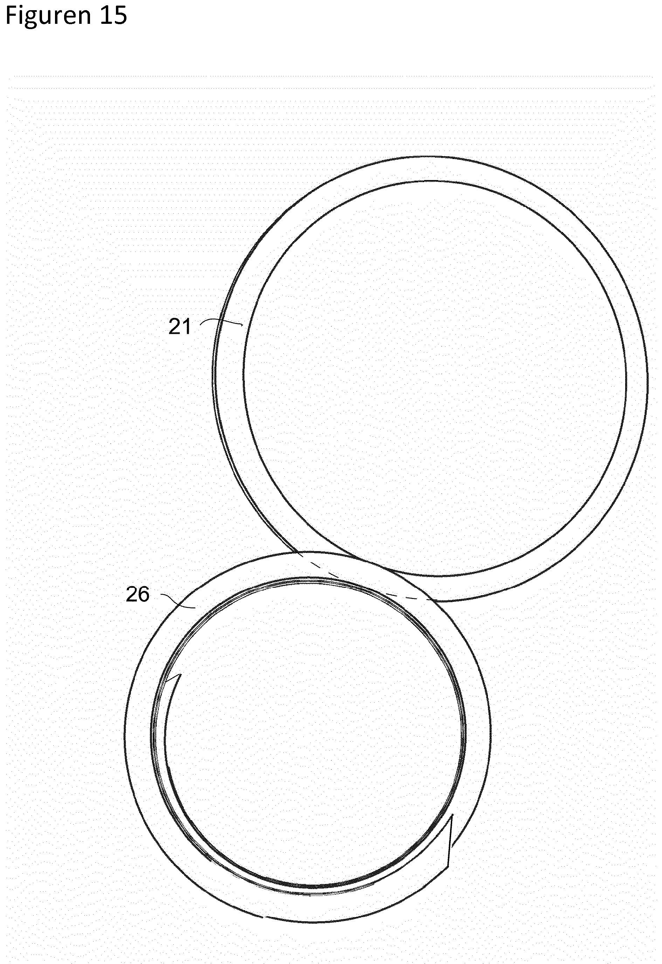

Figur 15    zeigt dieselbe Situation wie Figur 14a, jedoch aus einem anderen Blickwinkel.

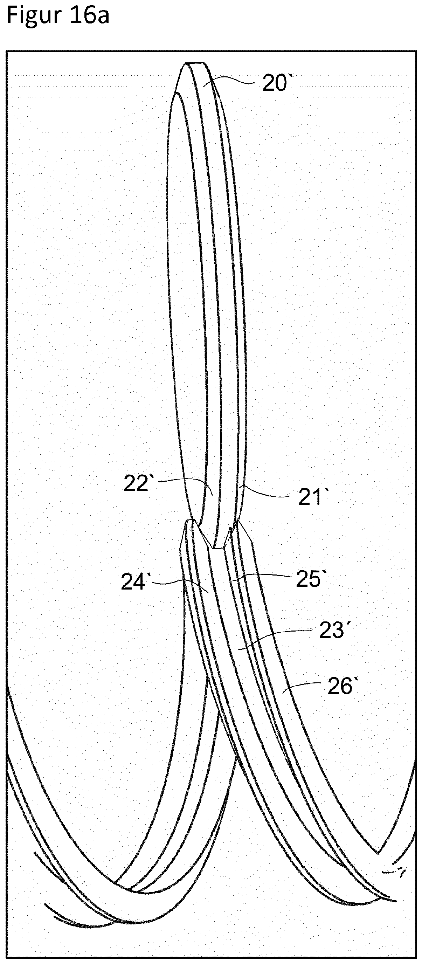

Figur 16a   zeigt dieselben zwei benachbarten Schneckengänge und denselben Abrichter aus Figur 14a. Die relative Lage entspricht der der 3-Punkt-Methode zur Erzeugung einer Profilballigkeit auf der Schnecke. Die linke Flanke 24' des ersten Schneckengangs wird mit der linken Flanke 22' des Abrichters abgerichtet. Die äußere Mantelfläche 20' des Abrichters durchdringt den Zahngrund 23' zwischen den beiden Gängen. Die rechte Flanke 21' des Abrichters durchdringt die rechte Flanke.

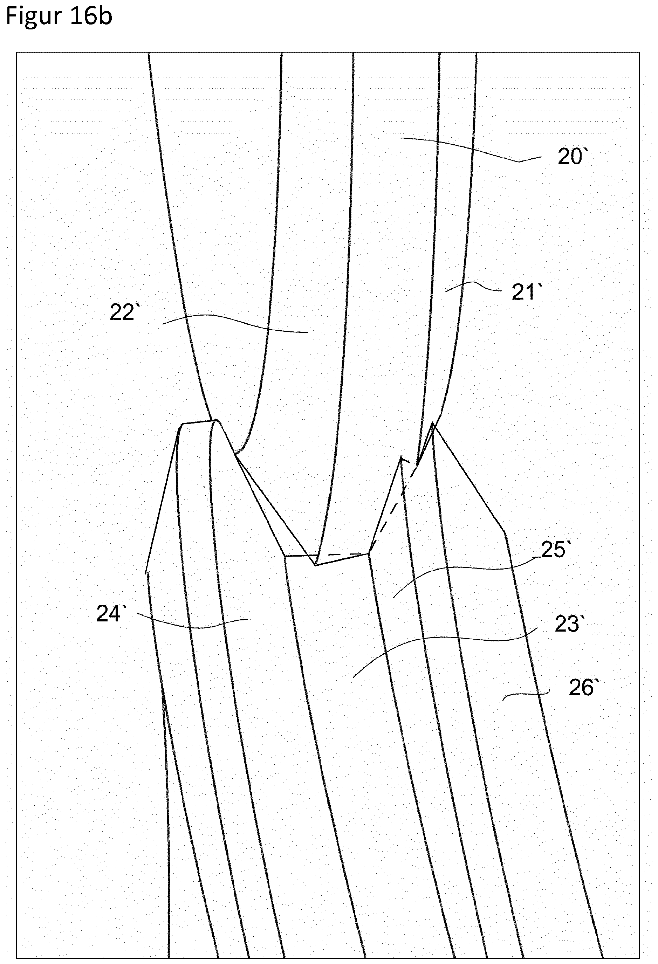

Figur 16b   zeigt einen vergrößerten Ausschnitt aus Figur 16a.

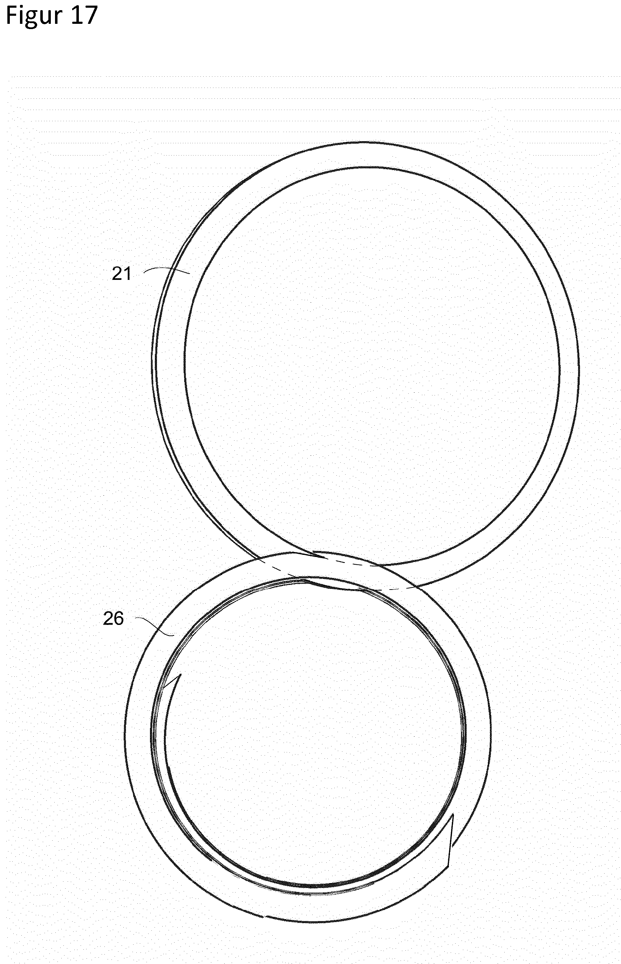

Figur 17    zeigt dieselbe Situation wie Figur 16a, jedoch aus einem anderen Blickwinkel. Aus diesem Blickwinkel ist das Eindringen der äußeren Mantelfläche 20' in die Schnecke unterhalb des Zahngrunds 23' zu erkennen.

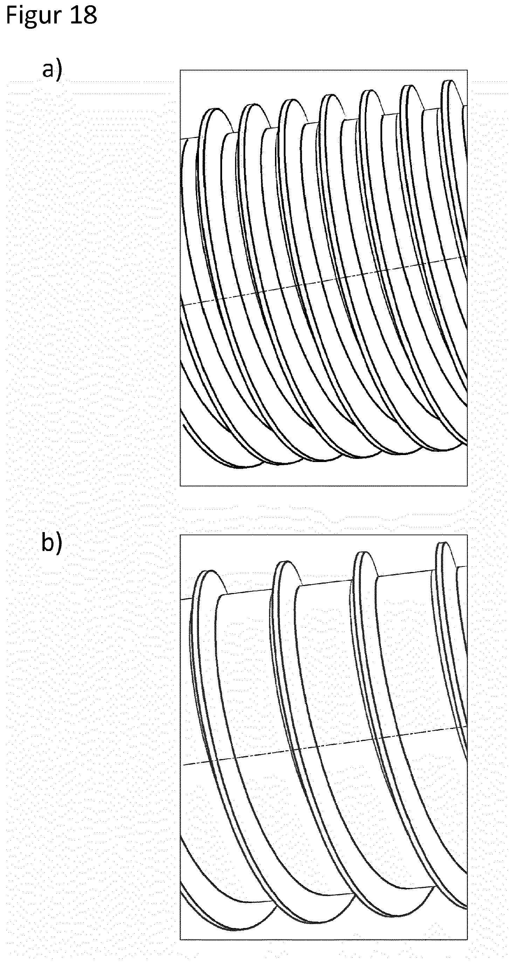

Figur 18a   zeigt beispielhaft eine zweigängige Schnecke, wie diese gemäß dem Stand der Technik eingesetzt wird.

Figur 18b   zeigt eine Schnecke, die analog zu der aus Figur 18a ausgelegt wurde, in der jedoch ein Gang ausgespart wurde.

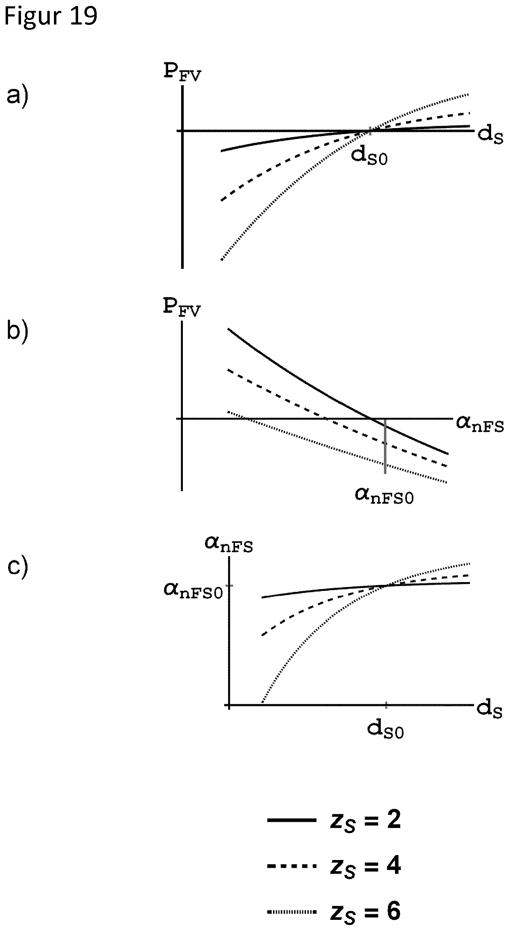

Figur 19    zeigt am Beispiel evolventischer Schnecken mit kleinen Durchmessern, welche mit der 3-Punkt-Methode mit einem Abrichter, welcher für den Durchmesser der Schnecke $d_{S0}$ und den Profilwinkel der Schnecke $\alpha_{nFS0}$ ausgelegt wurde, für verschiedene Gangzahlen $z_S$

a) den Verlauf der relativen Profilstreckung auf der Verzahnung $P_{FV}$ abhängig vom aktuellen Schneckendurchmesser $d_S$,
b) den Verlauf der relativen Profilstreckung auf der Verzahnung $P_{FV}$ abhängig vom Profilwinkel der Schnecke $\alpha_{nFS}$ für einen Schneckendurchmesser, welcher unterhalb $d_{S0}$ liegt,
c) den Verlauf des Profilwinkels der Schnecke $\alpha_{nFS}$, für den die relative Profilstreckung 0 ist.

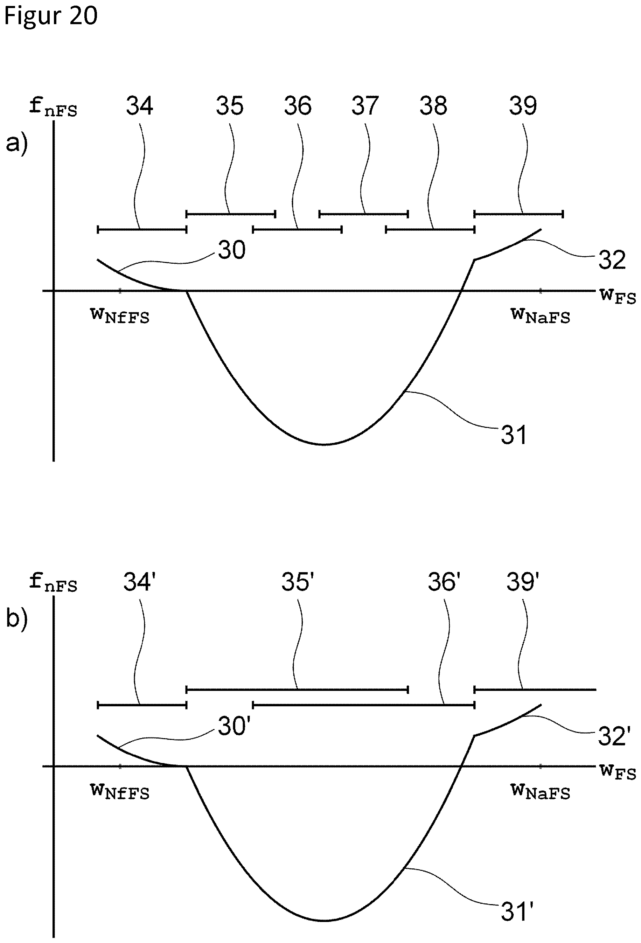

Figur 20a   zeigt eine Profilmodifikation $f_{nFS}$, welche durch mehrere Hübe unter Verwendung eines Abrichters mit einem kleinen aktiven Bereich auf der Schnecke aufgebracht wurde. Die Profilmodifikation hat einen Bereich 30, welcher eine Kopfrücknahme auf der Verzahnung erzeugt, einen Bereich 32, welcher eine Fußrücknahme auf der Verzahnung erzeugt und ein Hauptprofil 31. Alle diese Bereiche haben eine Winkelkorrektur und eine Balligkeit. 34, 35, 36, 37, 38, 39 kennzeichnen die Bereiche, welche während der einzelnen Hübe abgerichtet wurden.

Figur 20b     zeigt dieselbe Profilmodifikation $f_{nFS}$ wie Figur 20a, welche hier durch mehrere Hübe unter Verwendung eines Abrichters mit mehreren aktiven Bereichen auf der Schnecke aufgebracht wurde. Die Profilmodifikation hat einen Bereich 30', welcher eine Kopfrücknahme auf der Verzahnung erzeugt, einen Bereich 32', welcher eine Fußrücknahme auf der Verzahnung erzeugt und ein Hauptprofil 31'. Alle diese Bereiche haben eine Winkelkorrektur und eine Balligkeit. 34', 35', 36',39' kennzeichnen die Bereiche, welche während der einzelnen Hübe abgerichtet wurden.

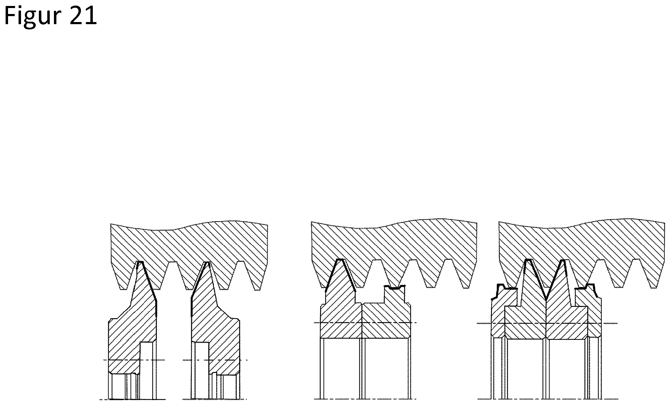

Figur 21     zeigt beispielhaft 3 mögliche Abrichtervarianten, welche beim Einsatz des hier beschriebenen Verfahrens eingesetzt werden können. Die Figur zeigt die Abrichter beim einflankigen Abrichten. Ein zweiflankiges Abrichten ist mit diesen bei Anwendung des hier beschriebenen Verfahrens ebenso möglich. Die Abrichter können optional als Kombiabrichter, welche neben der Flanke auch den Kopf der Schnecke abrichten können, ausgeführt sein.

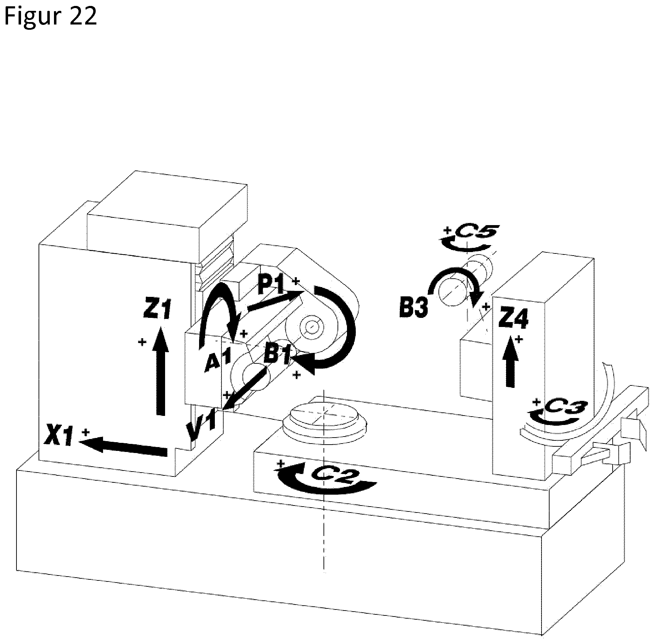

Figur 22     zeigt beispielhaft eine Verzahnmaschine auf der die Erfindung angewendet werden kann.

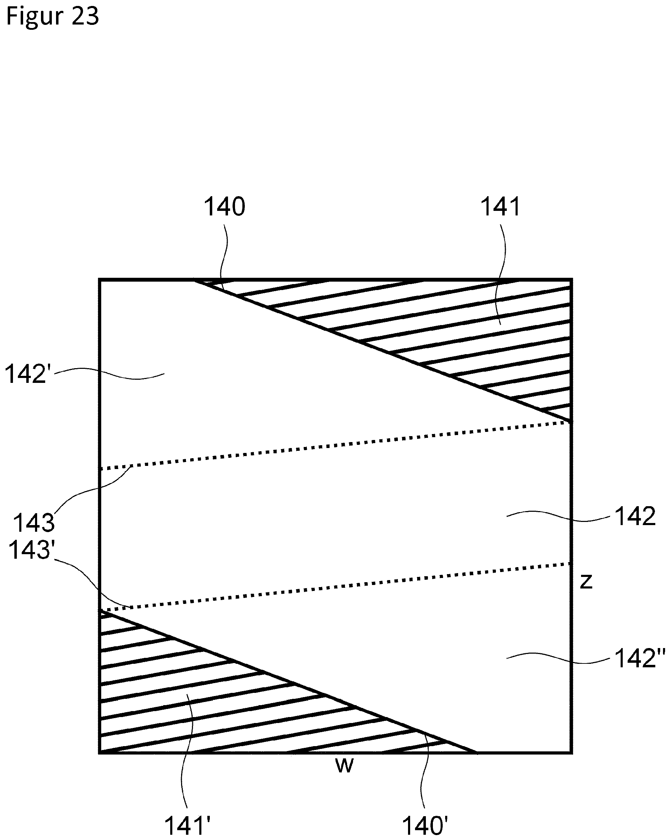

Figur 23     zeigt ein w-z-Diagramm einer Modifikation, bestehend aus gemäß Gleichung (25) modifizierten Bereichen 141 und 141', sowie aus nicht modifizierten Bereichen 142, 142' und 142". Die Geraden 140 und 140' verlaufen in der durch $\rho_{F2}$ gegebenen Richtung. Die Geraden 143 und 143' entsprechen dem Verlauf des Kontaktpunkts.

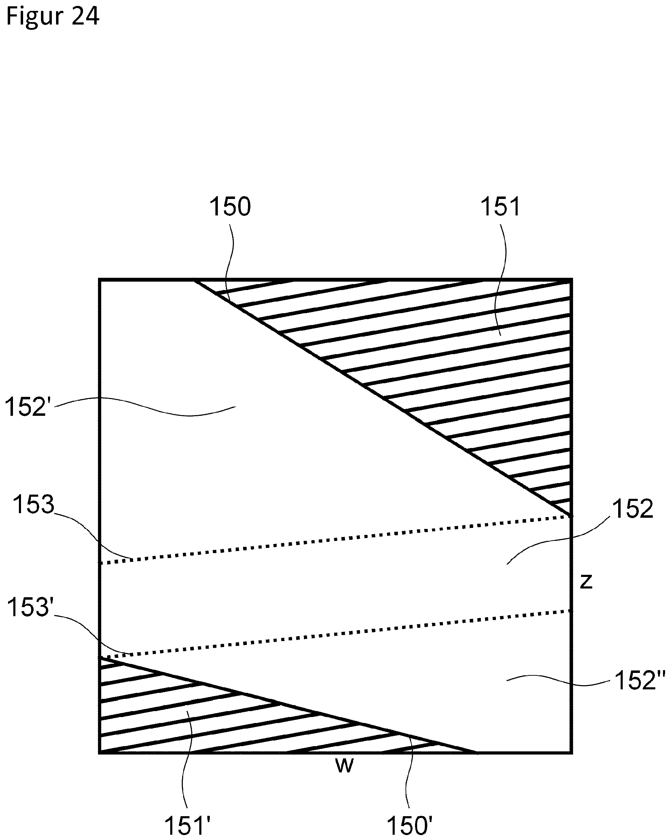

Figur 24     zeigt ein *w-z*-Diagramm einer Modifikation, bestehend aus gemäß Gleichung (25) modifizierten Bereichen 151 und 151', sowie aus nicht modifizierten Bereichen 152, 152' und 152". Die Bereiche 151 und 151' haben Modifikationen mit unterschiedlichen Richtungen $\rho_{F2}$. Die Geraden 150 und 150' verlaufen in der durch die jeweiligen $\rho_{F2}$ gegebene Richtung. Die Geraden 153 und 153' entsprechen dem Verlauf des Kontaktpunkts.

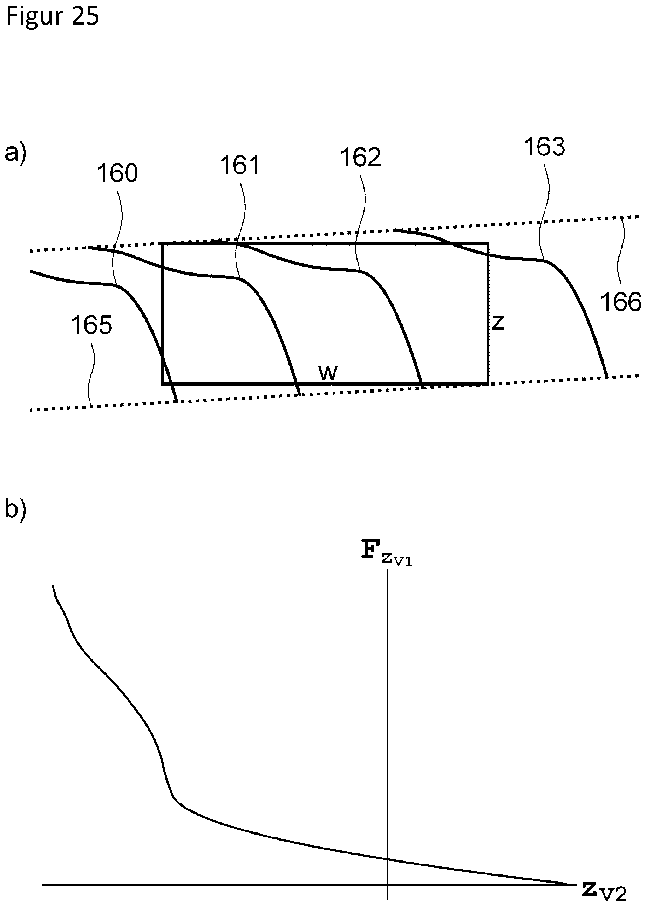

Figur 25     Figur 25a zeigt am Beispiel einer rechten Flanke eines rechtsschrägen zylindrischen Werkstücks vier Kurven 160-163, welche jeweils den Verlauf der Punkte im *w-z*-Diagramm auf dem Werkstück beschreiben, welche auf eine Gerade auf der Schnecke abgebildet werden. Die vier Kurven entsprechen vier verschiedenen Werten $X_{F1}$ und somit vier verschiedenen Geraden auf der Schnecke. Die Kurven sind gegeneinander entlang der parallelen Geraden 165 bzw. 166 verschoben.

Figur 25b zeigt, passend zu Figur 25a, die Funktion $F_{Z_{V1}}(z_{V2})$, welche die Abhängigkeit von $z_{V1}$ von $z_{V2}$ beschreibt.

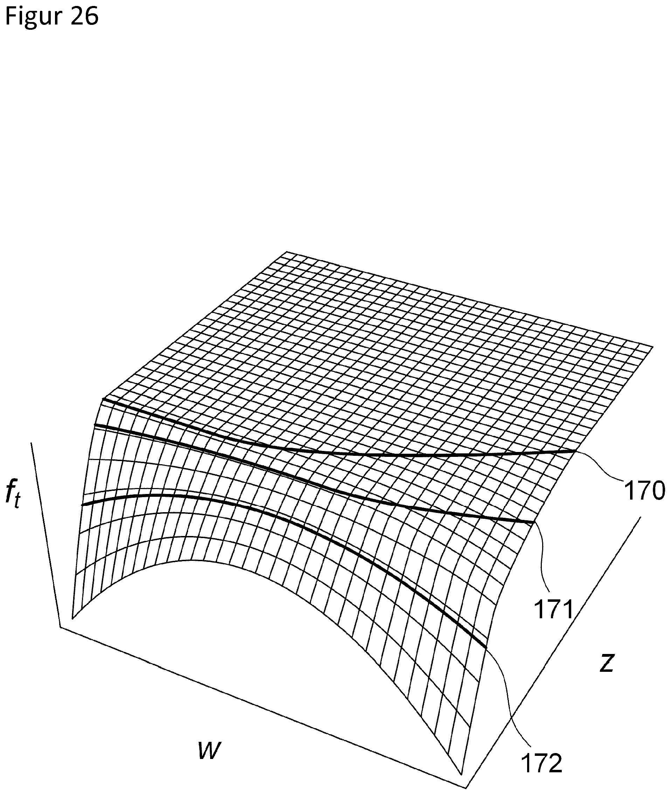

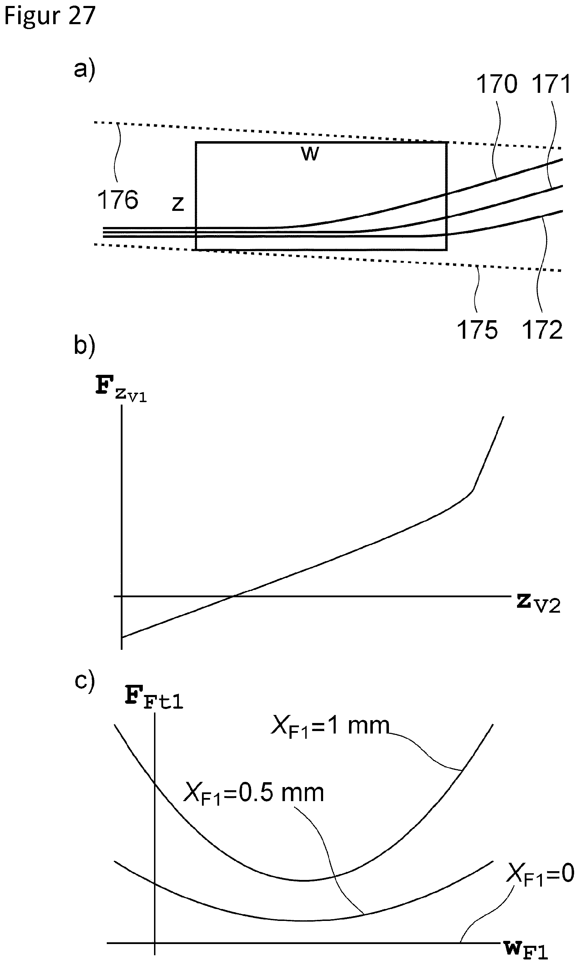

Figur 26     zeigt ein *w-z*-Diagramm einer rechten Flanke eines linkschrägen zylindrischen Werkstücks, auf welches eine Modifikation mittels variablen Diagonalverhältnisses aufgebracht wurde. Linie 170 markiert den Verlauf der Punkte, welche auf die durch $X_{F1}$ = 0 definierte Gerade auf der Schnecke abgebildet werden. Line 171 markiert den Verlauf der Punkte, welche auf die durch $X_{F1}$ = 0.5 *mm* definierten Gerade auf der Schnecke abgebildet werden. Line 172 markiert den Verlauf der Punkte, welche auf die durch $X_{F1}$ = 1.0 *mm* definierten Gerade auf der Schnecke abgebildet werden. Die Modifikationen entlang der jeweiligen Verläufe sind in Figur 27c dargestellt.

Figur 27     Figur 27a zeigt, in einem Schema wie in Figur 25, die Verläufe 170-172 der Punkte auf dem Werkstück, welche in dem Beispiel aus Figur 26 auf die durch $X_{F1}$ = 0, $X_{F1}$ = 0.5 *mm* bzw. $X_{F1}$ = 1.0 *mm* definierten Geraden auf der Schnecke abgebildet werden. Die Geraden 175 bzw. 176 definieren die Richtung, entlang der die Verläufe für verschiedene $X_{F1}$ gegeneinander verschoben werden.

Figur 27b zeigt die im Beispiel in Figur 26 verwendete Funktion $F_{Z_{V1}}(z_{V2})$, welche die Abhängigkeit von $z_{V1}$ von $z_{V2}$ beschreibt.

Figur 27c zeigt die Modifikationen entlang der 3 Verläufe aus dem Beispiel in Figur 26.

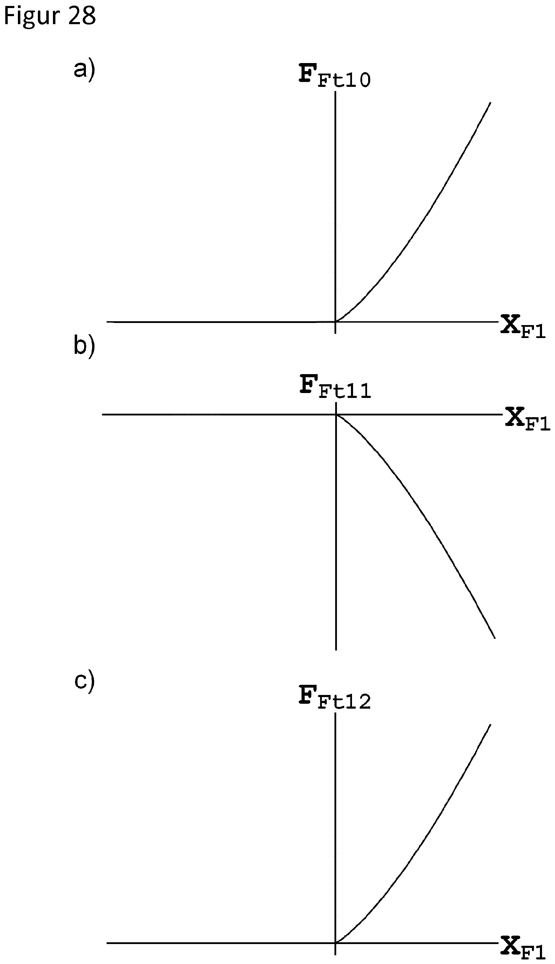

Figur 28     zeigt die im Beispiel in Figur 26 verwendeten Funktionen $F_{Ff10}(X_{F1})$, $F_{Ft11}(X_{F1})$ und $F_{Ft12}(X_{F1})$, welche die Modifikation auf der Schnecke gemäß Gleichung (25) definieren.

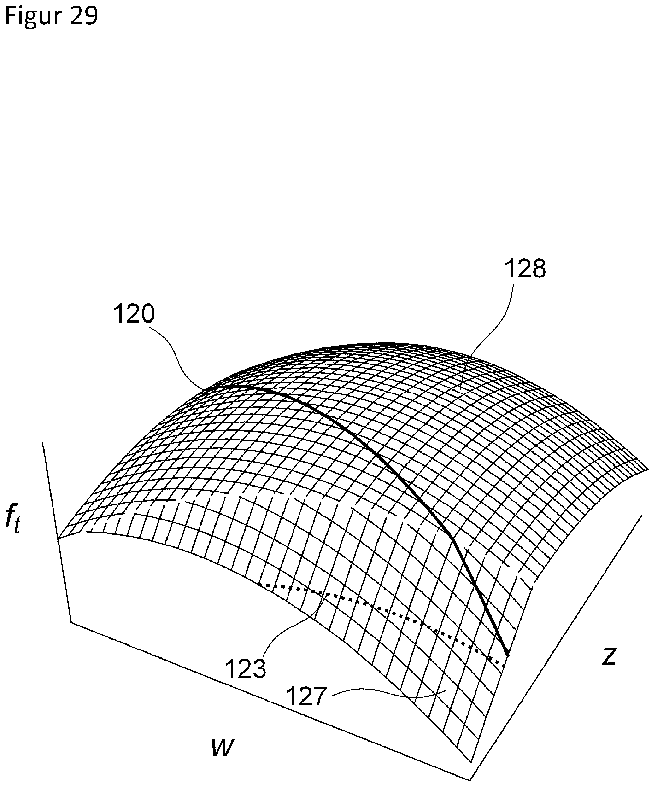

Figur 29     zeigt in einem *w-z*-Diagramm die additive Überlagerung einer Profil- und einer Flankenlinienballigkeit und einer linearen dreiecksförmigen Endrücknahme ohne Übergangsbereich, wie diese mit dem hier beschriebenen Verfahren gefertigt werden kann. Line 120 markiert einen Kontaktpfad. Line 121 markiert eine Gerade auf dem Werkstück, welche auf eine Gerade auf der Schnecke abgebildet wird. Im Bereich 128 sind nur die beiden Balligkeiten überlagert, im Bereich 127 zusätzlich die dreiecksförmige Endrücknahme.

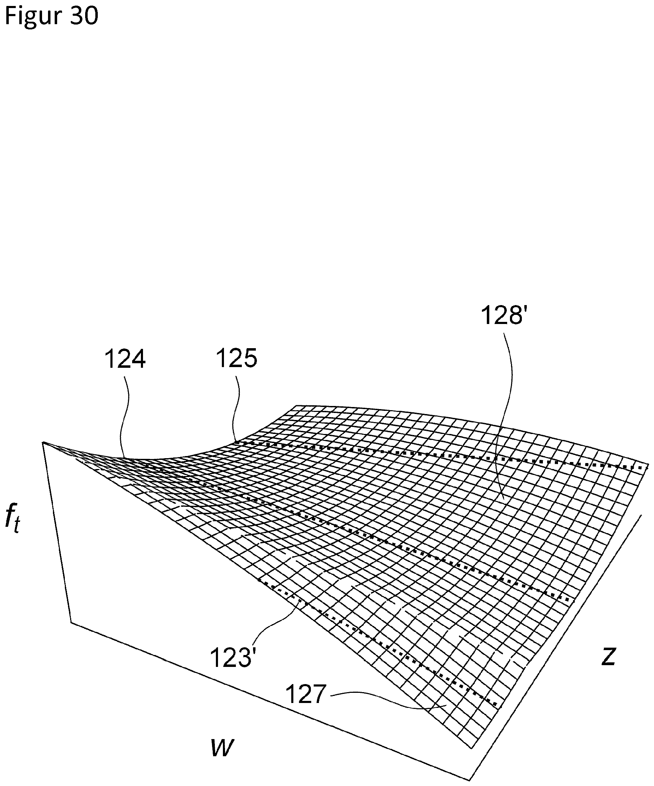

Figur 30     zeigt in einem *w-z*-Diagramm den Anteil der Modifikation aus Figur 29, der über die Modifikation auf der Schnecke durch das Diagonalschleifen auf das Werkstück übertragen wird. Bereich 28' markiert den Bereich, der zur Erzeugung der Balligkeiten beiträgt, 127 den Bereich, welcher zusätzlich zur Erzeugung der dreiecksförmigen Endrücknahme beiträgt. 123', 124 und 125 markieren Geraden in *w* und *z*, welche auf Geraden in *w* und *z* auf der Schnecke abgebildet werden. Die Modifikationen entlang der jeweiligen Geraden sind linear in *w*.

| | |
|---|---|
| Figur 31 | zeigt in einem *w-z*-Diagramm den Anteil ($F_{KFf}$) der Modifikation aus Figur 29 der über die Schleifkinematik erzeugt wird. Der Bereich 128", welcher der einzige Bereich ist, trägt nur zur Erzeugung der Balligkeiten bei. Die Linien 120", 121 und 122 markierenden Kontakpfad für verschiedene Vorschubpositionen. Entlang dieser Linien ist die Modifikation jeweils konstant. |
| Figur 32 | zeigt in einem *w-z*-Diagramm die obere und untere einhüllende Fläche der Welligkeit aus Figur 33. |
| Figur 33 | zeigt in zwei *w-z*-Diagramm aus verschiedenen Blickrichtungen eine Welligkeit, deren Amplitude zum Rand der Flanke hin zunimmt. |
| Figur 34 | zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983) |
| Figur 35 | zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig) |
| Figur 36a | zeigt beispielhaft eine zylindrische Schnecke. |
| Figur 36b | zeigt beispielhaft eine konische Schnecke. |
| Figur 37 | zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht. |
| Figur 38 | zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 104 entspricht der im Allgemeinen gekrümmten Flanke des nicht modifizierten Werkstücks, auf die die Vektoren gestellt werden. Die Vektoren 101 und 101' wurden bereits vom Kontaktpfad überstrichen und sind somit vollständig gekürzt. Die Vektoren 102 und 102' wurden bereits mindestens einmal gekürzt, jedoch noch nicht vom Kontaktpfad überstrichen. Die Vektoren 103 und 103' wurden noch nicht gekürzt und haben somit noch die Länge dem gewählten Aufmaß entsprechend. |

## 1. Beschreibung Abrichten der Schnecke

Der erste Teil der Erfindung betrifft ein Verfahren zum Abrichten von Werkzeugen zur Verzahnbearbeitung, und wird im Folgenden anhand von Schnecken zum Wälzschleifen näher beschrieben Die Schnecken können symmetrisch oder asymmetrisch sein und sie können zylindrisch oder konisch sein. Sie können alle Profile aufweisen, die zum Wälzschleifen wälzbarer Verzahnungen geeignet sind, insbesondere können die Schnecken evolventische Profile haben.

Zum Abrichten von Schnecken sind im Wesentlichen zwei Verfahren bekannt. Zum einen das Abrichten mit einer Profilrolle, die das Abrichten des ganzen Profils, von Kopf bis Fuß in einem Hub erlaubt. Dieses Verfahren führt, insbesondere dann, wenn es zweiflankig eingesetzt wird, zu kurzen Abrichtzeiten. Ein Nachteil dieses Verfahrens ist jedoch, dass bei einem gegebenen Abrichter die Profilform nur noch eingeschränkt während des Abrichtprozesses beeinflusst werden kann. So können gemäß dem Stand der Technik nur die Profilwinkel über die Abrichtkinematik beeinflusst werden. Insbesondere ist eine Beeinflussung der Profilballigkeit (Höhenballigkeit) über die Abrichtkinematik bisher nicht möglich.

Eine weitere Methode zum Abrichten ist das Zeilenabrichten. Im Gegensatz zum Abrichten mit einer Profilrolle wird hier pro Hub nur ein kleiner Teil des Profils abgerichtet, was eine Vielzahl von Hüben erfordert, um das Profil von Kopf bis Fuß abzurichten, wodurch dieses Verfahren sehr unwirtschaftlich wird. Es bietet jedoch die Möglichkeit, über die Kinematik beim Abrichten die Profilform in gewissen Grenzen frei vorzugeben. Wird ein Abrichter mit einem kreis- oder ellipsenförmigen Profil verwendet, kann das Profil sehr flexibel gestaltet werden, aufgrund der kleinen Kontaktfläche sind jedoch sehr viele Hübe nötig und das Profil weist eine hohe Rauhigkeit auf. Werden Abrichter mit kurzer, gerader Profilform genutzt, so lässt sich die Zahl der Hübe zwar reduzieren, Profilmodifikationen wie beispielsweise Profilballigkeiten lassen sich jedoch nur grob annähern, wodurch Formabweichungen entstehen.

Um die Zusammenhänge mathematisch zu formulieren werden folgende Definitionen gemacht: Größen zur Beschreibung eines Abrichters werden mit dem Index *A*, Größen zur Beschreibung einer Schnecke mit dem Index *S* und Größen zur Beschreibung einer Verzahnung mit dem Index *V* versehen. In den Bespielen, in denen evolventische Schnecken und Verzahnungen betrachtet werden, werden die aus der DIN3960 bekannten Größen Grundkreisradius $r_b$, Grundmodul $m_b$, Grundschrägungswinkel $\beta_b$ verwendet. Da die hier beschriebenen Zusammenhänge allgemein für asymmetrische Verzahnungen gelten, werden Größen, die auf linker und rechter Flanke unterschiedlich sein können, mit dem Index $F$ versehen. Profilballigkeiten können sowohl negativ als auch positiv sein.

Für Transformationen werden folgende Bezeichnungen verwendet:

- $R_x(\varphi)$ Rotation um den Winkel $\varphi$ um die $x$-Achse. Analog für $y$ und $z$
- $T_x(v)$ Translation um die Strecke $v$ in $x$-Richtung. Analog für $y$ und $z$
- $H(A_1,...,A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse der Schnecke bzw. des Abrichters fällt in den jeweiligen Ruhesystemen immer mit der $z$-Achse zusammen.

Weiterhin wichtig für die Formulierung der Zusammenhänge ist es, die kinematische Kette, welche die Relativstellungen zwischen Schnecke und Abrichter beschreibt, zu definieren.

Die relative Lage zwischen Schnecke und Abrichter wird durch die folgende kinematische Kette $K_R$ beschrieben:

$$K_R = R_z(-\varphi_S) \cdot T_z(-v_{zS}) \cdot R_x(-\gamma) \cdot T_x(-d) \cdot T_y(v_{yA}) \cdot R_z(\varphi_A) \tag{1}$$

- $\varphi_S$: Drehwinkel Schnecke
- $\varphi_A$: Drehwinkel Abrichter
- $v_{yA}$: $y$-Position des Abrichters
- $v_{zS}$: Axiale Position der Schnecke
- $d$: Achsabstand
- $\gamma$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1, ..., B_{N_s}) \text{ mit } N_s \geq 1 \tag{2}$$

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1,...,B_{N_s}$ existieren, mit

$$H(B_1, ..., B_{N_s}) = K_R \tag{3}$$

Die Berechnung der Koordinaten $B_1,...,B_{N_s}$ kann mittels einer Koordinatentransformation durchgeführt werden.

Typische Bewegungsapparate, die alle geforderten Relativstellungen ermöglichen, sind beispielsweise durch folgende kinematischen Ketten beschrieben:

$$H_{Bsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \tag{4}$$

$$H_{Bsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \tag{5}$$

Eine Verzahnmaschine, welche einen Bewegungsapparat wie in diesen beiden Beispielen aufweist, ist in Figur 22 gezeigt. Der Index B1, V1, A1, X1, Z1, C5, B3 in Formeln (4) und (5) bezieht sich jeweils auf die dort dargestellten Maschinenachsen.

Figur 22 zeigt eine perspektivische Ansicht einer Verzahnmaschine mit einer Abrichtmaschine, welche zur Durchführung der erfindungsgemäßen Verfahren einsetzbar ist. Die Verzahnmaschine weist einen links dargestellten Bearbeitungskopf mit einer Werkzeugaufnahme, eine mittig dargestellte Werkstückaufnahme und eine rechts schematisch dargestellte Abrichteraufnahme auf. Zur Durchführung einer Verzahnbearbeitung kann ein in der Werkstückaufnahme eingespanntes Werkstück durch ein in der Werkzeugaufnahme eingespanntes Werkzeug bearbeitet werden. Zur Durchführung eines Abrichtverfahrens kann das in der Werkzeugaufnahme eingespannte Werkzeug durch einen in der Abrichteraufnahme eingespannten Abrichter bearbeitet werden. Dies hat den Vorteil, dass das Werkzeug zum Abrichten in der Werkzeugaufnahme verbleiben kann. Weiterhin können die Bewegungsachsen des Bearbeitungskopfes zur Einstellung der Relativposition von Werkzeug und Abrichter beim Abrichter eingesetzt werden.

Die Verzahnmaschine weist dabei die Bewegungsachsen A1, B1, V1, X1, Z1 zum Bewegen der Werkzeugaufnahme, C2 zum Bewegen der Werkstückaufnahme und B3, C5 zum Bewegen des Abrichters auf.

Im Einzelnen ermöglicht B1 eine Rotation des Werkzeugs um seine Drehachse, X1 eine translatorische Bewegung des Werkzeugs senkrecht zur Drehachse des Werkzeugs bzw. Werkstücks, Z1 eine translatorische Bewegung des Werkzeugs in vertikaler Richtung bzw. parallel zur Drehachse des Werkstücks, A1 eine Schwenkbewegung des Werkzeugs, V1 eine Tangentialbewegung bzw. Shiftbewegung des Werkzeugs in Richtung seiner Drehachse, C2 eine Drehbewegung des Werkstücks, B3 eine Rotationsbewegung des Abrichtwerkzeugs um seine Drehachse, sowie C5 eine Schwenkbewegung des Abrichtwerkzeugs zur Änderung des Eingriffswinkels $\alpha$ am Werkzeug.

Es können jedoch auch andere Verzahn- und/oder Abrichtmaschinen zur Durchführung der erfindungsgemäßen Verfahren eingesetzt werden.

Die Idee der Erfindung liegt darin, während des Abrichtprozesses die 5 Freiheitsgrade $\varphi_S$, $v_{zS}$, $\gamma$, $d$ und $v_{yA}$ aus Gleichung (28) zu betrachten, um die Profilform der Schnecke zu beeinflussen. Aufgrund der Rotationssymmetrie des Abrichters, spielt der Freiheitsgrad $\varphi_A$ bei der hier vorgenommenen Betrachtung keine Rolle.

Bei den bisher bekannten Verfahren werden nur bis zu 4 der vorhandenen Freiheitsgrade während des Abrichtens genutzt. So ist aus der EP1995010A1 ein Verfahren bekannt, bei dem durch Änderung des Achsabstands d eine Schnecke über ihre Breite ballig abgerichtet wird (Flankenlinienballigkeit). Aus der DE 19706867A1 ist ein Verfahren bekannt, bei dem mit einer kinematischen Kette ähnlich dem Beispiel aus Gleichung (4) mit $\varphi_{A1} = 0$ durch stetige Änderung von $\varphi_{C5}$, $v_{V1}$ und $v_{X1}$ eine Schnecke mit über die Breite verändertem Profilwinkel hergestellt werden kann. Gleiches wird in DE102006061759A1 mit einer kinematischen Kette wie in Gleichung (5) mit $\varphi_{B1}$, $v_{V1}$, $\varphi_{A1}$, $v_{X1}$ und $v_{Z1}$ beschrieben. Auch wenn hier 5 Achsen bewegt bzw. korrigiert werden, so sind es nur die 3 Freiheitsgrade $\varphi_{C5}$, $v_{V1}$ und $v_{X1}$ aus Gleichung (4), die variiert werden. Die Positionen der 5 bewegten Achsen folgen bei gegebenen $\varphi_{C5}$, $v_{V1}$ und $v_{X1}$ aus einer Koordinatentransformation. Aufgrund der Ähnlichkeit zu dem Verfahren aus der DE19706867A1, lässt sich mit der DE102006061759A1 ebenfalls nur der Profilwinkel über die Schneckenbreite modifizieren.

In der DE102005030846A1 wird bereits, analog zur DE102006061759A1, aufgezeigt, wie mit den Achsen $\varphi_{B1}$, $v_{V1}$, $\varphi_{A1}$, $v_{X1}$ und $v_{Z1}$ aus Gleichung (5) der Profilwinkel einer Schnecke über die ganze Breite konstant modifiziert werden kann. Auch hier werden wieder nur 3 Freiheitsgrade variiert und die Positionen der bewegten Achsen ergeben sich aus einer Koordinatentransformation.

Beim Abrichten einer Schnecke wird typischerweise deren axiale Position $v_{zS}$ über die Steigungshöhe an den Drehwinkel der Schnecke $\varphi_S$ gekoppelt. Dadurch überstreicht die Berührlinie zwischen Schnecke und Abrichter den abzurichtenden Teil der Schnecke. Wird eine Schnecke über ihre Breite nicht modifiziert abgerichtet, werden die übrigen Koordinaten $d$, $v_{yA}$ und $\gamma$ auf feste Werte eingestellt und während des Abrichtens nicht verfahren. Typischerweise werden diese Koordinaten auf jene Werte eingestellt, die bei der Auslegung des Abrichters angenommen wurden. Wählt man Werte für diese Koordinaten, welche nicht denen der Abrichterauslegung entsprechen, so ist es möglich, die Schnecke modifiziert abzurichten. Die erzielbaren Formen der Modifikationen hängen von der Anzahl der genutzten Freiheitsgrade ab. Modifikationen auf den Flanken des Schneckengangs, definiert in Normalenrichtung auf der Flanke, werden hier mit

$$f_{nFS}(w_{FS}, b_{FS}) \qquad (6)$$

bezeichnet, wobei $b_{FS}$ die Position in Breitenlinienrichtung ist. $w_{FS}$ ist bei evolventischen Profilen der Wälzweg (auch als Wälzlänge bezeichnet), bei nicht evolventischen Profilen ein Parameter zur Parametrisierung des Profils. Im Folgenden wird jedoch auch für nicht evolventische Verzahnungen der Begriff Wälzweg verwendet.

Da die axiale Position $v_{zS}$ der Schnecke nur dafür verantwortlich ist, die Berührlinie über die Schneckenbreite zu verschieben, kann diese Koordinate für eine Beeinflussung der Modifikation entlang der Berührlinie nicht genutzt werden. Somit stehen zur Erzeugung von Modifikationen die folgenden 4 Freiheitsgrade zur Verfügung: $\varphi_S$, $\gamma$, $d$ und $v_{yA}$. Betrachtet werden hier jedoch nur die Korrekturen dieser Freiheitsgrade gegenüber den Werten beim Abrichten von nicht über die Kinematik modifizierten Schnecken. Diese Korrekturen werden wie folgt bezeichnet:

$$\Delta\varphi_S, \Delta\gamma, \Delta d, \Delta v_{yA} \qquad (7)$$

und in der Größe $\Delta K := (\Delta\varphi_S, \Delta\gamma, \Delta d, \Delta v_{yA})$ zusammengefasst.

Ist der Einfluss dieser 4 Koordinatenkorrekturen auf die erzeugte Profilmodifikation der Schnecke unterschiedlich, das heißt, führt eine Änderung einer dieser Koordinaten zu jeweils unterschiedlichen Profilmodifikationen, so kann dies genutzt werden, um 4 Punkte der Modifikation in gewissen Grenzen frei vorzugeben. Entscheidend für die Anwendbarkeit des hier vorgeschlagenen Verfahrens ist, in welchem Bereich die Modifikationen vorgegeben werden können und welche Forme diese Modifikation über das gesamte Profil hat. Dies wird im weiteren Verlauf detailliert diskutiert.

Wird eine Verzahnung mit einer Profilmodifikation, das heißt einer Modifikation, die nur vom Wälzweg $w_{FV}$ und nicht von $b_{FV}$ abhängt, wälzgeschliffen, so muss dazu eine entsprechende Profilmodifikation in die Schnecke eingebracht werden. Dazu wird jedem Radius innerhalb des zu schleifenden Bereichs auf der Verzahnung $r_V$ ein Radius auf der Schnecke $r_S$ zugeordnet. Diese Zuordnung muss für jeden Schneckendurchmesser prinzipiell neu durchgeführt werden. Um eine, auf diese Weise modifizierte Schnecke, mit einer solchen Modifikation mit Hilfe einer Profilrolle abrichten zu können, muss jedem Radius auf der Schnecke $r_S$ ein Radius auf dem Abrichter $r_A$ zugeordnet werden und an diesen zugeordneten Radien eine entsprechende Modifikation auf dem Abrichter eingebracht werden. Wird mit einer nicht korrigierten Kinematik abgerichtet, so kann der Abrichter, abhängig von der Abrichter- und Schneckengeometrie, über einen großen Bereich von Schneckendurchmessern genutzt werden und die so hergestellten Schnecken erzeugen die richtige Profilmodifikation auf der geschliffenen Verzahnung. Wird beim Abrichten jedoch die oben erwähnte Abrichtkinematik genutzt, um die Modifikation auf der Schnecke an 4 Punkten in gewissen Grenzen frei vorzugeben, so führt dies im Allgemeinen dazu, dass die richtige Zuordnung zwischen Radien auf der Schnecke und Radien auf dem Abrichter nicht mehr gewährleistet ist. Tritt dies ein, führt dies zu einer Verschiebung der Profilmodifikation auf der Schnecke zu einem kleineren oder größeren Radius hin. Diese falsche Platzierung der Profilmodifikation auf der Schnecke führt dann zu einer falschen Platzierung der Profilmodifikation auf der Verzahnung. Dient die in den Abrichter eingebrachte Modifikation beispielsweise rein zur Erzeugung einer Profilballigkeit, so fällt diese falsche Zuordnung nicht weiter ins Gewicht, solange sie nicht zu stark ausfällt und kann durch eine korrigierte Abrichtkinematik kompensiert werden. Fällt die falsche Zuordnung jedoch so stark aus, dass der Außenradius des Abrichters nicht mehr den kleinsten abzurichtenden Radius auf der Schnecke erreicht oder der Abrichter so weit in die Schnecke eintaucht, dass es zu einem Kontakt mit der Gegenflanke kommt, so ist in diesen Fällen die falsche Zuordnung auch schädlich.

Enthält die Profilmodifikation hingegen markante Punkte, wie beispielsweise einen Knick am Beginn einer Kopfrücknahme, so würde die falsche Zuordnung zu einer falschen Positionierung dieses Knickes auf der Verzahnung führen.

Um dieses Problem zu lösen, kann die Abrichtkinematik so gewählt werden, dass der Abrichter an einem vorgegebenen Radius die Schnecke an einem vorgegebenen Radius berührt. Wählt man in dem gerade aufgeführten Beispiel der Kopfrücknahme am Abrichter den Radius, an dem der Knick platziert ist und an der Schnecke den Radius, der den Radius auf der Verzahnung fertigt, an dem der Knick dort platziert sein soll, so kann dieses Problem umgangen werden. Dies führt jedoch dazu, dass man die Profilmodifikation auf dem Profil nur noch an 3 anstatt an 4 Stellen vorgeben kann. Diese Vorgabe an nur 3 Stellen ist jedoch ausreichend, um beispielsweise Profilballigkeiten auf einer evolventischen Schnecke aufzubringen, welche dann wiederum zu Profilballigkeiten auf einer geschliffenen evolventischen Verzahnung führen.

Um die folgenden Berechnungen durchführen zu können, ist es notwendig, bestimmen zu können, welches Profil, insbesondere welche Profilmodifikation bei einem gegebenen Abrichter und gegebenen Achskorrekturen $\Delta K$ auf den Flanken der Schnecke erzeugt wird. Hier wird zunächst der Fall betrachtet, bei dem Achskorrekturen während des Abrichtprozesses fest eingestellt werden und nur $v_{zS}$ und $\varphi_S$ gemäß der Steigungshöhe der Schnecke gekoppelt gefahren werden. Die Modifikation, definiert als Abweichung in Normalenrichtung zur Zahnflanke, abhängig von den Achskorrekturen, wir hier mit $f_{nFS}(w_{FS}; \Delta K)$ bezeichnet. Die Berechnung von $f_{nFS}(w_{FS}; \Delta K)$ kann beispielsweise mit Hilfe einer Abrichtsimulation durchgeführt werden. Eingaben in solche Abrichtsimulationen sind neben der Abrichtergeometrie und der Abrichtkinematik in der Regel auch die Geometrie der Schnecke vor dem Abrichten. Die Schnecke vor dem Abrichten wird bei der folgenden Betrachtung so gewählt, dass sie gegenüber der Schnecke nach dem Abrichten überall auf dem Gang ein positives Aufmaß besitzt. Bei solchen Abrichtsimulationen wird typischerweise der Abrichtprozess in endlich viele Zeitschritte unterteilt und dann für jeden Zeitpunkt ermittelt, wo durch den Abrichter Material an der Schnecke abgetragen wird.

Ein möglicher Algorithmus, der in der Lage ist, alle später nötigen Informationen zu liefern, wird hier detailliert vorgestellt. Hierzu wird zunächst eine, in der Regel nicht modifizierte Schnecke betrachtet. Auf einzelnen Punkten mit den Koordinaten $(w_{FS}, b_{FS})$ auf den Gänge dieser Schnecke werden Vektoren in Normalenrichtung mit einer zuvor festgelegten Länge platziert. Die Länge der Vektoren entspricht dem Aufmaß der Schnecke vor dem Abrichten, bezogen auf die nicht modifizierte Schnecke. Das Aufmaß wird typischerweise so groß gewählt, dass jeder Vektor während der nachfolgend beschriebenen Simulation mindestens einmal gekürzt wird. Die Anzahl der Punkte auf den Gängen bestimmt die Genauigkeit des Ergebnisses. Bevorzugt werden diese Punkte äquidistant gewählt. Die relative Lage der Schnecke zum Abrichter wird zu jedem Zeitpunkt vorgegeben, beispielsweise durch die Koordinaten der nicht korrigierten Kinematik $\varphi_S, \gamma, d, v_{yA}$ und deren Korrekturen $\Delta K$. Zu jedem der diskreten Zeitpunkte wird der Schnitt aller Vektoren mit dem Abrichter berechnet. Schneidet ein Vektor den Abrichter nicht, bleibt dieser unverändert. Schneidet er jedoch den Abrichter, so wird der Schnittpunkt berechnet und der Vektor soweit gekürzt, dass er gerade an dem Schnittpunkt endet. Weiterhin wird der Abstand des Schnittpunkts von der Abrichterachse, das heißt, der Radius auf dem Abrichter $r_A$ des Schnittpunkts berechnet und als zusätzliche Information zum gerade gekürzten Vektor abgespeichert. Da die Korrekturen der Koordinaten hier während des Abrichtens nicht verändert werden, haben, nachdem die Simulation über die ganze Breite der Schnecke durchgeführt wurde, alle Vektoren auf einem gegebenen Radius der Schnecke $r_S$ bzw. einem gegebenen Wälzweg $w_{FS}$ annähernd dieselbe Länge. Diese Länge entspricht der von den Korrekturen $\Delta K$ abhängigen Modifikation $f_{nFS}$ der Schnecke.

Die geringfügen Unterschiede in den Längen rühren daher, dass der hier beschriebene Algorithmus aufgrund der Diskretisierung der Zeit Vorschubmarkierungen verursacht. Diese Vorschubmarkierungen und somit auch die Unterschiede in den Längen der Vektoren auf einem gegebenen Radius der Schnecke können durch eine feinere Diskretisierung der Zeit, gleichbedeutend mit einer Verkürzung der Zeitschritte reduziert werden. Wird die Simulation nicht über die gesamte Breite der Schnecke durchgeführt, sondern bei einer gegebenen axialen Shiftposition $v_{zS}$ der Schnecke abgebrochen, so haben, für einen gegebenen Radius auf der Schnecke nur die Vektoren annähernd dieselbe Länge, die von der Berührline des Abrichters mit der Schnecke bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden. Diese Tatsache kann genutzt werden, um die Berührline für den gegebenen Abrichter und die gegebene relative Lage der Schnecke zum Abrichter, beschrieben durch $\Delta K$, sehr genau zu bestimmen. Dazu werden alle Vektoren auf einen gegebenen Radius auf der Schnecke $r_{FS}$ bzw. Wälzweg $w_{FS}$ betrachtet und bestimmt, an welcher Breitenlinienposition der Übergang von Vektoren mit annähernd gleicher Länge zu solchen mit davon abweichender Länger ist. Die Berührline kann so durch eine Funktion $b_{BRFS}$ bzw. $b_{BwFS}$, abhängig von den Korrekturen $\Delta K$ und $v_{zS}$ beschrieben werden.

$$b_{FS} = b_{BRFS}(r_{FS}; v_{zS}, \Delta K) \quad \text{bzw.} \quad b_{FS} = b_{BwFS}(w_{FS}; v_{zS}, \Delta K) \tag{8}$$

Für evolventische Schnecken kann die Berührlinie mit sehr guter Näherung durch eine Gerade in den Koordinaten ($w_{FS}$, $b_{FS}$) beschrieben werden

$$w_{FS} \sin \rho_{FS}(\Delta K) + b_{FS} \cos \rho_{\square S}(\Delta K) = X_{FS}(v_{zS}, \Delta K) \tag{9}$$

wobei $\rho_{FS}(\Delta K)$ die Richtung und $X_{FS}(v_{zS}, \Delta K)$ die Lage der Geraden beschreibt. Die Abhängigkeit der Richtung $\rho_{FS}(\Delta K)$ von den Korrekturen $\Delta K$ ist nur gering, sodass in immer noch guter Näherung die Richtung als nur durch die Schnecken und Abrichtergeometrie gegeben angenommen werden kann.

Sind so die Vektoren bestimmt, entlang derer die Berührline verläuft, können die zu diesen zuvor gespeicherten Radien auf dem Abrichter $r_{FA}$ ausgelesen werden und so zu jedem Radius auf der Schnecke $r_{FS}$ ermittelt werden, von welchem Radius auf dem Abrichter $r_{FA}$ dieser abgerichtet wurde. Diese Zuordnung ist abhängig von den Korrekturen $\Delta K$.

$$r_{FA} = r_{FA}(r_{FS}; \Delta K) \tag{10}$$

Die Genauigkeit, mit der die Berührline und die Zuordnung der Radien auf diese Weise bestimmt werden können, hängt sowohl vom gewählten Abstand der Punkte als auch von der Länge der diskreten Zeitschritte ab. Beide können theoretisch beliebig klein gewählt werden, in der Praxis sind sie jedoch durch den verfügbaren Arbeitsspeicher und die maximal akzeptable Rechenzeit begrenzt. Mit den heute erhältlichen PCs mit mehreren Gigabyte Arbeitsspeicher und sehr schnellen Mehrkernprozessoren ist diese Berechnung in der Praxis mit hinreichender Genauigkeit möglich.

Eine Alternative zur gerade vorgestellten Abrichtsimulationen zur Berechnung von $f_{nsF}$, $b_{BRFS}$ bzw. $b_{BwFS}$ und $r_{FA}$ ist eine analytische Berechnung. Diese mathematisch komplexere Methode bietet den Vorteil, dass die Berechnung im Allgemeinen schneller durchgeführt werden kann.

Die der Erfindung zugrunde liegenden mathematischen Zusammenhänge werden im Folgenden an einigen Anwendungsfällen genauer beschrieben.

## 4-Punkt-Methode

Zunächst wird der Fall einer über die ganze Schneckenbreite konstanten Profilmodifikation betrachtet, welche an 4 Wälzwegen $w_{FSi}$ exakt erreicht werden soll (4-Punkt-Methode). Die Werte der Profilmodifikation $f_{FSi}$ an den 4 Wälzwegen $w_{FSi}$ sind Funktionen der Koordinatenkorrekturen $\Delta K$.

$$f_{FSi} = f_{nFS}(w_{Fi}; \Delta K) \ , \ i = 1, \ldots, 4 \qquad (11)$$

Daraus lässt sich die Funktion $F_4$

$$F_{F4}(\Delta K) = \begin{pmatrix} f_{nFS}(w_{F1}; \Delta K) - f_{FS1} \\ f_{nFS}(w_{F2}; \Delta K) - f_{FS2} \\ f_{nFS}(w_{F3}; \Delta K) - f_{FS3} \\ f_{nFS}(w_{F4}; \Delta K) - f_{FS4} \end{pmatrix} \qquad (12)$$

konstruieren. Für gewisse Profilmodifikation ($f_{FS1}, f_{FS2}, f_{FS3}, f_{FS4}$) lassen sich die Nullstellen von $F_{FS4}$ berechnen, welche den Korrekturen $\Delta K$ entsprechen, die eingestellt werden müssen, um die gewünschte Profilmodifikation auf der Schnecke an den Wälzwinkeln ($w_{FS1}, w_{FS2}, w_{FS3}, w_{FS4}$) zu erzeugen. Hat die Funktion $F_{FS4}$ keine Nullstelle, so kann die Profilmodifikation nicht exakt erzeugt werden.

Bei dieser Berechnung wird die Profilmodifikation an nur 4 Wälzwegen betrachtet. Die Profilmodifikation entlang des ganzen Profils, also für alle Wälzwege, kann mit $f_{nFS}(w_{FS}; \Delta k)$ aus den berechneten Korrekturen $\Delta K$ bestimmt werden.

Die Nullstellenberechnung kann mit den aus der numerischen Mathematik bekannten Verfahren, beispielsweise dem mehrdimensionalen Newtonverfahren durchgeführt werden. Die hierzu nötigen partiellen Ableitungen von $F_{FS4}$ können numerisch berechnet werden. Dazu ist es nötig, die Funktion $F_{FS4}$ und somit auch die Funktion $f_{nFS}(w_{F\square}; \Delta K)$ mit hoher Genauigkeit berechnen zu können, was, wie oben beschrieben, mit dem hier vorgestellten Algorithmus möglich ist. Ebenso kann mit einem solchen numerischen Verfahren geprüft werden, ob $F_{FS4}$ überhaupt eine Nullstelle hat. Beim Newtonverfahren beispielsweise zeigt sich dies an der sich einstellenden Konvergenz. Diese Überlegungen zur numerischen Berechnung der Nullstellen gelten ebenfalls für die weiteren vorgestellten Varianten.

Dies ermöglicht es, für eine gegebene Schnecke und einen gegebenen Abrichter die Menge aller erzeugbaren Profilmodifikation zu berechnen. In der Praxis besonders relevant ist jedoch auch die Umkehrrechnung, das heißt, eine Berechnung, mit der bestimmt werden kann, mit welchen Schnecken- und Abrichtergeometrien die gewünschten Modifikationen erzeugt werden können.

Die hier beschriebenen Achskorrekturen verursachen im Allgemeinen eine Verschiebung und Deformation der Berührlinie zwischen Abrichter und Schnecke, welche durch Gleichung (8) beschrieben werden. Gleichung (8) erlaubt es jedoch, die Lage der Berührlinie zu einem Zeitpunkt dahingehend vorzugeben, dass ein auf der Schnecke vorgegebener Punkt ($w_{FS0}$, $b_{FS0}$) auf der Berührlinie liegt. Dies führt zur folgenden Relation

$$b_{FS0} = b_{BwFS}(w_{FS0}; v_{zS}, \Delta K) \qquad (13)$$

welche zusammen mit der Funktion $F_{FS4}$ aus Gleichung (12) zur Definition der Funktion $\hat{F}_{F4}$

$$\hat{F}_{F4}(\Delta K, v_{zS}) := \begin{pmatrix} f_{nFS}(w_{FS1}; \Delta K) - f_{FS1} \\ f_{nFS}(w_{FS2}; \Delta K) - f_{FS2} \\ f_{nFS}(w_{FS3}; \Delta K) - f_{FS3} \\ f_{nFS}(w_{FS4}; \Delta K) - f_{FS4} \\ b_{BwFS}(w_{FS0}; v_{zS}, \Delta K) - b_{FS0} \end{pmatrix} \qquad (14)$$

genutzt werden kann. Die Nullstellen dieser Funktion liefern neben den Achkorrekturen $\Delta K$ auch eine axiale Position der Schnecke $v_{zS}$, sodass die gewünschte Modifikation erzeugt wird und die Berührlinie durch den Punkte ($w_{FS0}, b_{FS0}$) geht. Dies erlaubt es, gezielt nur bestimmte Bereiche auf der Schnecke abzurichten und es ermöglicht, den beim Abrichten nötigen Überlauf so gering wie möglich zu halten.

Das gerade diskutierte Beispiel kann dahingehend erweitert werden, dass die Modifikation auf der Schnecke nicht über die ganze Breite gleich ist. Solche Modifikationen werden als topologische Modifikationen bezeichnet. Dazu erhalten die Modifikationen $f_{FSi}$ eine Abhängigkeit von der Position in Breitenlinienrichtung $b_{FS}$.

$$f_{FSi} = f_{FSi}(b_{FS}) \ , \ i = 1, \ldots, 4 \qquad (15)$$

Ebenso können die Wälzwinkel $w_{FSi}$, an denen die Modifikationen vorgegeben werden, von der Position in Breitenlinienrichtung abhängig sein.

$$w_{FSi} = w_{FSi}(b_{FS}) \ , \ i = 1, \dots, 4 \tag{16}$$

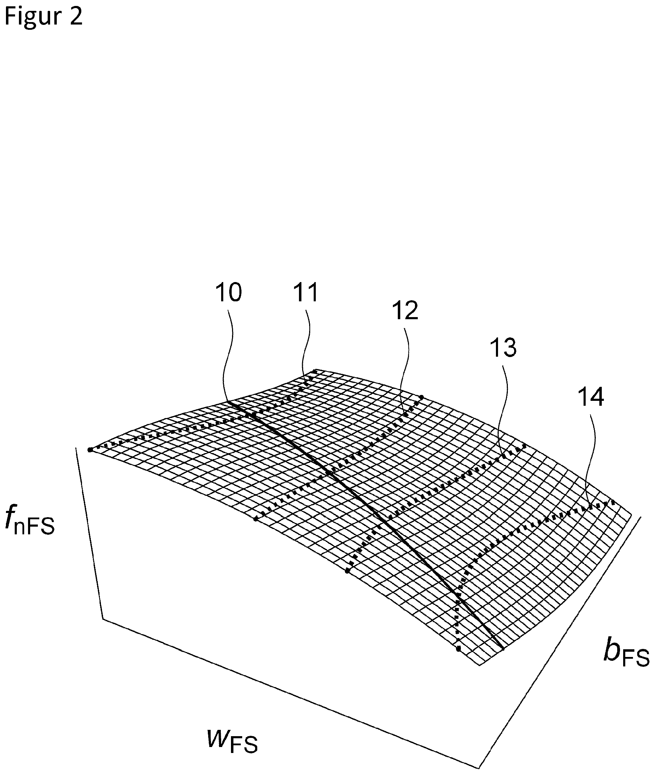

Diese Erweiterung ist insbesondere dann von Interesse, wenn die abgerichtete Schnecke für das Wälzschleifen im Diagonalwälzverfahren eingesetzt werden soll. Bei dieser Sonderform des Wälzschleifens ist es möglich, gezielt topologische Modifikationen auf der Verzahnung aufzubringen. Die ebenfalls topologische Modifikation $f_{nFS}(w_{FS}, b_{FS})$ auf der Schnecke hat in diesem Fall eine Abhängigkeit von $w_{FS}$ und $b_{FS}$. Die $w_{FSi}(b_{FS})$ definieren, auf welchen Wälzwegen, abhängig von der Position in Breitenlinienrichtung, an welchen Punkten auf der Schnecke die Sollmodifikation beim Abrichten exakt erreicht werden soll (siehe Figur 2). Ist beispielsweise die Toleranz der Modifikation auf der Schnecke nicht für alle $w_{FS}$ und $b_{FS}$ gleich, so kann die freie Wahl der $w_{FSi}(b_{FS})$ dafür genutzt werden, an den enger tolerierten Bereichen die Modifikation exakt zu erreichen. Die $F_{FSi}(b_{FS})$ sind gegeben durch:

$$f_i(b_{FS}) = f_{nFS}(w_{FS_i}(b_{FS}), b_{FS}) \ , \ i = 1, \dots, 4 \tag{17}$$

Analog zu Gleichung (14) lässt sich damit eine Funktion definieren, deren Nullstellen, für vorgegebenes $b_{FS0}$ die einstellenden Korrekturen $\Delta K$ und die einzustellende axiale Position $v_{zS}$ liefern. Es ist jedoch zu beachten, dass bei dieser Berechnung die Berührline die 4 Linien $w_{FSi}(b_{FS})$ schneiden muss, woraus sich die Positionen ergeben, an denen die Sollmodifikation $f_{nFS}(w_{FS}, b_{FS})$ auszuwerten ist. Diese Zusatzbedingungen führen dazu, dass die hier zu betrachtende Funktion 9 statt bisher 5 Dimensionen hat.

## 3-Punkt-Methode

Wie eingangs erwähnt, hat die 4-Punkt-Methode, den Nachteil, dass sie keine Kontrolle über das Platzieren der in den Abrichter eingebrachten Modifikation auf der Schnecke ermöglicht. Um dieses Problem zu lösen, werden bei der folgenden Methode (3-Punkt-Methode) lediglich 3 Modifikationen $f_{FSi}$ an 3 zunächst wieder konstsnten Wälzwinkeln $w_{FSi}$ betrachtet. Als zusätzliche Bedingung wird dafür aufgenommen, dass der Radius $r_{FA}$ auf dem Abrichter den Radius $r_{FS}$ auf der Schnecke fertigen soll. Daraus lässt sich analog zu $\square_{F4}$ die Funktion $F_{F3}$ mit

$$F_{F3}(\Delta K) \coloneqq \begin{pmatrix} f_{nFS}(w_{FS1}; \Delta K) - f_{FS1} \\ f_{nFS}(w_{FS2}; \Delta K) - f_{FS2} \\ f_{nFS}(w_{FS3}; \Delta K) - f_{FS3} \\ r_{FA}(r_{FS}; \Delta K) - r_{FA} \end{pmatrix} \tag{18}$$

konstruieren. Für gewisse Tupel $(f_{FS1}, f_{FS2}, f_{FS3}, r_{FS}, r_{FA})$ lassen sich die Nullstellen von $F_{F3}$ berechnen, welche den Korrekturen $\Delta K$ entsprechen, die eingestellt werden müssen, um die gewünschten Modifikationen $(f_{FS1}, f_{FS2}, f_{FS3})$ zu erzeugen und den gewünschten Radius auf dem Abrichter auf den gewünschten Radius auf der Schnecke abzubilden. Diese Methode lässt sich ebenfalls um die Option der Vorgabe eines Punkts $(w_{FS0}, b_{FS0})$, der auf der aktuellen Berührlinie liegen soll, erweitert werden. Die Funktion $F_{F3}$ muss dazu analog zu Gleichung (14) zur Funktion $\hat{F}_{F3}$ erweitert werden. Zur Beurteilung der Anwendbarkeit des Verfahrens ist es auch bei der 3-Punkt-Methode wichtig, ermitteln zu können, welche Modifikationen bei gegebener Schnecken- und Abrichtergeometrie erreicht werden können, bzw. auch die Umkehrung, das heißt, aus einer gewünschten Modifikation Schnecken- und Abrichtergeometrien zu berechnen, welche die gewünschten Modifikationen erlauben. Hierzu wird beispielhaft eine evolventische Schnecke betrachtet, bei der $f_{FS1}$ = 0 und $f_{FS3}$ = 0 und $w_{FS2} = (w_{FS1} + w_{FS3})/2$ ist. $f_{FS2}/\cos \beta_{bFV}$ wird hier mit $c_{\alpha FS}$ bezeichnet, da diese Wahl der Modifikationen $F_{FSi}$ und der Wälzwinkel $w_{FSi}$ zu einer Profilballigkeit zwischen den Wälzwinken $w_{FS1}$ und $w_{FS3}$ mit dem Wert $f_{FS2}/\cos\beta_{bFV}$ führt. Dieser Spezialfall wurde hier gewählt, da die Profilballigkeit im Wesentlichen bestimmt, ob die gewünschte Modifikation mit einer gegebenen Schnecken- und Abrichtergeometrie erreicht werden kann. Modifikationen mit freigewählten Werten für $f_{FS1}$, $f_{FS2}$ und $f_{FS3}$ erhält man durch eine Überlagerung einer der hier betrachteten Modifikationen mit $f_{FS1}$ = 0 und $f_{FS3}$ = 0, einer Zahndickenänderung des Schneckengangs und einer Profilwinkelkorrektur. Zahndicke und Profilwinkel lassen sich beim Abrichten jedoch im Wesentlichen unabhängig von Schnecken- und Abrichtergeometrie korrigieren, es ist lediglich zu beachten, dass der Abrichter beim Abrichten einer Flanke die andere Flanke derselben Lücke nicht verschneidet. In der Praxis relevant ist jedoch nicht die Profilballigkeit auf der Schnecke, sondern die beim Wälzschleifen auf dem Werkstück erzeugte Profilballigkeit. Diese, hier mit $c_{\alpha FV}$ bezeichnete Profilballigkeit, errechnet sich durch

$$c_{\alpha FV} = -c_{\alpha FS} \cdot \frac{\cos \beta_{bFS}}{\cos \beta_{bFV}} \qquad (19)$$

Hierbei werden die Auswertebereiche für die Profilballigkeiten so gewählt, dass der Beginn des Auswertebereichs auf der Schnecke das Ende des Auswertebereichs auf der Verzahnung fertigt und das Ende des Auswertebereichs auf der Schnecke den Beginn des Auswertebereichs auf der Verzahnung. Es ist aus dem Stand der Technik bekannt, dass zu einer gegebenen zu schleifenden Verzahnung Schnecken mit verschiedensten Geometrien eingesetzt werden können. Bei evolventischen Verzahnungen und Schnecken ist das wesentliche Kriterium zum Entscheiden, ob eine Schnecke eingesetzt werden kann, ob die beiden Evolventenverzahnungen (Schnecke und Verzahnung) miteinander kämmen. Dies ist gleichbedeutend mit:

$$m_{bFV} \cdot \cos \beta_{bFV} = m_{bFS} \cdot \cos \beta_{bFS} \qquad (20)$$

An einer Beispielverzahnung werden im Folgenden typische Verläufe der Achskorrekturen $\Delta K$, abhängig von der auf der Verzahnung zu erzielenden Profilballigkeit $c_{\alpha FV}$ diskutiert. Neben den Achskorrekturen wird auch die axiale Position $v_{zS}$ mit betrachtet. Hierbei werden Abrichter betrachtet, die so ausgelegt sind, dass sie Schnecken ohne Profilballigkeit abrichten und diese Schnecken dann auch keine Profilballigkeiten auf der Verzahnung erzeugen.

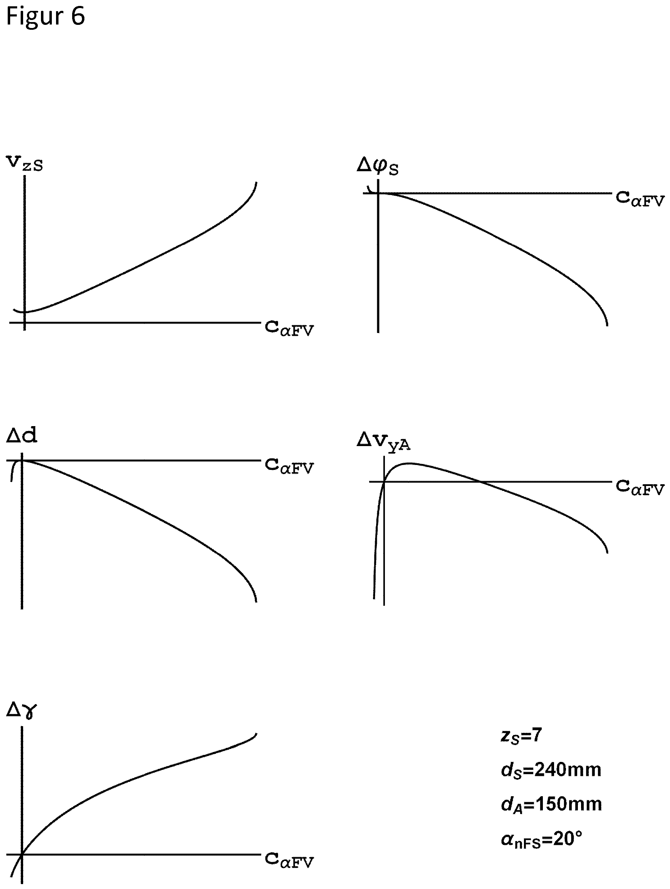

Die Verläufe der Achskorrekturen weisen über den ganzen Bereich der auf der Verzahnung erzielbaren Profilballigkeit komplexe Formen auf, welche nicht durch einfache Funktionen beschreiben werden können (siehe Figur 6). Insbesondere ist es nicht möglich, zuverlässig von den Verläufen bei betragsmäßig kleinen Profilballigkeiten auf den gesamten Verlauf zu schließen. Es ist somit in jedem Fall empfehlenswert, die Berechnung für die gewünschte Profilballigkeit durchzuführen. Am rechten Rand der dargestellten Verläufe zeigen sich bei den Achskorrekturen $\Delta K$ und der axialen Position der Schnecke $v_{zS}$ steile Anstiege. Am linken Rand zeigt sich dieser steile Anstieg insbesondere bei $\Delta d$, $\Delta \varphi_S$ und $\Delta v_{yA}$. Diese Ränder markieren die maximale und minimale erzeugbare Profilballigkeit. Jenseits der linken und rechten Ränder hat die Funktion $\hat{F}_{F3}$ keine Nullstellen mehr.

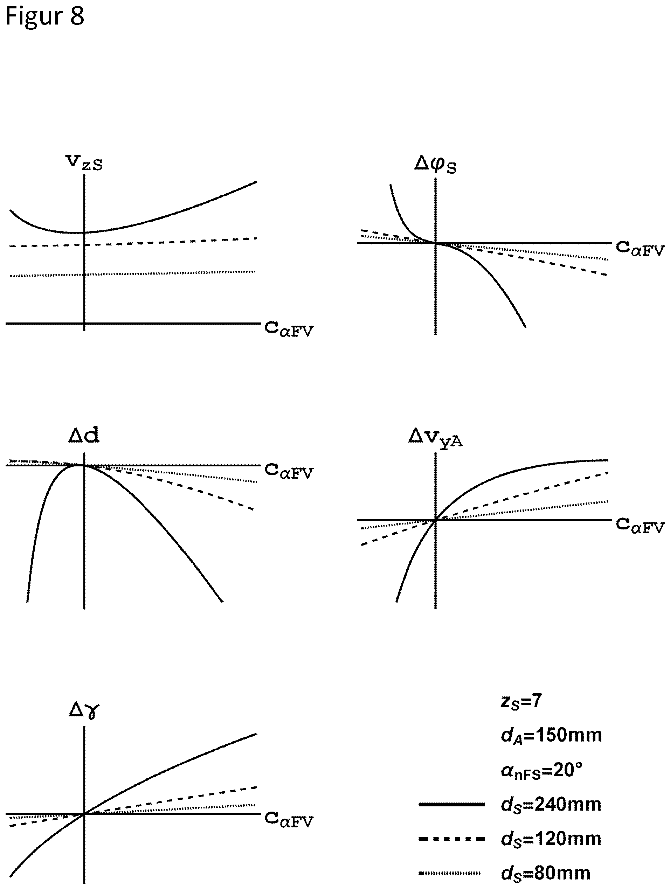

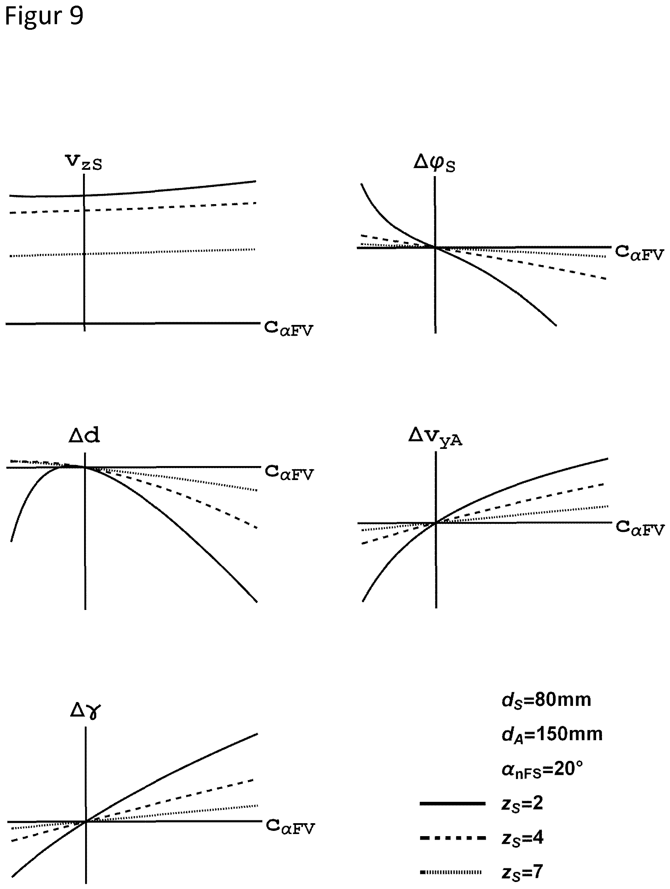

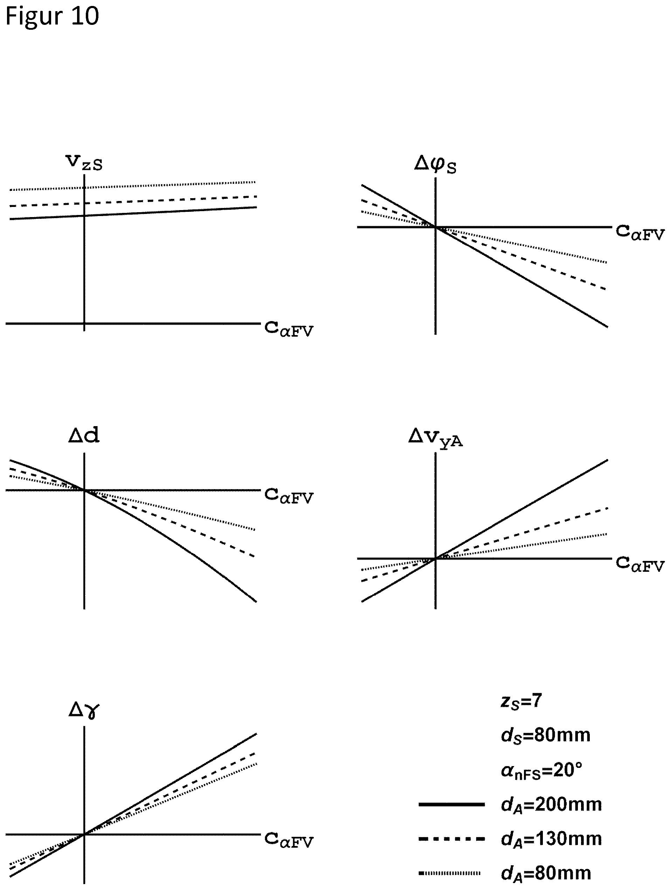

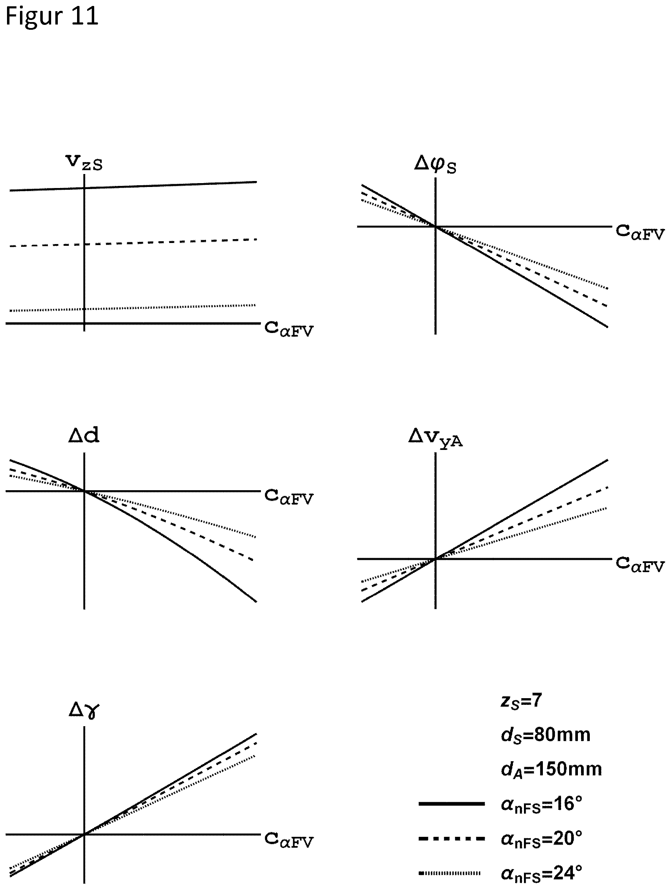

Die Verläufe werden stark durch die geometrischen Kenngrößen der verwendeten Schnecke und des Abrichters beeinflusst. So zeigt Figur 8, dass bei größer werdendem Durchmesser der Schnecke $d_S$, die Korrekturen $\Delta K$ und die axiale Position $v_{zS}$ größer, insbesondere $\Delta \varphi_S$, $\Delta d$ und $\Delta \gamma$ deutlich größer werden. Figur 9 zeigt, dass bei abnehmender Gangzahl der Schnecke $z_S$, die Korrekturen $\Delta K$ und die axiale Position $v_{zS}$ größer, insbesondere $\Delta \varphi_S$, $\Delta d$ und $\Delta \gamma$ deutlich größer werden. Figur 10 zeigt, dass bei größer werdendem Durchmesser des Abrichters $d_A$, die Korrekturen $\Delta K$ größer werden. Figur 11 zeigt, dass bei kleiner werdendem Normalprofilwinkel der Schnecke $\alpha_{nFS}$ die Korrekturen $\Delta K$ und die axiale Position $v_{zS}$ größer werden. Diese starken Abhängigkeiten zeigen auf, dass für die erfolgreiche Anwendung der hier beschriebenen Erfindung die Wahl geeigneter Schnecken- und Abrichtergeometrien von großer Bedeutung ist, da es im Allgemeinen von Vorteil ist, die Verfahrwege der Maschinenachsen möglichst klein zu halten.

Gemäß dem Stand der Technik ist es üblich, Abrichter so auszulegen, dass diese eine Profilballigkeit auf der Schnecke und diese Schnecken dann wiederum eine Profilballigkeit auf der Verzahnung erzeugen. Werden solche Abrichter verwendet, so addieren sich die durch den Abrichter erzeugten Profilballigkeiten zu den mit dem hier vorgestellten Verfahren erzeugten hinzu.

Zur Berechnung der Achskorrekturen wurden in diesem Beispiel nur 3 Punkte auf dem Profil betrachtet. Das gesamte Profil über dem ganzen Prüfbereich lässt sich mit $f_{nFS}(w_{FS}; \Delta K)$ bestimmen. Für das gerade betrachtete Beispiel zeigt sich, dass die Form der Modifikation sehr gut der einer Parabel entspricht (siehe Figur 12b), welche die typische Form einer Profilballigkeit ist. Auch kreisförmige Profilballigkeiten lassen sich mir sehr guter Genauigkeit auf diese Weise fertigen, da die Abweichung zwischen parabelförmigen und kreisförmigen Profilballigkeiten extrem gering ist.

Bei Anwendung der 3-Punkt-Methode zeigt sich, dass die Zuordnung von Radien auf dem Abrichter auf Radien auf der Schnecke nicht mehr über das ganze Profil gewährleistet werden kann. Wird ein Punkt festgehalten, so verschiebt sich die Zuordnung für alle anderen Punkte (siehe Figur 12b). Um diesen Effekt quantitativ zu erfassen, wird der Begriff der relativen Profilstreckung

$$P_{FS} := \frac{w_{PFS} - w_{NfFS}}{w_{NfFS} - w_{NaFS}} \qquad (21)$$

eingeführt. Hier entspricht $w_{\square nFS}$ dem Radius auf der Schnecke, der beim Wälzschleifen der Verzahnung den Kopfkreis $w_{NaFV}$ fertigt und $w_{NaFS}$ entspricht dem Radius auf der Schnecke, der den Fußkreis $w_{NfFV}$ fertigt. Auf der mit einer solchen Schnecke geschliffenen Verzahnung ergibt sich dieselbe relative Profilstreckung $P_{FV}$. Da jedoch beim Wälzschleifen typischerweise jeder Punkt am Fußnutzkreis auf der Verzahnung von einem Punkt am Kopfnutzkreis der Schnecke gefertigt wird und umgekehrt, wird beim hier betrachteten Beispiel, auf der Verzahnung am Fußformkreis die richtige Profilmodifikation erzeugt, am Kopfnutzkreis wird jedoch eine falsche Profilmodifikation zugeordnet. Die Profilballigkeit auf der Verzahnung berechnet sich nach Gleichung (19). Figur 13 zeigt am Beispiel der 3-Punkt-Methode, wie die beim Wälzschleifen auf der Verzahnung entstehende relative Profilstreckung von der auf der Verzahnung erzeugen Profilballigkeit $c_{\alpha FV}$ abhängt. Des Weiteren zeigen die vier Figuren den Einfluss der Gangzahl der Schnecke $z_S$, des Durchmessers der Schnecke $d_S$, des Durchmessers des Abrichters $d_A$ und des Profilwinkels der Schnecke $\alpha_{nF\square}$ auf die Abhängigkeit der relativen Profilstreckung $P_{FS}$ von der Profilballigkeit auf der Verzahnung $c_{\alpha FV}$.

Der Effekt der relativen Profilstreckung beeinflusst den auf dem Abrichter zur Verfügung stehenden aktiven Bereich.

Eine Limitierung der maximal mit einem gegebenen Abrichter mit der 3-Punkt-Methode herstellbaren Profilballigkeit ergibt sich direkt aus der dafür einzustellenden relativen Lage zwischen Schnecke und Abrichter. Die Figuren 14a, 14b und 15 zeigen in 3D-Ansichten aus verschiedenen Perspektiven und Abständen die relative Lage für eine nicht korrigierte Abrichtkinematik, am Beispiel einer evolventischen Schnecke. Hier finden keine Berührung und keine Durchdringung zwischen der rechten Flanke 21 des Abrichters und der rechten Flanke 25 des Schneckengangs statt. Ein einflankiges Abrichten ist so problemlos möglich. Des Weiteren wird der Grund 23 des Schneckengangs wie gewünscht von der äußeren Mantelfläche 20 des Abrichters abgerichtet. Anders gestaltet sich jedoch die Situation beim Abrichten mit der 3-Punkt-Methode. Die Figuren 16a, 16b und 17 zeigen für dieselbe Schnecke und denselben Abrichter in 3D-Ansichten aus verschiedenen Perspektiven und Abständen die relative Lage für eine Abrichtkinematik gemäß der 3-Punkt-Methode. Es zeigt, dass die rechte Flanke 21' des Abrichters und die äußere Mantelfläche 20' die rechte Flanke 25' des einen Schneckengangs durchdringen. Gib es eine solche Durchdringung, kann das Verfahren nicht angewendet werden, da es zu einem ungewollten Abtrag auf der rechten Flanke 25' kommt. Um dies zu vermeiden, kann der Abrichter schmaler gestaltet werden. Dadurch verschmälert sich auch die äußere Mantelfläche 20' und die rechte Flanke 21' rückt dichter an die linke Flanke 22'. Die Verschmälerung kann theoretisch soweit durchgeführt werden, bis die äußere Mantelfläche 20' Breite 0 hat. In der Praxis kann jedoch eine Mindestbreite fertigungsbedingt nicht unterschritten werden. Ob eine solche ungewollte Durchdringung stattfindet, kann durch Berechnung von $f_{nFS}(w_{FS}; \Delta K)$ für die rechte Flanke 25' mit den für die linke Flanke 24' gemäß der 3-Punkt-Methode berechneten Korrekturen $\Delta K$ bestimmt werden. Liegt die so berechnete Profilmodifikation auf der rechten Flanke 25' an mindestens einem Wälzweg $w_{FS}$ unterhalb des aktuellen Aufmaßes, so kommt es zu einer im Allgemeinen ungewollten Durchdringung. Insbesondere wenn die berechnete Profilmodifikation unterhalb der Sollmodifikation liegt, ist eine solche Durchdringung zu vermeiden. Ein weiterer problematischer Effekt ergibt sich aus der Änderung des Achsabstands $\Delta d$ durch die 3-Punkt-Methode. Diese häufig negative Änderung führt, wie in Figur 17 zu sehen, zu einem Eindringen der äußeren Mantelfläche 20' in die Schnecke unterhalb des Grunds 23'. Ein solches Eindringen ist im gewissen Maße jedoch unkritisch, da der Grund während des Wälzschleifprozesses im Allgemeinen keinen Kontakt mit der Verzahnung hat. Ein zu tiefes Eindringen kann jedoch zu einem Unterhöhlen des Schneckengangs führen. Dieses Unterhöhlen kann zu einem Materialabtrag an Stellen auf der Schnecke führen, an denen zu einem späteren Abrichtzyklus, das heißt, wenn die Schnecke für einen kleineren Durchmesser $d_{Sk}$ abgerichtet wird, der Schneckengang platziert werden soll. Ist dieses Material jedoch nicht mehr vorhanden, ist dieser Schneckengang nicht mehr vollständig ausgebildet und kann nicht genutzt werden. Um zu prüfen, ob es einen solchen ungewünschten Abtrag gibt, kann $f_{nFS}(w_{FS}; \Delta K)$ für kleinere Durchmesser der Schnecke $d_{sk}$ mit den Korrekturen $\Delta K$ für den aktuellen Schneckendurchmesser für eine oder beide Flanken berechnet werden. Liegt die so berechnete Profilmodifikation auf mindestens einer Flanke an mindestens einem Wälzweg $w_{FS}$ unterhalb der Sollmodifikation, so kommt es zu einem ungewollten Abtrag.

Ebenso wie die 4-Punkt-Methode kann auch die 3-Punkt-Methode dahingehend erweitert werden, dass die Modifikation über die Schneckenbreite nicht gleich ist. Die Vorgehensweise ist hierbei analog und die Gleichungen (15), (16) und (17) gelten dann für 3 Punkte.

Darüber hinaus kann auch die Zuordnung der Radien auf dem Abrichter zu den Radien auf der Schnecke über die Breite der Schnecke variabel gestaltet werden. Dazu ist die vierte Komponente aus $F_{F3}$ in Gleichung (18) durch

$$r_{FA}(r_{FS}(b_{FS}); \Delta K) - r_{FA}(b_{FS}) \qquad\qquad (22)$$

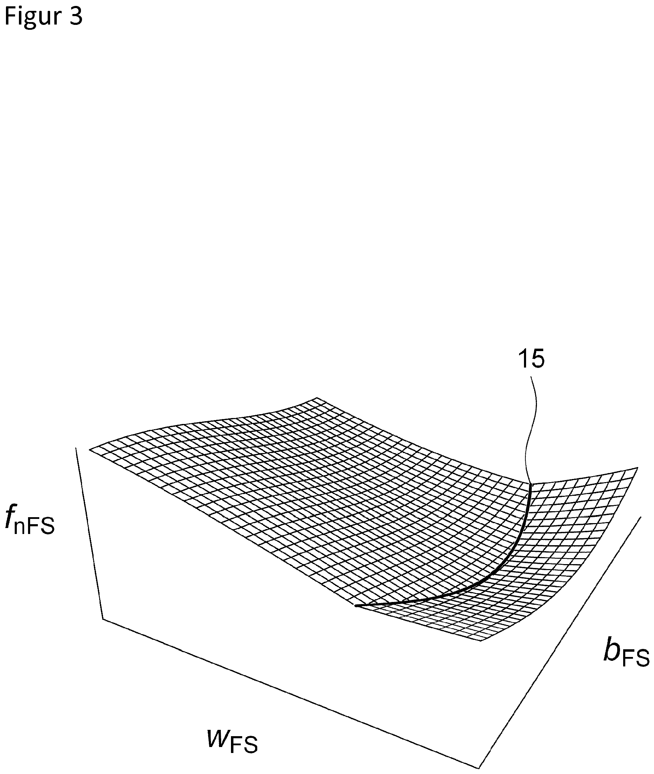

zu ersetzten. $r_{FA}(b_{FS})$ und $r_{FS}(b_{FS})$ beschreiben hierbei die Zuordnung von Radien auf dem Abrichter zu Radien auf der Schnecke, abhängig von der Schneckenbreitenposition. Figur 3 zeigt die Modifikation einer Schnecke, welche mit variabler Zuordnung der Radien abgerichtet wurde.

Die Zuordnung der Radien als Zusatzbedingung zu den Modifikationen an 3 verschiedenen Wälzwegen aufzunehmen ist jedoch nur eine Variante der Erfindung. Es können prinzipiell beliebige Zusatzbedingungen betrachtet werden, von denen einige im Folgenden beispielhaft diskutiert werden.

Ein Abrichter, beispielsweise für evolventische Schnecken, kann nicht nur genutzt werden, um die Flanken einer Schnecke abzurichten sondern auch um gleichzeitig den Kopf der Schnecke abzurichten. Dadurch kann zum einen die Abrichtzeit verkürzt werden, weil das zusätzliche Abrichten an einer Fliese entfällt, es ist aber auch möglich, dem Schneckenkopf einen bestimmte Form zu geben, um beim Wälzschleifen den Fuß der Verzahnung mit zu bearbeiten. Ein solches Abrichten des Kopfs kann am selben Schneckengang und an etwa derselben Breitenposition durchgeführt werden, es kann jedoch auch an einem anderen Gang bzw. am selben Gang an einer anderen Breitenposition durchgeführt werden (siehe Figur 21). Ein für ein gleichzeitiges Abrichten des Kopfs und der Flanke ausgelegter Abrichter wird in der Regel so ausgelegt, dass er für eine bestimmte Abrichtkinematik den Kopf der Schnecke auf der richtigen Höhe abrichtet. Wird die Abrichtkinematik jedoch korrigiert, kann dies zu einer falschen Positionierung des Kopfabrichters zum Schneckenkopf führen und der Schneckenkopf wird auf einer falschen Höhe abgerichtet bzw. erhält eine falsche Form. Um dieses Problem zu lösen, kann als Zusatzbedingung gefordert werden, dass der Kopfabrichter den Schneckenkopf auf einer vorgegebenen Höhe abrichtet. Diese Variante erlaubt es somit, das Profil zu modifizieren und gleichzeitig den Kopf auf der richtigen Höhe abzurichten. Es ist dabei auch möglich, die Höhe des Schneckenkopfs über die Schneckenbreite zu variieren, dazu ist die Zusatzbedingung von $b_{FS}$ abhängig zu formulieren. Soll jedoch nicht nur die Höhe des Schneckenkopfes kontrolliert werden, sondern sollen zwei Punkte vorgegeben werden, so ist dies ebenso möglich. Dazu können zwei Zusatzbedingungen formuliert werden, wobei dann nur noch zwei Wälzwege auf der Flanke vorgegeben werden können. Alternativ kann eine Variation der 4-Punkt-Methode genutzt werden, wobei zwei Wälzwege auf der Flanke und zwei auf dem Kopf gewählt sind.

Eine weitere Alternative ergibt sich, wenn nicht 5 Freiheitsgrade genutzt werden können, beispielsweise weil diese auf der Maschine nicht zur Verfügung stehen oder, wenn topologisch abgerichtet werden soll, nicht 5 Freiheitsgrade als aktive Freiheitsgrade zur Verfügung stehen und somit nicht während der Bearbeitung verändert werden können. Das Fehlen eines Freiheitsgrads kann als Zwangsbedingung formuliert werden und liefert so die gewünschte Zusatzbedingung. Möglich ist auch, dass bis zu zwei Freiheitgrade fehlen.

Je nach Anzahl der Zusatzbedingungen muss die Anzahl der Wälzwinkel, an denen die Modifikationen erreicht werden sollen, reduziert werden, sodass die Summe aus Anzahl der Wälzwinkel und Zusatzbedingungen immer 4 ergibt. Von besonderem Interesse sind jedoch die Varianten, bei denen die Anzahl der Wälzwinkel mindestens 2 beträgt.

Nachdem die mathematischen Zusammenhänge ausführlich beschrieben wurden, werden im Folgenden die sich daraus ergebenden Anwendungen aufgeführt.

Wie eingangs beschrieben, ist kein Verfahren bekannt, mit dem die Profilform beim Abrichten einer Schnecke zum Wälzschleifen von Verzahnungen durch den Abrichtprozess beeinflusst werden kann, abgesehen von Profilwinkelmodifikationen bei evolventischen Schnecken. Eine flexiblere Vorgabe solcher Profilmodifikationen kann in der Praxis jedoch große Vorteile bringen. So wird beispielsweise die Möglichkeit eröffnet, einen Abrichter, der speziell für Schnecken für eine bestimmte Verzahnung mit bestimmten Profilmodifikationen ausgelegt wurde, auch zum Abrichten von Schnecken für eine andere Verzahnung und/oder andere Profilmodifikationen zu nutzen. Eine solche Anwendung ist insbesondere in der Kleinserien- und Lohnfertigung von großem Interesse, da durch die Wiederverwendbarkeit teurer Abrichter Kosten gesenkt werden können und Beschaffungszeiten entfallen. Ein weiterer Anwendungsfall ist die Korrektur von Herstellungsfehlern in Abrichtern. Auch wenn diese inzwischen sehr präzise gefertigt werden können, kommt es immer noch zu Abweichungen von der Sollgeometrie. Werden solche Fehler in den Abrichtern beim Wälzschleifen festgestellt, so müssen gemäß dem Stand der Technik die Abrichter vom Verzahner zum Hersteller zum Nachläppen zurück geschickt werden, wodurch teure Wartezeiten entstehen. Mit dem hier vorgestellten Verfahren können solche Abweichen über die Abrichtkinematik korrigiert werden, ohne dass eine Rücksendung des Abrichters nötig ist. Durch eine solche Korrekturmöglichkeit wird es auch möglich, die Fertigungstoleranzen von Profilmodifikationen insbesondere auch in einer Serienfertigung zu reduzieren. Eine solche Korrektur kann beispielsweise durch händische Eingabe in die Steuerung einer Verzahnmaschine vorgenommen werden oder durch Messen der geschliffenen Profilmodifikation in der Maschine und aus diesem Messergebnis automatisch vorgenommen werden. Im Fall einer evolventischen Verzahnung ist insbesondere die Korrektur einer Profilballigkeit von großem Interesse.

Wird das hier beschriebene Verfahren zur Erzeugung variabler Profilmodifikationen über die Schnecke genutzt, eröffnet es neue Möglichkeiten beim topologischen Wälzschleifen mittels Diagonalwälzverfahren. Beim Diagonalwälzverfahren wird während des Wälzschleifprozesses die Schleifschnecke nicht nur axial zur Verzahnung sondern auch axial zu ihrer eigenen Drehachse verschoben. Dadurch kommen unterschiedliche Bereiche der Schleifschnecke, welche typischerweise unterschiedliche Modifikationen aufweisen, in Kontakt, wodurch über die Breite unterschiedliche Modifikationen auf der geschliffenen Verzahnung aufgebracht werden können. Die benötigte topologische Modifikation auf der Schnecke ergibt sich aus der zu erzeugenden topologischen Modifikation auf der Verzahnung und einer Zuordnung von Punkten auf der Verzahnung zu Punkten auf der Schnecke während des Wälzschleifprozesses. Je größer das Spektrum an möglichen topologischen Modifikationen auf der Schnecke ist, desto größer ist somit auch das Spektrum an möglichen topologischen Modifikationen auf der Verzahnung. Bisher war es nur möglich, die Zahndicke und den Profilwinkel über die Schneckenbreite beim Abrichten zu verändern. Insbesondere für evolventische Schnecken ist es mit dem hier beschriebenen Verfahren nun möglich, zusätzlich auch die Profilballigkeit über die Schneckenbreite variabel zu gestalten. Die mit der 3-Punkt-Methode auf einer evolventischen Schnecke erzeugbare Profilmodifikation, kann, wie in Figur 12b zu sehen, in sehr guter Näherung durch eine Parabel, das heißt ein Polynom zweiten Grades in $w_{FS}$

beschrieben werden. In ebenfalls sehr guter Näherung gilt Gleichung (9), welche die Berührline beschreibt entlang welcher sich die Profilmodifikation beeinflussen lässt. Kombiniert man diese beiden sehr guten Näherungen, so kann die mit der 3-Punkt-Methode erzeugbare variable topologische Modifikation $f_{nFstoP3}$ auf der Schnecke durch

$$f_{nFStop3}(w_{FS}, b_{FS}) = C_{0FS}(X_{FS}) + C_{1FS}(X_{FS}) \cdot w_{FS} + C_{2FS}(X_{FS}) \cdot w_{FS}^2 \qquad (23)$$

beschrieben werden, wobei $C_{0FS}(X_{FS})$, $C_{1FS}(X_{FS})$ und $C_{2FS}(X_{FS})$ stetige Funktionen sind und $X_{FS} = w_{FS}\,\sin\rho_{FS} + b_{FS}\,\cos\rho_{FS}$. Zusätzlich zu dieser Modifikation kann noch eine in den Abrichter gelegte Profilmodifikation additiv überlagert werden. Diese Modifikation $f_{nFSA}$ kann von der Lage der Berührline $X_{FS}$ abhängig auf dem Profil platziert werden und vereinfacht durch

$$f_{nFSA}(w_{FS}, b_{F\square}) = A(w_{FS} - \Delta w_{0FS}(X_{FS})) \qquad (24)$$

wobei $A(w)$ die Profilmodifikation auf der Schnecke beschreibt, die der Abrichter bei nicht korrigierter Kinematik erzeugen würde und $\Delta w_{0FS}(X_{FS})$ die Verschiebung dieser Profilmodifikation durch eine veränderte Zuordnung der Radien auf dem Abrichter zu Radien auf der Schnecke, abhängig von der Lage der Berührline. Eine exakte Berechnung erfordert zusätzlich noch eine Berücksichtigung der relativen Profilstreckung für alle Wälzwege, abhängig von den Korrekturen $\Delta K$, um die tatsächliche Zuordnung von Radien auf dem Abrichter auf Radien auf der Schnecke zu berücksichtigen. Dies gilt analog für die 4-Punkt-Methode, wobei mit dieser die Profilmodifikation in sehr guter Näherung durch ein Polynom dritten Grades beschrieben werden kann.

### Zweiflankiges Abrichten

Das in dieser Erfindung beschriebene Verfahren kann auf das zweiflankige Abrichten übertragen werden. Dazu können beispielsweise die 3 bzw. 4 Wälzwinkel aus der 3- bzw. 4-Punkt-Methode beliebig auf den beiden Flanken verteilt werden. Die Zuordnung der Radien auf dem Abrichter zu Radien auf der Schecke bei der 3-Punkt-Methode kann auf einer der beiden Flanken realisiert werden. Die im zweiflankigen Abrichten erzeugbaren Modifikationen sind gegenüber den einflankig erzeugbaren aufgrund der reduzierten Anzahl betrachteter Punkte pro Flanke eingeschränkt, das zweiflankige Abrichten erlaubt jedoch kürzere Abrichtzeiten. Im Fall einer evolventischen Schnecke lassen sich mit der 4-Punkt-Variante beispielsweise auf diese Weise in gewissen Grenzen Aufmaß und Profilwinkel auf beiden Flanken vorgeben. Die 3-Punkt-Variante erlaubt nur die Vorgabe 3 dieser 4 Werte, der vierte ergibt sich automatisch, kann jedoch über die Geometrie der Schnecke beeinflusst werden. Das zweiflankige Abrichten kann sowohl zur Erzeugung reiner Profilmodifikationen als auch topologischer Modifikationen auf der Schnecke genutzt werden.

Die Anwendung dieser Erfindung muss nicht immer über die ganze Schneckenbreite erfolgen. So können auch nur Teile der Schnecke mit dem der Erfindung zugrunde liegenden Verfahren abgerichtet werden. Es ist auch möglich, mehrere identisch oder unterschiedlich modifizierte Bereiche auf der Schnecke aufzubringen. Solche Bereiche können zum Schruppen und/oder Schlichten genutzt werden. Häufig ist es so, dass zwei benachbarte modifizierte Bereiche nicht direkt aneinander platziert werden können. Dieser dadurch entstehende Abstand zwischen modifizierten Bereichen kann optional als Schruppbereich genutzt werden. So lässt sich eine in mehrere zum Teil modifizierte Bereiche unterteilte Schnecke nahezu vollständig nutzen.

### Ausgleichsrechnung

Wird beim Wälzschleifen einer topologischen Modifikation mittels Diagonalwälzschleifens über die Zuordnung von Punkten auf der Verzahnung zu Punkten auf der Schnecke die benötigte topologische Modifikation ermittelt, so hat diese nicht immer eine Form gemäß Gleichung (23) kombiniert mit einer variabel platzierten Modifikation aus dem Abrichter. Es ist jedoch in bestimmten Fällen möglich, die auf der Schnecke benötigte Modifikation durch eine mit dem hier beschriebenen Verfahren herstellbaren Modifikation hinreichend genau anzunähern. Eine solche Annäherung kann beispielsweise mittels einer Ausgleichsrechnung durchgeführt werden. Bei einer solchen Ausgleichrechnung gehen im Gegensatz zur 3-Punkt-Methode nicht nur 3 Punkte auf dem Profil in die Berechnung der Achskorrekturen $\Delta K$ ein, sondern mindestens 4, sodass man ein überbestimmtes Gleichungssystem erhält. Dieses Gleichungssystem wird dann mittels Optimierens einer Abstandsfunktion gelöst. In einer solchen Abstandsfunktion können die verschiedenen betrachteten Punkte optional unterschiedlich gewichtet werden, bzw. es können verschiedene Abstandsfunktion genutzt werden. Eine solche unterschiedliche Wahl der Abstandsfunktion bzw. der Gewichtung kann dann von Vorteil sein, wenn die Toleranzen der berücksichtigten Punkte nicht alle gleich sind. So können beispielsweise enger tolerierte Punkte stärker gewichtet werden. Eine typische Variante der Ausgleichsrechnung, welche alle Punkte gleich gewichtet, ist die Methode der kleinsten Quadrate, welche als Abstandsfunktion die 2-Norm verwendet. Die Bedingung für die Zuordnung von Radien auf dem Abrichter zu Radien auf der Schnecke kann bei einer Ausgleichsrechnung weiterhin bestehen bleiben, so dass man ein Optimierungsproblem mit Nebenbedingung erhält. Es ist jedoch auch möglich diese Bedingung mit in die Abstandsfunktion aufzunehmen, da eine solche Zuordnung im Allgemeinen ebenfalls toleriert ist. Es ist ebenfalls möglich, mehrere solcher Zuordnungen für verschiedene Radien auf der Schnecke und des Abrichters mit in die Abstandsfunktion aufzunehmen, falls nicht nur eine solche Zuordnung eingehalten werden soll. Dies ist insbesondere dann von Interesse, wenn zweiflankig abgerichtet wird. Eine solche Ausgleichsrechnung ist analog als Erweiterung der anderen hier beschriebenen Methoden möglich, insbesondere der 4-Punkt-Methode oder der Variante mit ein oder zwei beliebigen Zusatzbedingen. Generell können auch immer die Zusatzbedingungen Bestandteil der Abstandsfunktion sein oder als strickt einzuhaltende Nebenbedingung fungieren.

Die Anwendung einer Ausgleichsrechnung ist nicht nur für den allgemeinen Fall der topologischen Modifikation möglich, sondern ebenso für den Spezialfall der reinen Profilmodifikation.

**Konische Schnecken**

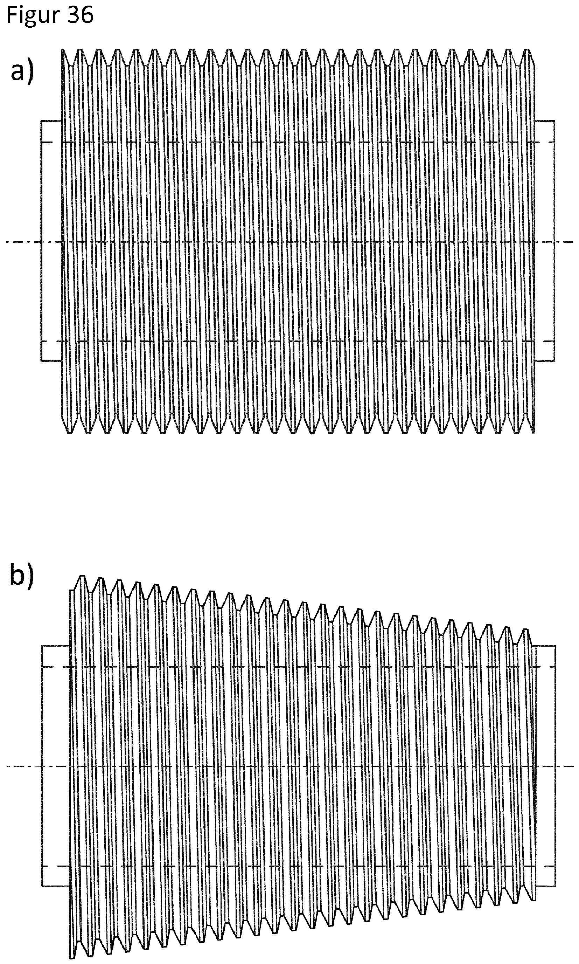

Das hier beschriebene Verfahren ist nicht nur auf zylindrische Schnecken beschränkt, sondern kann direkt auf konische Schnecken übertragen werden. Mit konischen Schnecken sind hier Schnecken mit unterschiedlichen Steigungshöhen auf linker und rechter Flanke gemeint. Eine solche konische Schnecke ist in Figur 36b dargestellt. Im Falle evolventischer Schnecken werden diese als Beveloids bezeichnet. Beim Abrichten konischer Schnecken ist eine über die Schneckenbreite variable Zuordnung von Radien auf dem Abrichter auf Radien auf der Schnecke von besonderer Bedeutung, da auf Grund der Konizität, an jeder Breitenlinienposition die Schnecke über einen anderen Durchmesserbereich abgerichtet wird. Somit befinden sich beispielsweise die Punkte auf der Schnecke, welche den Beginn einer Kopfrücknahme der Verzahnung schleifen, an jeder Breitenposition auf einen anderen Radius.

**Schnecken mit kleinen Durchmessern und/oder großen Gangzahlen**

Wie eingangs erwähnt wurde, können in den meisten Fällen Abrichter, die für einen bestimmten Schneckendurchmesser ausgelegt wurden, für einen großen Bereich an Schneckendurchmessern genutzt werden und erzeugen beim Abrichten die gewünschte Profilmodifikation auf der Schnecke, welche dann die richtige Profilmodifikation auf der Verzahnung erzeugt. Dies funktioniert jedoch nicht mehr, wenn das Verhältnis Schneckendurchmesser zu Modul der zu schleifenden Verzahnung, zu klein wird und/oder die Gangzahl groß ist. Schnecken mit kleinen Durchmessern kommen beispielsweise dann zum Einsatz, wenn ein Wälzschleifen mit einer größeren Schnecke aufgrund einer Störkontur nicht mehr möglich ist. Ein weiterer Anwendungsfall ist das Schleifen großmoduliger Verzahnungen. Da die einsetzbaren Schneckendurchmesser nach oben begrenzt sind, verringert sich das Verhältnis von Schneckendurchmesser zum Modul bei steigendem Modul. Mit der Möglichkeit moderner Verzahnmaschinen hohe Tischdrehzahlen zu realisieren, ist es auch möglich, Schnecken mit größeren Ganzahlen einzusetzen.

Werden solche Schnecken eingesetzt, erzeugt ein Abrichter, der für die Schnecke im Neuzustand ausgelegt wurde, für kleinere Radien einen ungewünschten Profilfehler, im Falle evolventischer Schnecken eine unerwünschte Profilballigkeit, wenn nach einem Verfahren gemäß dem Stand der Technik abgerichtet wird. Liegt dieser Profilfehler bzw. diese Profilballigkeit unterhalb eines Schneckendurchmessers außerhalb der Toleranz, so kann die Schnecke mit dem gegebenen Abrichter nicht weiter abgerichtet werden, wodurch die maximal nutzbare Belagdicke eingeschränkt ist. Dieses Problem kann bisher nur durch Verwendung verschiedener Abrichter für verschiedene Durchmesserbereiche gelöst werden. Mit dem hier beschriebenen Verfahren ist es jedoch möglich, mit nur einem Abrichter die Profilform über einen großen Durchmesserbereich konstant zu halten. Dazu wird der Abrichter als ein nicht zur Schnecke passender Abrichter betrachtet und die Abrichtkinematik so bestimmt, dass die gewünschte Profilform auf der Schnecke erzeugt wird. Vorzugsweise kommt hier bei evolventischen Schnecken die 3-Punkt-Methode zum Einsatz, sodass ein Radius auf dem Abrichter einem Radius auf der Schnecke zugeordnet werden kann. Dieses Verfahren führt jedoch zu einer im Allgemeinen unerwünschten relativen Profilstreckung auf der Verzahnung (siehe Figur 19a). Eine solche relative Profilstreckung ist unkritisch, wenn die im Abrichter eingebrachte Profilmodifikation an maximal einem Durchmesser auf der Verzahnung exakt zugeordnet werden muss. Das ist beispielsweise dann der Fall, wenn nur eine Rücknahme auf dem Profil eingebracht werden soll. Verfügt die Profilmodifikation jedoch über mindestens zwei solcher Durchmesser, beispielsweise eine Kopf- und eine Fußrücknahme, so würden diese beiden Punkte aufgrund der relativen Profilstreckung mit kleiner werdendem Schneckendurchmesser immer dichter zusammen rücken. Liegt für einen Schneckendurchmesser der Abstand dieser beiden Punkte außerhalb der Toleranz, so kann die Schnecke nicht weiter abgerichtet und genutzt werden. Eine Lösung dieses Problems bietet die Möglichkeit, eine Verzahnung mit Schnecken verschiedener Profilwinkel $\alpha_{nFS}$ zu schleifen. Wird ein Abrichter für eine Schnecke mit Durchmesser $d_{so}$ und einem Profilwinkel $\alpha_{nFS0}$ ausgelegt, so kann mit diesem eine Schnecke mit kleinerem Durchmesser und anderem Profilwinkel mit der 3-Punkt-Methode so abgerichtet werden, dass die Profilballigkeit auf der Verzahnung der Sollvorgabe entspricht. Wie die dabei für einen festen Schneckendurchmesser entstehende relative Profilstreckung vom gewählten Profilwinkel abweicht, zeigt Figur 19b. Für alle 3 gezeigten Gangzahlen gibt es einen Nulldurchgang dieser Verläufe, das heiß, der Profilwinkel kann so gewählt werden, dass die relative Profilstreckung 0 ist. Figur 19c zeigt den auf diese Weise für verschiedene Schneckenradien ermittelten Profilwinkel. Die Kombination der 3-Punkt-Methode mit der Wahl geeigneter Profilwinkel erlaubt es so, bei kleinen Schneckendurchmessern und/oder großen Gangzahlen, die Profilform auf der Verzahnung über einen sehr großen Bereich des Schneckendurchmessers nahezu konstant zu halten.

Bei asymmetrischen Verzahnungen kann der Profilfehler bzw. die Profilballigkeit analog korrigiert werden. Soll bei evolventischen Schnecken die relative Profilstreckung ebenfalls korrigiert werden, so ist eine Korrektur über den Profilwinkel der Schnecke beim Schleifen mit zylindrischen Schnecken nur eingeschränkt möglich. Die Berechnung des Profilwinkels, welcher die relative Profilstreckung verschwinden lässt, muss auf linker und rechter Flanke separat durchgeführt werden und führt im Allgemeinen zu einer Schnecke, die nicht mehr zum Wälzschleifen der Verzahnung geeignet ist, da Gleichung (20) nicht mehr für beide Seiten erfüllt ist. Es kann jedoch eine zylindrische Schnecke genutzt werden, deren Profilwinkel auf rechter und linker Flanke so gewählt sind, dass die Verzahnung geschliffen werden kann und die relative Profilstreckung auf linker und rechter Flanke minimiert ist. Alternativ ist die Verwendung einer konischen (Beveloid) Schnecke möglich. Der Konuswinkel dieser Schnecke kann dann so gewählt werden, dass mit der Schnecke die Verzahnung geschliffen werden kann und die relative Profilstreckung auf beiden Flanken 0 ist.

**Mehrhubabrichten**

Um möglichst wirtschaftlich abrichten zu können, ist es von Vorteil, Abrichter zu verwenden, die während des Abrichtens Kontakt vom Schneckenkopf bis zum Schneckenfuß haben. Auch wenn es die Erfindung ermöglicht, die Profilform mit solchen Abrichtern zu beeinflussen, so gibt es Profilmodifikationen, die mit einem universell einsetzbaren Abrichter nicht möglich sind. In der Lohn- und Kleinserienproduktion ist jedoch hohe Flexibilität gefragt. Werden daher Abrichter mit kleineren aktiven Bereichen eingesetzt, so können mit diesen pro Hub nur Teile des Profils abgerichtet werden und in jedem dieser Bereiche kann, das hier beschriebenes Verfahren angewendet werden, insbesondere kann die Modifikation an 3 bzw. 4 Wälzwegen vorgegeben werden. Dies erlaubt eine sehr flexible Gestaltung der Profilmodifikation, erfordert jedoch deutlich weniger Hübe im Vergleich zu einem aus dem Stand der Technik bekannten Zeilenabrichten mit Punktkontakt. Vorzugsweise kann hier die 3-Punkt-Methode eingesetzt werden, um in jedem Hub den aktiven Bereich des Abrichters dem im aktuellen Hub abzurichtenden Bereich zuzuordnen. Figur 20a zeigt beispielhaft eine Profilmodifikation $f_{nFS}$, welche sich aus den 3 Bereichen 30, 31, 32 zusammensetzt. In jedem dieser Bereiche können Profilwinkelabweichung und Profilballigkeit separat vorgegeben werden. Die Bereiche 30 und 32 werden jeweils in einem Hub abgerichtet, das Hauptprofil 31 in 4 Hüben. Die Größe des aktiven Bereiches auf dem Abrichter ist hier so gewählt, dass der Bereich 34 unterhalb des Fußnutzkreises $w_{NfFS}$ der Schecke beginnt. Ein solches Unterschreiten des Fußnutzkreises ist in gewissen Grenzen unkritisch, da dieser Bereich der Schnecke im Allgemeinen beim Wälzschleifen keinen Kontakt mit der Verzahnung hat. Ein entsprechend große Wahl des Abrichters bringt jedoch den Vorteil, dass für das Hauptprofil weniger Hübe benötigt werden, im Vergleich zu einem aktiven Bereich, mit dem der Fußnutzkreis nicht unterschritten würde. Um die Zahl der Hübe noch weiter zu reduzieren ohne dabei an Flexibilität zu verlieren, ist die Möglichkeit einen Abrichter mit mehreren vorzugsweise verschieden großen aktiven Bereichen zu nutzen. Es können dann mit verschiedenen aktiven Bereichen auf dem Abrichter verschiedene Bereiche auf der Schnecke abgerichtet werden. Wählt man beim gerade betrachteten Beispiel einen großen aktiven Bereich des Abrichters für das Hauptprofil, so lässt sich für dieses die Anzahl der Hübe von 4 auf 2 reduzieren (siehe Figur 20b). Ein solcher Abrichter und ein Verfahren, welches eine solche Zuordnung beschreibt sind bereits aus der DE19624842C2 bekannt. Mit dem dort beschrieben Verfahren ist es jedoch nur möglich, in den einzelnen Bereichen den Profilwinkel über die Abrichtkinematik vorzugeben, einen Vorgabe komplexere Modifikationen, welche an 3 bzw. 4 Punkten erreicht werden sollen, ist jedoch nicht möglich. Insbesondere ist auch keine Vorgabe der Profilballigkeit in den einzelnen Bereichen möglich. Die erzielbaren Profilballigkeiten ergeben sich nur aus der in den Abrichter gelegten Modifikation.

Das Abrichten in mehreren Hüben kann nicht nur zum Erzeugen reiner Profilmodifikationen genutzt werden, sondern kann direkt auf das Abrichten topologisch korrigierter Schnecken übertragen werden, analog zum Abrichten in einem Hub. Dabei ist es möglich, die Bereiche, welche während eines Hubs abgerichtet werden, über die Breite der Schnecke zu verschieben. So können beispielsweise die Positionen der Übergänge zwischen den Bereichen 30 und 31 bzw. 31 und 32 in Figur 20a über die Schneckenbreite frei vorgegeben werden. Eine so modifizierte Schnecke kann dann beispielsweise genutzt werden, um mittels Diagonalwälzschleifens auf der Verzahnung einen über die Verzahnbreite variablen Beginn der Kopf- und Fußrücknahmen zu realisieren.

Ein bei mehreren Hüben verwendeter Abrichter kann auch bereits Modifikationen enthalten, die dann gezielt auf der Schnecke platziert werden. So kann ein Abrichter beispielsweise einen Bereich aufweisen, der zum Erzeugen der Kopfrücknahme, eines Teils des Hauptprofils und des Knicks zwischen beiden genutzt wird und einen zweiten Bereich aufweisen, der zum Erzeugen der Fußrücknahme, eines Teils des Hauptprofils und des Knicks zwischen beiden genutzt wird. Wird dann der obere Teil des Profils in einem Hub mit dem ersten Bereich und der untere Teil mit dem zweiten Bereich abgerichtet, so können die Verläufe des Beginns der Kopf- bzw. Fußrücknahme über die Breite der Schnecke unabhängig voneinander vorgegeben werden und am Übergang zwischen dem oberen und unteren Teil des Profils kann ein tangentialer Übergang realisiert werden. Eine so abgerichtete Schnecke kann im Diagonalwälzverfahren genutzt werden, um den Beginn der Kopf- und Fußrücknahme auf der Verzahnung abhängig von der Breitenposition frei vorzugeben.

Beim Mehrhubabrichten ist es prinzipiell auch möglich, dass mehr als nur ein Abrichter zum Einsatz kommt und so einzelne Hübe mit unterschiedlichen Abrichtern durchgeführt werden. Diese können unterschiedliche Modifikationen und/oder Geometrien haben und erlauben so ein noch flexibleres Abrichten.

**Betrachtung maximal erreichbarer Profilmodifikation insbesondere Profilballigkeit und Auswahl geeigneter Abrichter und Schnecken**

Wie bereits weiter oben erwähnt, sind die mit der Erfindung rein über die Abrichtkinematik herstellbaren Modifikationen durch verschiedene Randbedingungen limitiert. Diese sind:

- die rein mathematische Limitierung, welche sich über die Existenz von Nullstellen der im mathematischen Teil konstruierten Funktionen bestimmen lässt.
- die Kollision des Abrichter mit der Gegenflanke
- das Unterhöhlen der Schneckengänge
- die relative Profilstreckung

Alle diese limitierenden Faktoren hängen vor allem von

- der Gangzahl der Schnecke $Z_S$,
- dem Durchmesser der Schnecke $d_s$,
- dem Durchmesser des Abrichters $d_A$,
- und bei evolventischen Profilen vom Profilwinkel der Schnecke $a_{nFS}$

ab. Die Kollision mit der Gegenflanke und die Unterhöhlung hängen zusätzlich noch von der Breite der äußeren Mantelfläche des Abrichters und der Dicke des Schneckengangs ab. Die sich für eine zu schleifende Verzahnung aus diesen geometrischen Größen ergebenden Beträge der maximal möglichen Modifikationen können sich über mehrere Größenordnungen erstrecken. So kann für eine evolventische Verzahnung die maximal mit der Erfindung erzeugbare Profilballigkeit, abhängig von den geometrischen Größen, unterhalb 0.01 $\mu$m oder auch oberhalb von 100 $\mu$m liegen. Dieses Beispiel zeigt auf, wie wichtig ein Verständnis dieser Zusammenhänge und die Auswahl geeigneter Geometrien für die Anwendbarkeit dieses Verfahrens ist. Typische Schnecken und Abrichter die heute zum Einsatz kommen, erlauben oft nur kleine oder gar nur sehr kleine Profilballigkeiten.

Teil dieser Erfindung ist auch eine Berechnungseinheit/Software, welche für eine gegebene modifizierte Verzahnung zu einem gegebenen Satz an geometrischen Größen die Herstellbarkeit mit dem erfindungsgemäßen Verfahren vorzugsweise unter Berücksichtigung der in den Abrichter eingebrachten Modifikation prüft. Soll beispielsweise bei einer evolventischen Verzahnung eine Profilballigkeit von 20 $\mu$m erzeugt werden, es steht jedoch nur ein Abrichter mit einer Modifikation zur Erzeugung von 15 $\mu$m zur Verfügung, so ist zu prüfen, ob für die gegebene Geometrie beispielsweise mit der 3-Punkt-Methode eine Profilballigkeit von 5 $\mu$m erzeugt werden kann. Eine solche Berechnungseinheit/Software kann zusätzlich auch eine Funktion enthalten, um für einen Satz an geometrischen Größen inklusive Abrichtermodifikation zu einer Verzahnung alle mit der Erfindung erzeugbaren Modifikationen zu berechnen. Beispielsweise kann im Falle eines evolventischen Profils die maximale und minimale erzeugbare Profilballigkeit bestimmen. Enthält der Abrichter eine Modifikation, welche als Profilmodifikation auf der Verzahnung abgebildet werden soll und diese Modifikation soll von einer gemäß der Erfindung erzeugten Modifikation überlagert zu werden, so ist optional zusätzlich zu prüfen, ob durch die entstehende relative Profilstreckung die Modifikation noch, im Rahmen der Toleranz, richtig auf der Verzahnung abgebildet wird.

Umgekehrt kann eine Berechnungseinheit/Software auch eine Funktionalität enthalten, um zu einer modifizierten Verzahnung und einem unvollständigen Satz an geometrischen Größen inklusive Abrichtermodifikation, Vorschlagswerte für die übrigen geometrischen Größen zu berechnen. Ist beispielsweise der Abrichter samt Modifikation gegeben sowie die Gangzahl der Schnecke, so können Durchmesser der Schnecke und/oder Profilwinkel der Schnecke so bestimmt werden, dass die geforderte Modifikation mit dem erfindungsgemäßen Verfahren erzeugt werden kann. Verfügt eine solche Berechnungseinheit/Software über eine Datenbank mit verfügbaren Abrichtern und/oder Schneckendurchmessern, so kann die Software alle zur Erzeugung einer bestimmten Modifikation geeigneten Kombinationen ermitteln. Eine solche Datenbank kann zusätzlich oder anstatt der Schneckendurchmesser auch Daten über bereits vorprofilierte verfügbare Schnecken enthalten. Solche Daten würden beispielsweise Gangzahl und/oder Durchmesser und/oder Konizität und/oder Profilwinkel und/oder Steigungshöhe enthalten. Eine solche Funktionalität ist insbesondere für Lohnverzahner von großem Interesse, da auf diese Weise Schnecken und Abrichter für verschiedene Verzahnungen genutzt werden können.

Solche Berechnungen können nicht nur für reine Profilmodifikationen durchgeführt werden, sondern auch für topologische Modifikationen auf der Schnecke. Dazu wird die Berechnung beispielsweise für diskrete Breitenpositionen durchgeführt. Eine solche Berechnung liefert beispielsweise mögliche Funktionswerte für die Funktionen $C_{0FS}(X_{FS})$, $C_{1FS}(X_{FS})$ und $C_{2FS}(X_{FS})$ aus Gleichung (23), und beschreibt so die Menge der erzeugbaren topologischen Modifikationen, insbesondere die minimal und maximal erzeugbare Profilballigkeit entlang der Berührline. Sind diese minimal und maximal benötigten Profilballigkeiten für eine topologische Modifikation bekannt, so können wiederum geeignete geometrische Größen bestimmt werden. Insbesondere für solche topologischen Modifikationen ist eine solche Funktionalität nicht nur in der Lohn- und Kleinserienfertigung von großer Bedeutung, sondern auch bei der Prozessauslegung für Serienproduktionen. Bei der Umkehr der Berechnung zu Bestimmung geeigneter geometrischer Größen und Abrichter wird bevorzugt die kritischste Breitenposition berücksichtigt.

## Verwendung von Schnecken mit ausgesparten bzw. inaktiven Gängen

Die Betrachtung der maximal erzeugbaren Profilmodifikation insbesondere Profilballigkeiten beim einflankigen Abrichten zeigt, dass diese tendenziell größer werden, wenn

- die Gangzahl der Schnecke größer wird
- der Durchmesser der Schnecke kleiner wird
- der Durchmesser des Abrichters kleiner wird
- die Breite der äußeren Mantelfläche des Abrichters kleiner wird
- die Dicke des Schneckengangs kleiner wird
- der Profilwinkel bei evolventischen Schnecken größer wird

wobei die Limitierungen hauptsächlich die Kollision mit der Gegenflanke und das Unterhöhlen sind. Diese Einschränkungen der geometrischen Größen können sich negativ auf den Prozess auswirken. So führen beispielsweise zunehmende Gangzahlen und sinkende Schneckendurchmesser bei gleichbleibender Schnittgeschwindigkeit zu höheren Tischdrehzahlen. Auch wenn moderne Verzahnmaschinen immer höhere Tischdrehzahlen erlauben, so können die nötigen Tischdrehzahlen, die technisch möglichen leicht überschreiten. Zudem können mit Schnecken mit größeren Durchmessern aufgrund der längeren Berührlinie auf der Schnecke beim Wälzschleifen und den dadurch mehr in Eingriff gebrachten Schleifkörner teilweise bessere Rauhheitswerte erreicht werden. Kleinere Durchmesser des Abrichters können dahingehend nachteilig sein, dass sie eine kleinere aktive Fläche aufweisen und somit die Standzeit reduziert wird. Eine Möglichkeit, diese in bestimmten Fällen eintretenden Limitierungen zu umgehen, besteht darin, in der Schnecke einzelne Gänge auszusparen, um auf diese Weise mehr Platz in der Lücke zu schaffen und Kollisionen und Unterhöhlungen zu vermeiden. Soll beispielsweise mit einer zweigängigen Schnecke geschliffen werden, so kann einer der beiden Gänge beim Abrichten zumindest teilweise entfernt werden, wodurch dieser beim Schleifprozess inaktiv wird. Der Fußkreisradius kann gegenüber der ursprünglichen Schnecke optional verkleinert werden. Wie der Schleifprozess mit dieser Schnecke durchzuführen ist, hängt von der Zähnezahl der Verzahnung ab. Hat diese eine ungerade Zähnezahl, so kann der Prozess mit der ursprünglichen Anzahl an Schleifhüben, jedoch mit halbem Vorschub durchgeführt werden, sodass die technologischen Kenngrößen im Wesentlichen unverändert bleiben. Ist die Zähnezahl gerade, so werden alle Hübe doppelt mit dem ursprünglichen Vorschub durchgeführt, wobei vor der Wiederholung jeden Hubs, die Verzahnung um eine Teilung gedreht wird. Dieses Prinzip lässt sich direkt auf höhere Gangzahlen erweitern, wobei es von Vorteil ist, die Gangzahlen so zu wählen, dass die Bearbeitung in einem Hub durchgeführt werden kann, um periodisch auftretende Teilungssprünge zu vermeiden. Es ist dabei auch möglich, mehr als nur die beiden benachbarten Gänge eines verbleibenden Zahns zu entfernen und/oder die Zahl der entfernten Gänge zwischen zwei verbliebenen Gängen nicht immer gleich zu wählen.

## Berücksichtigung von Abweichungen in den Achsen

Bei der Prüfung der Herstellbarkeit einer gegeben Profilmodifikation für einen Satz an geometrischen Größen bzw. bei der Bestimmung eines Satzes geometrischer Größen aus einer gegebenen Profilmodifikation kann es vorteilhaft sein, neben den bisher diskutierten Limitierungen auch die für das Abrichten nötigen Achskorrekturen $\Delta K$ zu betrachten. Die Figuren 8, 9, 10 und 11 zeigen den zum Teil sehr starken Einfluss vier der geometrischen Größen auf die Achskorrekturen. Zu große Korrekturen können sich jedoch nachteilig auswirken. Werden Achsen zu weit verfahren, kann es beispielsweise zu Kollisionen zwischen Schnecke und/oder Abrichter mit Maschinenteilen kommen. Ein weiteres Problem sind die durch die großen Verfahrwege zunehmenden Abweichungen in der Positionierung des Abrichters relativ zur Schnecke. Ja nach gewählten geometrischen Größen, liegen die Beträge der Achskorrekturen um Größenordnungen über den Beträgen der zu erzeugenden Profilmodifikationen und in diesen Fällen deutlich über Achskorrekturen, welche typischerweise bei Verfahren gemäß dem Stand der Technik benötigt werden. Der Einfluss solcher Abweichungen auf die erzeugte Modifikation kann mit der Funktion $f_{nFS}(w_{FS}; \Delta K)$ berechnet werden, wobei $\Delta K$ mit einer Abweichung versehen wird. Sind die, in erste Linie mechanisch bedingten Abweichungen der Achsen, abhängig von den Achskorrekturen bekannt, so lassen sich der Einfluss auf die zu erzeugende Profilmodifikation und der Fehler in der Profilmodifikation berechnen. Die geometrischen Größen können dann so bestimmt werden, dass der Fehler in der Profilmodifikation unterhalb einer gegebenen Toleranz liegt. Diese Betrachtung kann direkt auf die Erzeugung topologischer Modifikationen übertragen werden, wobei hier vorzugsweise die Berechnung für verschiedene Positionen der Berührline durchzuführen ist.

Die gerade betrachteten Abweichungen ergeben sich sowohl aus den Abweichungen der physikalischen Achsen als auch aus anderen mechanischen Abweichungen wie beispielsweise Schiefstehen des Ständers. Verfügt die Maschine über einen Bewegungsapparat, sodass die Berechnung der Koordinaten $B_1,...,B_{N_s}$ nach Gleichung (3) zu einer nicht eindeutigen Lösung führt, so gibt es mehrere Sätze an Koordinaten $B_1, ...,B_{N_s}$, welche zur selben Relativstellung zwischen Schnecke und Abrichter führen. Ein Beispiel einer Maschine, welche über einen solchen Bewegungsapparat verfügt, ist in Figur 22 dargestellt. Ihr Bewegungsapparat kann durch Gleichung (4) beschrieben werden. Eine nicht eindeutige Lösung für die Koordinaten $B_1,...,B_{N_s}$ bedeutet in der Regel, dass verschiedene Achsstellungen zur selben Relativstellung führen. Im Allgemeinen führen diese verschiedenen Lösungen zu unterschiedlichen Abweichungen in der Positionierung des Abrichters relativ zur Schnecke und somit zu unterschiedlichen Abweichungen in den Achskorrekturen $\Delta K$. Verzugsweise wird bei der Anwendung der Erfindung die Lösung ausgewählt, welche zum kleinsten, durch die Abweichungen verursachten Fehler im Profil führt. Optional können zusätzlich noch mögliche Kollisionen zwischen Schnecke und/oder Abrichter und/oder Maschinenteilen mit anderen Maschinenteilen bei der Auswahl einer geeigneten Lösung berücksichtigt werden. Diese Betrachtung kann direkt auf die Erzeugung topologischer Modifikationen übertragen werden, wobei hier bei der Auswahl der Lösung zusätzlich noch kinematische Gesichtspunkte berücksichtig werden können. So können beispielsweise technologisch ungünstige Richtungsumkehrungen einer oder mehrerer Achsen durch geeignete Wahl der Lösung in bestimmten Fällen vermieden werden. Lassen sich die Richtungsumkehrungen und/oder das Einstellen von Achswerten mit großen Abweichungen über die abzurichtenden Breite der Schnecke nicht umgehen, so können sich jedoch in bestimmten Fällen die Positionen der Berührlinie, an denen besonders unsichere Achswerte angefahren werden, beeinflussen. Sind die Toleranzen einer topologischen Modifikation nicht überall gleich, so können die ungünstigen Achswerte mit großen Abweichungen bevorzugt dann eingestellt werden, wenn die Berührlinie Bereiche großer Toleranz überstreicht.

**Berechnung von Abweichungen der Achsen aus Fehlern in der Modifikation**

Sind die Abweichungen der Achsen nicht bekannt, können diese aus dem durch sie verursachten Fehler im Profil rückgerechnet werden. Dazu wird die der Erfindung zugrunde liegende Berechnung genutzt, um aus der tatsächlich erzeugten Profilmodifikation die Achskorrekturen $\Delta K$ zu berechnen. Diese werden mit den in der Maschine beim Abrichten eingestellten Achskorrekturen verglichen und aus der Differenz ergibt sich die Abweichung der Achswerte. Wird eine topologische Modifikation abgerichtet, so kann diese Berechnung für verschiedene Positionen der Berührline durchgeführt werden. Auf diese Weise erhält man die Abweichungen für verschiedene Achswerte. Sind die Abweichungen bekannt, können die Achswerte bei weiteren Abrichtvorgängen entsprechend korrigiert und so die Profilfehler minimiert werden.

Die hierfür notwendige Kenntnis über tatsächlich erzeugten Profilmodifikationen auf der Schnecke sind im Allgemeinen nicht direkt bekannt und auch nicht direkt messbar. Sie bilden sich jedoch in der geschliffenen Verzahnung ab, welche vermessen werden kann und aus deren Profilmodifikation die Profilmodifikation auf der Schnecke berechnet werden kann.

Dies funktioniert beim Diagonalwälzschleifen mit einer topologisch modifizierten Schnecke analog, wobei hier die Kenntnis über die Zuordnung von Punkten auf der Verzahnung zu Punkten auf der Schnecke von Nöten ist. Eine solche Zuordnung ist in dem Fall jedoch im Allgemeinen bekannt, da diese bereits zur Bestimmung der topologischen Modifikation der Schnecke benötigt wird.

**Gezielte Nutzung der Profilstreckung**

Der Effekt der Profilstreckung kann auch gezielt genutzt werden. Soll beispielsweise eine Schnecke mit einem modifizierten Abrichter abgerichtet werden, die in den Abrichter eingebrachte Modifikation jedoch eine gestreckte oder gestauchte Profilmodifikation auf der Schnecke erzeugen würde, so kann das erfindungsgemäße Verfahren eingesetzt werden, um die relative Profilstreckung so einzustellen, dass die auf der Schnecke erzeugte Profilmodifikation richtig gestreckt ist. Wird eine relative Profilstreckung erzeugt, so entsteht beispielsweise bei evolventischen Profilen gleichzeitig eine Profilballigkeit. Wie groß diese bei gegebener relativer Profilstreckung ist, hängt vor allem von den geometrischen Größen der Schnecke und des Abrichters ab (siehe Figur 13). Diese Profilballigkeit kann in bestimmten Fällen so klein sein, dass sich in wesentlichen nur eine Streckung, jedoch keine Überlagerung mit einer Profilballigkeit ergibt. Um dies zu erreichen, kann die Schneckengeometrie entsprechend gewählt werden. Es ist jedoch auch möglich, die Schneckengeometrie so zu wählen, dass nicht nur die Profilstreckung, sondern auch die durch die Abrichtkinematik erzeugte Profilmodifikation, insbesondere die Profilballigkeit im Falle von Evolventenverzahnungen, entsprechend einer Vorgabe erreicht wird. Dies kann auch auf das Abrichten topologisch modifizierter Schnecken übertragen werden, wodurch es möglich wird, mit einer geeigneten Schnecken- und Abrichtergeometrie, gezielt die Profilstreckung über die Schneckenbreite zu variieren und gleichzeitig nur eine vernachlässigbar kleine Profilballigkeit zu erzeugen. Es ist auch möglich, gezielt die Profilstreckung und die Profilballigkeit über die Schneckenbreite zu variieren, wobei beide aneinander gekoppelt sind. Mit einer exakt abgestimmten Schnecken- und Abrichtergeometrie (insbesondere Gangzahl, Profilwinkel, beide Durchmesser) kann diese Kopplung wie benötigt eingestellt werden. Die in erster Näherung lineare Kopplung ist in Figur 13 dargestellt. Die Profilstreckung und beispielsweise die Profilmodifikation wirken sich dabei für jede Breitenposition entlang der aktuellen Berührlinie aus. Insbesondere bei asymmetrischen Verzahnungen und/oder wenn die Kopplung für linke und rechte Flanke verschieden sein soll, kann eine konische Schnecke verwendet werden und zusätzlich eine Variation des Konuswinkels zum getrennten Einstellen der Kopplung auf linker und rechten Flanke genutzt werden. Mit kleiner werdendem Schneckendurchmesser verändert sich jedoch diese Kopplung, was sich durch eine entsprechend abgestimmte Anpassung des Profilwinkels wieder korrigieren lässt.

## 2. Beschreibung Diagonalwälzschleifen

Der zweite Teil der Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen

- Schälwälzfräsen

- Schaben

- Wälzschleifen

- Honen

Wird das Verfahren beim Wälzschleifen angewandt, können sowohl abrichtbare als auch nicht abrichtbare Werkzeuge eingesetzt werden. Das Abrichten kann mit einer Profilrolle ein-oder zweiflankig erfolgen, aber ebenso ein- oder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfah ren).

Größen, die für linke und rechte Flanken unterschiedlich sind bzw. sein können, werden mit dem Index $F$ versehen. $F$ kann $l$ (links) oder $r$ (rechts) sein. Gleichungen, in den der Index $F$ vorkommt, gelten immer für linke und rechte Flanken. Die hier betrachteten Evolventenverzahnungen werden abhängig von den Grundkreisradien $(r_{br}, r_{bl})$ und den Grundschrägungswinkeln $(\beta_{br}, \beta_{bl})$ in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \Box_{bl}}{r_{bl}}$

3. Konisch symmetrisch: $\beta_{br} \neq \beta_{bl}$ und $r_{br} \cos \beta_{br} = r_{bl} \cos \beta_{bl}$

4. Konisch asymmetrisch: $\beta_{br} \# \beta_{bl}$ und $r_{br} \cos \beta_{br} \# r_{bl} \cos \beta_{bl}$ $\dfrac{\tan \beta_{br}}{r_{br}} \neq \dfrac{\tan \beta_{\Box l}}{r_{bl}}$

Im Folgenden wird die Klasse der topologischen Oberflächenmodifikationen definiert, welche mit dem hier zunächst beschriebenen Verfahren erzeugt werden können. Dazu wird die übliche Beschreibung topologischer Oberflächenmodifikationen betrachtet. Diese werden beschrieben über eine Funktion $f_{Ft}(w_F, z_F)$, wobei $w_F$ der Wälzweg und

$z_F$ die Position in Breitenlinienrichtung ist. Eine topologische Oberflächenmodifikation gehört zur hier betrachten Klasse an Oberflächenmodifikationen, wenn Funktionen $F_{Ftc}$, $F_{FtL}$ und $F_{FtQ}$ existieren, mit

$$f_{Ft}(w_F, z_F) = F_{FtC}(X_F) + F_{FtL}(X_F) \cdot w_F + F_{FtQ}(X_F) \cdot w_F^2 \ , \tag{25}$$

mit

$$X_F = w_F \sin \rho_F + z_F \cos \rho_F \ , \tag{26}$$

und $f_{Ft}(w_F, z_F)$ die Oberflächenmodifikation exakt oder zumindest näherungsweise beschreibt. Jedes $X_F$ definiert eindeutig eine Gerade auf der Flanke in den Koordinaten $w_F$ und $z_F$.

Anschaulich gesprochen bedeutet die Definition der Oberflächenmodifikation, dass diese entlang jeder durch ein $X_F$ gegeben Gerade die Form einer Parabel (Polynom zweiten Grades) hat oder durch diese angenähert werden kann. Die Form der Parabel und somit die Koeffizienten des Polynoms können für jede solche Gerade verschieden sein. Die Koeffizienten werden, abhängig von $X_F$ durch die Funktionen $F_{Ftc}$, $F_{FtL}$ und $F_{FtQ}$ gegeben. Mit eingeschlossen sind hierbei auch die Fälle, in denen einzelne oder alle Koeffizienten für gewisse $X_F$ gleich Null, insbesondere auch die Fälle, in denen die Parabel für bestimmte $X_F$ zu einer linearen oder konstanten Funktion entartet. Auch mit eingeschlossen ist der spezielle Fall, in dem $F_{FtQ} = 0$ für alle $X_F$. In diesem Fall ist die Oberflächenmodifikation entlang der durch $X_F$ definierten Geraden durch eine lineare Funktion gegeben, wobei auch hier die Funktion für gewisse $X_F$ zu einer konstanten Funktion entarten kann.

Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Für den Spezialfall $\rho_F = \pm \frac{\pi}{2}$, ist die Oberflächenmodifikation eine reine Profillinienmodifikation.

Bisher ist kein Verfahren bekannt, mit dem mit einem der hier betrachteten Fertigungsverfahren die hier betrachteten Oberflächenmodifikation abweichnungsfrei oder mit ausreichender Näherung hergestellt werden können, mit Ausnahme einiger Sonderfälle.

Mit abweichnungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken $E_F$, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$
$$= \begin{pmatrix} r_{bF} \cdot \sin\left( s_F \cdot \left( \frac{w_F}{r_{bF}} + \eta_{bF} \right) - \frac{z_F \cdot \tan(\beta_{bF})}{r_{bF}} \right) - s_F \cdot w_F \cdot \cos\left( s_F \cdot \left( \frac{w_F}{r_{bF}} + \eta_{bF} \right) - \frac{z_F \cdot \tan(\beta_{bF})}{r_{bF}} \right) \\ r_{bF} \cdot \cos\left( s_F \cdot \left( \frac{w_F}{r_{bF}} + \eta_{bF} \right) - \frac{z_F \cdot \tan(\beta_{bF})}{r_{bF}} \right) + s_F \cdot w_F \cdot \sin\left( s_F \cdot \left( \frac{w_F}{r_{bF}} + \eta_{bF} \right) - \frac{z_F \cdot \tan(\beta_{bF})}{r_{bF}} \right) \\ z_F \end{pmatrix}$$
$$\tag{27}$$

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkzeug so abstimmen, dass auf dem Werkstück die gewünschte Modifikation erzeugt wird.

Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die x-Achse. Analog für *y* und *z*
- $T_x(\nu)$ Translation um die Strecke $\nu$ in *x*-Richtung. Analog für $\gamma$ und *z*
- $H(A_1,...,A_N)$ allgemeine Transformation beschreibbar durch eine homogene Matrix mit insgesamt *N* Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der *z*-Achse zusammen. Die Verzahnungsmitte liegt bei *z* = 0.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \qquad (28)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- *d:* Achsabstand (Werkzeug/Werkstück)
- *y:* Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \qquad (29)$$

- $\varphi_1$: Drehwinkel Werkzeug.
- $\square_2$: Drehwinkel Werkstück.
- $z_{V1}$: Vorschub des Werkzeug (auch Shiftposition genannt).
- $z_{V2}$: Axialvorschub des Werkstücks.
- *d:* Maß für Achsabstand (Werkzeug/Werkstück)
- *y:* Achskreuzwinkel (Werkzeug/Werkstück)
- $\vartheta_1$: Konuswinkel Werkzeug
- $r_{w1}$: Wälzkreisradius des Werkzeugs

**Kinematische Kette für zylindrisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (30)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- d: Maß für Achsabstand (Werkzeug/Werkstück)
- *y:* Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$K_R = R_z(-\phi_1) \cdot T_y(r_{w1}) \cdot R_x(\vartheta_1) \cdot T_z(-z_{v1}) \cdot T_y(d) \cdot R_y(\gamma) \cdot T_z(z_{v2}) \cdot R_x(-\vartheta_2) \cdot T_y(-r_{w2}) \cdot R_z(\phi_2) \qquad (31)$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- *d:* Maß für Achsabstand (Werkzeug/Werkstück)
- *y:* Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \dots, A_{N_s}) \text{ mit } N_s \geq 1 \qquad (32)$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \dots, A_{N_S}$ existieren, mit

$$H(A_1, \dots, A_{N_s}) = K_R \qquad (33)$$

Die Berechnung der Koordinaten $A_1, \dots, A_{N_s}$ kann mittels einer Koordinatentransformation durchgeführt werden.
Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \qquad (34)$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \qquad (35)$$

Figur 22 zeigt schematisch eine Verzahnmaschine mit einem durch $H_{Bsp1}$ beschriebenen Bewegungsapparat.

Während des Bearbeitungsprozesses wird die $z_{v2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.

Wird im Diagonalwälzverfahren bearbeitet, wird zusätzlich die $z_{v1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.

Im weiteren Verlauf wird jedoch auch für zylindrische Werkzeuge bzw. Werkstücke für $z_{v1}$ bzw. $z_{v2}$ der Begriff Vorschub verwendet.

Wird mit einem konstanten Diagonalverhältnis geschliffen, so ist $z_{v1}$ eine Funktion von $z_{v2}$ und es gilt folgender Zusammenhang:

$$z_{V1}(z_{V2}) = K_{Z_{V1}} \cdot z_{V2} + z_{V01} \qquad (36)$$

$K_{Z_{V1}}$ ist hierbei das Diagonalverhältnis und $z_{v01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{Z_{V1}} \neq 0$ wird vom Diagonalwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{v1}$ und $z_{v2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg ($w$) und der Position in Breitenlinienrichtung ($z$) in Abhängigkeit der Vorschubpositionen $z_{v1}$ und $z_{v2}$.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben ebenfalls zumindest näherungsweise eine Modifikation gemäß Gleichung (25). Diese Art der Modifikation ist insbesondere bei abrichtbaren Schleifschnecken sehr vorteilhaft, da sich diese beim Abrichten mit einer Abrichtscheibe auf der Schnecke erzeugen lässt. Ein Verfahren zum Abrichten einer Schnecke mit einer solchen Oberflächenmodifikation wird ersten Teil dieser Anmeldung beschrieben.

Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \sin\rho_{F1} + z_{F1} \cos\rho_{F1} = X_{F1} \ . \qquad (37)$$

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

Eine Modifikation $f_{nF1}$ an einem Punkt auf der Schnecke, definiert in Normalenrichtung auf der Schneckengangoberfläche führt zu einer Modifikation $f_{nF2} = -f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos\beta_{bF} \qquad (38)$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (25) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{v1}$ und $z_{v2}$ beschrieben. Dieser Verlauf hängt von den Grundkreisradien und Grundschrägungswinkeln des Werkstücks und der Schnecke sowie vom Achsabstand $d$ und dem Achskreuzwinkel $\gamma$ ab. Die Relative Lage von Werkstück zu Schnecke wird bei dieser Betrachtung durch Gleichung (28) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1} \tag{39}$$

$$z_{F2} = C_{Fw2} \cdot w_{F2} - z_{V2} + C_{Fc2} \tag{40}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{41}$$

$$C_{F\square 1} = C_{Fc1}(\beta_{bF1}, \beta_{bF2}, r_{bF1}, d, \gamma) \tag{42}$$

$$C_{Fw2} = C_{Fw2}(\beta_{bF2}) \tag{43}$$

$$C_{Fc2} = C_{Fc2}(\beta_{bF1}, \beta_{bF2}, r_{bF2}, d, \gamma) \tag{44}$$

Diese Relation zeigt auf, dass es einen linearen Zusammenhang zwischen $z_F$, $w_F$ und $z_v$ sowohl für Schnecke aus auch für Werkstück gibt.

Betrachtet man im Herstellprozesses alle Punkte auf dem Werkstück mit einem festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{45}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fc} = \hat{C}_{Fc}(\beta_{bF1}, r_{bF1}, \beta_{bF2}, r_{bF2}, d, \gamma) \tag{48}$$

Die gerade vorgestellten Relationen folgen direkt aus einer analytischen Berechnung der Berührpunkte zweier Evolventenverzahnungen, welche gemäß der kinematischen Kette aus Gleichung (28) zueinander orientiert sind.

Die Grundidee der Erfindung liegt nun darin, die obigen Beziehungen, zusammen mit dem konstanten Diagonalverhältnis aus Gleichung (36) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (25) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (39) und (40) nach $z_{v1}$ bzw. $z_{v2}$ aufgelöst und in Gleichung (36) eingesetzt, anschließend Gleichung (7) für Schnecke und Werkstück genutzt um $z_{F1}$ und $z_{F2}$ zu eliminieren und mit Gleichung (45) $w_{F1}$ ersetzt. Dies führt zu einer Relation der Form:

$$\bar{C}_{Fc} + \bar{C}_{Fw2} \cdot w_{F2} = 0 \,, \tag{49}$$

welche für alle $w_{F2}$ gelten muss. $\hat{C}_{Fw2}$ hat unter anderem eine Abhängigkeit von $K_{Zv1}$. $\overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{Zv1}$ sowohl für linke als auch für rechte Flanke berechnen, sowie $X_{F2}$ als Funktion von $X_{F1}$, ebenfalls für linke und rechte Flanke. $K_{Zv1}$, wie in Gleichung (36) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{I2} = \rho_{r2}$ führt diese Berechnung bei einer symmetrischen Verzahnung zu gleichen Diagonalverhältnissen $K_{Zv1}$ für linke und rechte Flanke. Somit ist ein zweiflankiges, abweichungsfreies Wälzschleifen möglich.

Ist jedoch $\rho_{I2} \neq \rho_{r2}$ und/oder die Verzahnung asymmetrisch, so führt die Berechnung im Allgemeinen zu unterschiedlichen Diagonalverhältnissen $K_{Zv1}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{Zv1}$ einzustellen sind. Gibt es ein Diagonalverhältnis $K_{Zv1}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

**Konisches Werkzeug und zylindrisches Werkstück**

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (29) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (25) im Diagonalwälzverfahren verwendet, um auf dem Werkstück eine Modifikation ebenfalls gemäß Gleichung (25) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fc1} \tag{50}$$

$$z_{F2} = C_{Fw2} \cdot w_{F2} + C_{Fz_{V1}2} \cdot z_{V1} - z_{V2} + C_{Fc2} \tag{51}$$

Die hier eingeführten Koeffizienten $C_{Fw1}$, $C_{Fc1}$, $C_{Fw2}$, $C_{Fzv11}$, $C_{Fzv12}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_1) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_1) \tag{55}$$

$$C_{Fz_{V1}1} = C_{Fz_{V1}1}(\beta_{bF1}, \beta_{bF2}, r_{bF1}, d, \gamma, \vartheta_1) \tag{56}$$

$$C_{Fz_{V1}2} = C_{Fz_{V1}2}(\beta_{bF1}, \beta_{bF2}, r_{bF2}, d, \gamma, \vartheta_1) \tag{57}$$

Gleichung (45) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fc} = 0 \tag{58}$$

Die hier eingeführten Koeffizienten $C_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{61}$$

$$\hat{C}_{Fc} = \hat{C}_{Fc}(\beta_{bF1}, r_{bF1}, \beta_{bF2}, r_{bF2}, d, \gamma, \vartheta_1) \tag{62}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (25) an, führt dies zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Zv1}$ sowie die Berechnung von $X_{F2}$ als Funktion von $X_{F1}$, jeweils für linke und rechte Flanke, jedoch hat $K_{Zv1}$ jetzt zusätzlich eine Abhängigkeit von $\vartheta_1$. Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin mit einander kämmen und so ein Schraubwälzgetriebe bilden können. Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Zv1}$ auf linker und rechter Flanke unterschiedlich. Diese unterschiedliche Beeinflussung erlaubt es, ein $\vartheta_1$ zu bestimmen, sodass $K_{Zv1}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $\gamma$ den Wert $K_{Zv1}$. Somit können zusätzlich zum Konuswinkel diese Größen variiert werden, um gleiches $K_{Zv1}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

## Zylindrisches Werkzeug und konisches Werkstück

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (25) aufweist. Schnecke und Werkstück bilden wieder ein Schraubwälzgetriebe, dessen Kinematik durch Gleichung (30) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V2}1} \cdot z_{V2} + C_{Fc1} \tag{63}$$

$$z_{F2} = C_{Fw2} \cdot w_{F2} + C_{Fz_{V2}2} \cdot z_{V2} + C_{Fc2} \tag{64}$$

Die hier eingeführten Koeffizienten $C_{Fw1}$, $C_{Fc1}$, $C_{Fw2}$, $C_{Fzv22}$, $C_{Fzv21}$ und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_2) \tag{68}$$

$$C_{Fz_{V2}2} = C_{Fz_{V2}2}(\beta_{bF1}, \beta_{bF2}, r_{bF2}, d, \gamma, \vartheta_2) \tag{69}$$

$$C_{Fz_{V2}1} = C_{Fz_{V2}1}(\beta_{bF1}, \beta_{bF2}, r_{bF1}, d, \gamma, \vartheta_2) \tag{70}$$

Gleichung (45) wird ersetzt durch:

$$\hat{C}_{Fw1} \cdot w_{F1} + \hat{C}_{Fw2} \cdot w_{F2} + \hat{C}_{Fz_{V2}} \cdot z_{V2} + \hat{C}_{Fc} = 0 \tag{71}$$

Die hier eingeführten Koeffizienten $C_{Fw1}$, $C_{Fw2}$, $C_{FV_{V2}}$ und $\hat{C}_{Fc}$ haben folgende Abhängigkeiten:

$$\hat{C}_{Fw1} = \hat{C}_{Fw1}(\beta_{bF1}) \tag{72}$$

$$\hat{C}_{Fw2} = \hat{C}_{Fw2}(\beta_{bF2}) \tag{73}$$

$$\hat{C}_{Fz_{V2}} = \hat{C}_{Fz_{V2}}(\beta_{bF1}, r_{bF1}, \beta_{bF2}, r_{bF2}, \gamma, \vartheta_2) \tag{74}$$

$$\hat{C}_{Fc} = \hat{C}_{Fc}(\beta_{bF1}, r_{bF1}, \beta_{bF2}, r_{bF2}, d, \gamma, \vartheta_2) \tag{75}$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{z_{V1}}$ sowie die Berechnung von $X_{F2}$ als Funktion von $X_{F1}$, jeweils für linke und rechte Flanke, jedoch hat $K_{z_{V1}}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{z_{V1}}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{ZV1}$, sodass $\rho_{F2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

**Konisches Werkzeug und konisches Werkstück**

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (31) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V_1}1} \cdot z_{V1} + C_{Fz_{V_2}1} \cdot z_{V2} + C_{Fc1} \tag{76}$$

$$z_{F2} = C_{Fw2} \cdot w_{F2} + C_{Fz_{V_1}2} \cdot z_{V1} + C_{Fz_{V_2}2} \cdot z_{V2} + C_{Fc2} \tag{77}$$

Die hier eingeführten Koeffizienten $C_{Fw1}$, $C_{Fc1}$, $C_{Fw2}$, $C_{FzV_2}2$, $C_{FzV_21}$, $C_{FzV_12}$, $C_{FzV_11}$ und $C_{Fc2}$ haben folgende Abhängigkeiten:

$$C_{Fw1} = C_{Fw1}(\beta_{bF1}) \tag{78}$$

$$C_{Fc1} = C_{Fc1}(\beta_{bF1}, \beta_{bF2}, r_{bF1}, d, \gamma, \vartheta_1, \vartheta_2) \tag{79}$$

$$C_{Fw2} = C_{Fw2}(\beta_{bF2}) \tag{80}$$

$$C_{Fc2} = C_{Fc2}(\beta_{bF1}, \beta_{b\square2}, r_{bF2}, d, \gamma, \vartheta_1, \vartheta_2) \tag{81}$$

$$C_{Fz_{V_2}2} = C_{Fz_{V_2}2}(\beta_{bF1}, \beta_{bF2}, r_{bF2}, d, \gamma, \vartheta_1, \vartheta_2) \tag{82}$$

$$C_{Fz_{V_2}1} = C_{Fz_{V_2}1}(\beta_{bF1}, \beta_{bF2}, r_{bF1}, d, \gamma, \vartheta_1, \vartheta_2) \tag{83}$$

$$C_{Fz_{V_1}2} = C_{Fz_{V_1}2}(\beta_{bF1}, \beta_{bF2}, r_{bF2}, d, \gamma, \vartheta_1, \vartheta_2) \tag{84}$$

$$C_{Fz_{V_1}1} = C_{Fz_{V_1}1}(\beta_{bF1}, \beta_{bF2}, r_{bF1}, d, \gamma, \vartheta_1, \vartheta_2) \tag{85}$$

Gleichung (45) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{86}$$

Die hier eingeführten Koeffizienten $C_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{87}$$

$$\hat{C}_{Fw2} = \hat{C}_{Fw2}(\beta_{bF2}) \tag{88}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{89}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{90}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{91}$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizientenvergleich ermöglicht auch hier wieder die Berechnung von $K_{ZV1}$ sowie die Berechnung von $X_{F2}$ als Funktion von $X_{F1}$, jeweils für linke und rechte Flanke, jedoch hat $K_{ZV1}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch der Grundkreisradien und Grundschrägungswinkel das Diagonalverhältnis $K_{ZV1}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{ZV1}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{f1}(X_{F1})$ gegeben durch:

$$F_{Ft1}(X_{F1}) = -\frac{\cos \beta_{bF2}}{\cos \beta_{bF1}} \cdot F_{Ft2}(X_{F2}(X_{F1})) \tag{92}$$

$F_{Ft2}(X_{F2})$ beschreibt die Modifikation auf dem Werkstück gemäß Gleichung (25).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

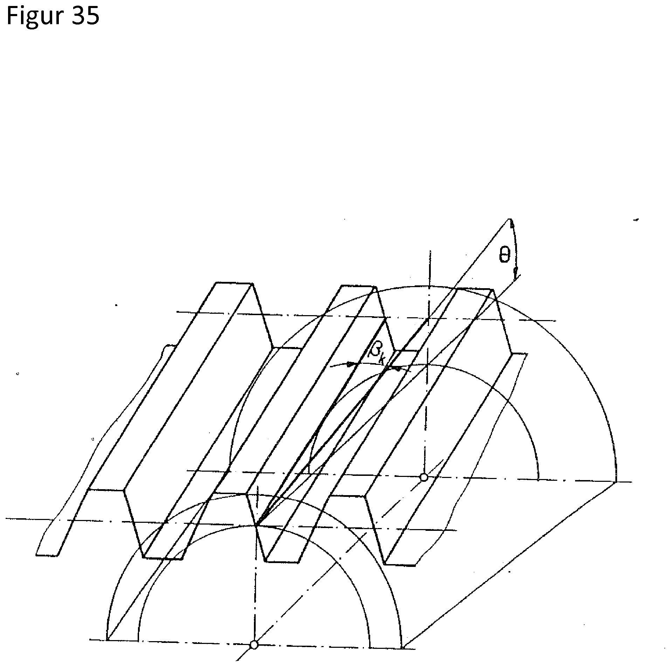

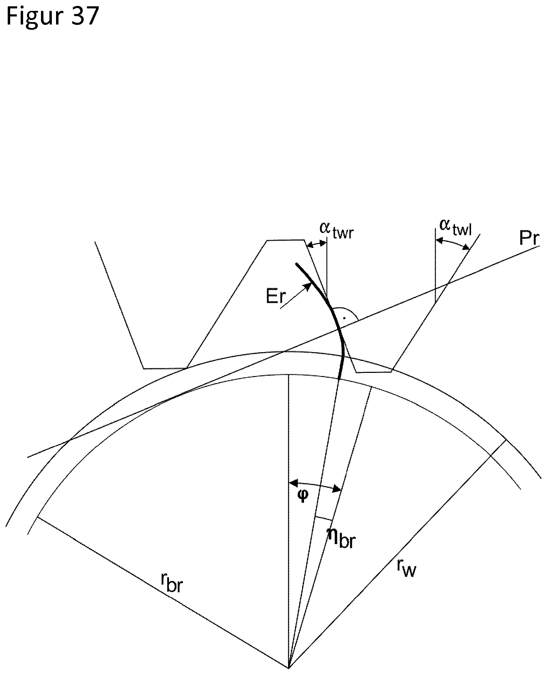

Figur 37 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 35). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über w und z aus der Parametrisierung in Gleichung (27), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_v$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_v$ nicht in axialer Richtung, sondern gegenüber dieser um den Konuswinkel $\vartheta$ gekippt. Die für die Berechnung der Drehwinkelkorrektur nötige Steigungshöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, z, $z_v$ und $\varphi$.

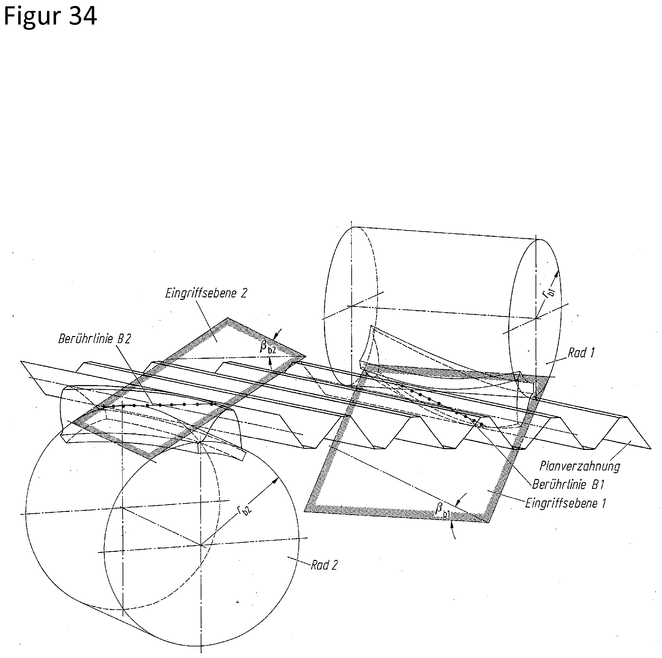

Werden zwei Verzahnungen in einem Schraubwälzgetriebe gepaart, so müssen deren beiden Zahnstangen zu jeder Zeit deckungsgleich sein, wie in Figur 34 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos\beta_{bF1} = m_{bF2} \cdot \cos\beta_{bF2} \tag{93}$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten ($w_{F2}$, $z_{F2}$) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

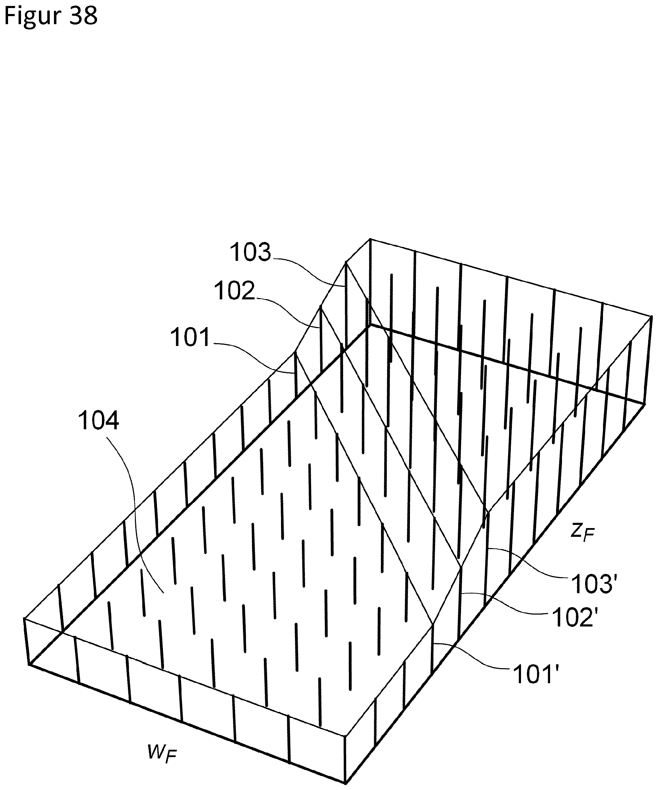

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shift-position $z_{V2}$ des Werkstücks abgebrochen, so haben, für einen gegebenen Radius auf der Schnecke nur die Vektoren annähernd dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 38). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (39) bzw. (40), beispielsweise mittels einer Ausgleichsrechnung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (45), beispielsweise mittels einer Ausgleichsrechnung bestimmen.

Ist die Schnecke konisch und das Werkstück zylindrisch, so muss der Kontaktpfad für mindestens zwei verschiedene Vorschübe $z_{v1}$ bestimmt werden, um zusätzlich die Koeffizienten vor $z_{v1}$ in den Gleichungen (50), (51) und (58) zu bestimmen. Analog müssen mindestens zwei verschiedene Vorschübe $z_{v2}$ betrachtet werden, wenn Werkstück konisch und Schnecke zylindrisch sind. Sind Werkstück und Schnecke konisch, so müssen die Kontakpfade für mindestens zwei Vorschübe $z_{v1}$ und mindestens zwei Vorschübe $z_{v2}$ betrachtet werden, um alle Koeffizienten aus den Gleichungen (76), (77) und (86) zu bestimmen.

**Wahl der Makrogeometrie der Schnecke und des Abrichters**

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten z-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

Weiterhin sind bei der Wahl der Makrogeometrie der Schnecke, im Falle der Nutzung abrichtbarer Werkzeuge, die Aspekte aus dem ersten Teil dieser Anmeldung zu berücksichtigen. So ist die Makrogeometrie so zu wählen, dass die erforderliche Oberflächenmodifikation auf der Schnecke über den Abrichtprozess erzeugt werden kann. Hierbei ist insbesondere sicherzustellen, dass entlang jeder Berührgeraden auf der Schnecke mit dem Abrichter, welche den aktiven Bereich der Schnecke berührt, die geforderte Balligkeit erreicht werden kann. Wird ein zweiflankiges Abrichten eingesetzt, so ist zu berücksichtigen, ob die erforderlichen topologischen Modifikationen auf der Schnecke auf linker und rechter Flanke beispielsweise mit dem Verfahren aus dem ersten Teil dieser Anmeldung erzeugt werden können. Besonders relevant ist dabei der Fall, bei dem nur konstante und lineare Anteile der Modifikation ($F_{Ftc}$ und $F_{FtL}$) entlang der Berührlinie zwischen Abrichter und Schnecke benötigt werden. Solche Modifikationen lassen sich mit der 4-Punkt Methode in gewissen Grenzen fertigen. Inwieweit die linearen Anteile $F_{FtL}$ dabei auf linker und rechter Flanke dabei frei gewählt werden können, hängt stark von der Makrogeometrie der Schnecke ab, insbesondere von Durchmesser, Gangzahl, Konuswinkel und Profilwinkel und zusätzlich vom Durchmesser des Abrichters. Die 4-Punkt-Methode erlaubt es zu bestimmen, ob die gewünschte topologische Modifikation für bestimmte Makrogeometrien erzeugt werden können und erlaubt so, geeignete Makrogeometrien zu bestimmen.

**Nicht konstantes Diagonalverhältnis**

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

Figur 23 zeigt am Beispiel zweier Dreiecksförmigen Endrücknahme eine Aufteilung in modifizierte (141 und 141') und nicht modifizierte (142, 142', 142") Bereiche. Während der Verlauf des Kotaktpunkts (143 bzw. 143') den Bereich 142 überstreicht, kommen nur nicht modifizierte Bereiche der Schnecke in Eingriff. In diesem Bereiche kann das Diagonalverhältnis frei gewählt werden. Wird ein Bereich oberhalb 143 oder unterhalb 143' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

Figur 24 zeigt am Beispiel zweier Dreiecksförmigen Endrücknahme, welche in unterschiedliche Richtungen verlaufen, eine Aufteilung in modifizierte (151 und 151') und nicht modifizierte (152, 152', 152") Bereiche. Die Richtungen $\rho_{F2}$ (150 bzw. 150') der Modifikationen gemäß Gleichung (25) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (153 bzw. 153') den Bereich 152 überstreicht, kann das Diagonalverhältnis frei gewählt werden. Um die Modifikation abweichnungsfrei herstellen zu können, müssen die Geraden 153 und 153' auf gleicher Höhe liegen oder 153 über 153'. Liegt jedoch 153' über 153 so verläuft der Kontaktpunkt sowohl über den Bereich 151 als auch über den Bereich 151', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (36) durch eine, im Allgemeinen nicht lineare Variante ersetzt:

$$z_{V1}(z_{V2}) = F_{Z_{V1}}(\square_{V2}) \tag{94}$$

Hierbei ist $F_{Z_{V1}}$ eine beliebige stetige Funktion, welche eine Relation zwischen $z_{v1}$ und $z_{v2}$ beschreibt. Das Diagonalverhältnis ist durch die Ableitung von $F_{Z_{V1}}(z_{V2})$ nach $z_{V2}$ gegeben und somit im Allgemeinen nicht konstant. Ist $F_{Z_{V1}}$ nicht linear, so werden Geraden auf der Schnecke im $w$-$z$-Diagramm nicht mehr auf Geraden auf dem Werkstück im w-z-Diagramm abgebildet. Die Kurve, welche den Verlauf der Punkte im $w$-$z$-Diagramm auf dem Werkstück beschreibt, welche auf eine durch $X_{F1}$ definierte Gerade auf der Schnecke abgebildet werden, kann durch eine Funktion $z_{F2}(w_{F2}, X_{F1})$ beschrieben werden. Für den allgemeinsten Fall eines konischen Werkstücks und einer konischen Schnecke, erhält man eine Relation (R20) zwischen $F_{ZV1}(z_{V2})$, $z_{F2}(w_{F2}, X_{F1})$ , $w_{F2}$ und $X_{F1}$, indem man das Gleichungssystem aus Gleichung (76) und (77) nach $z_{v1}$ und $z_{v2}$ auflöst, die beiden Vorschübe in Gleichung (94) einsetzt und anschließend $z_{F1}$ und $w_{F1}$ mit Hilfe der Gleichungen (37) und (86) ersetzt. Mit dieser Relation lässt sich für eine gegebene Funktion $F_{ZV1}$ für jedes $X_{F1}$ der durch $z_{F2}(w_{F2}, X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$ gegebenem Verlauf $z_{F2}(w_{F2}, X_{F1})$ die Funktion $F_{ZV1}(z_{V2})$ bestimmt werden. Des Weiteren kann aus der Relation (R20) eine Funktion $F_{X_{F1}}(w_{F2}, z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

Wird für ein $X_{F1}$ nur der Teil des Verlaufs betrachtet, welcher auf der Flanke, d.h. innerhalb des w-z-Diagramms liegt, so definiert dies im Allgemeinen die Funktion $F_{zv1}(z_{V2})$ nicht für alle Werte von $z_{v2}$, da für andere Vorschubpositionen des Werkstücks, Teile des dann aktuellen Verlaufs die Flanke überstreichen, welche für $X_{F1}$ noch außerhalb des Diagramms lagen. Figur 25a zeigt dies beispielhaft für ein zylindrisches Werkstück. Dies kann genutzt werden, um $F_{ZV1}(z_{v2})$ abschnittsweise aus den Verläufen für verschiedene $X_{F1}$ zusammenzusetzten, bzw. den Definitionsbereich zu erweitern. Alternativ ist es auch möglich, $F_{zv1}(z_{V2})$ aus einem Verlauf für ein $X_{F1}$, welcher über die Grenzen des w-z-Diagramm hinaus fortgesetzt wurde zu bestimmen. Diese Verlauf wird vorteilhafterweise soweit fortgesetzt, dass jeder Teil des w-z-Diagramme von dem Verlauf überstrichen wird. Figur 25a zeigt wie ein solcher Verlauf gewählt werden kann. In diesem Beispiel kann die Funktion $F_{zv1}(z_{V2})$ dann aus einem der vier Verläufe 160-163 bestimmt werden.

Insbesondere wenn $F_{ZV1}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{\square 1}$ verändert. Für den allgemeinen Fall berechnet sich dies durch die Schritte:

- Berechnen von $F_{ZV1}(z_{V2})$ aus dem Verlauf für ein $X_{F1}$
- Berechnen des Verlauf für ein anderes $X_{F1}$ aus dem zuvor bestimmten $F_{ZV1}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 25 ist diese Richtung durch die beiden parallelen Geraden 165 und 166 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bF1}$, $\vartheta_1$) und Achskreuzwinkel beeinflusst werden. Der Zusammenhang lässt sich in dem Fall jedoch nicht mehr leicht anschaulich beschrieben und muss durch die oben beschriebenen Schritte ermittelt werden.

Wird einflankig Wälzgeschliffen, so kann $F_{zv1}(z_{V2})$ und somit der Verlauf für jede Flanke separat vorgegeben werden.

Wird zweiflankig Wälzgeschliffen, so beeinflusst ein $F_{ZV1}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{zv1}(z_{V2})$ aus dem Verlauf von Flanke 1
- Berechnen des Verlaufs von Flanke 2 aus $F_{ZV1}(z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bF1}$, $\vartheta_1$) und Achskreuzwinkel und Achsabstand. Diese Beeinflussung kann genutzt werden, um $F_{zv1}(z_{V2})$ , die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (25), so ist der Wert der Modifikation auf dem Werkstück entlang eines Verlaufs $z_{F2}(w_{F2}, X_{F1})$ zumindest näherungsweise gleich :

$$-\frac{\cos \beta_{bF1}}{\cos \beta_{bF2}} \cdot (F_{Ft1C}(X_{F1}) + F_{Ft1L}(X_{F1}) \cdot w_{F1} + F_{Ft1Q}(X_{F1}) \cdot w_{F1}^2) \tag{95}$$

Eine zumindest näherungsweise Parametrisierung der Modifikation $f_{Ft2}(w_{F2}, z_{F2})$ auf dem Werkstück *über* $w_{F2}$ und $z_{F2}$ erhält man dann durch die Beziehung

$$X_{F1} = F_{X_{F1}}(w_{F2}, z_{F2}) \qquad (96)$$

und der Relation (R7) aus der sich mit Hilfe des Verlauf des Kontaktpunkts zwischen Werkstück und Schnecke $w_{F1}$ durch $w_{F2}$ ausdrücken.

Ist die Modifikation auf der Verzahnung bekannt, so können für alle Verläufe die Funktionswerte der Funktionen $F_{Ft1c}$, $F_{Ft1L}$ und $F_{Ft1Q}$ bestimmt werden. Hierzu können in einer einfachen Variante die Funktionswerte unter Berücksichtigung der Modifikation an drei Wälzwinkeln entlang des Verlaufs bestimmt werden, in einer erweiterten Variante kann dies mittels einer Ausgleichsrechnung geschehen.

Ein konkretes Beispiel ist in Figur 26 gezeigt und wird im Folgenden diskutiert. Die Modifikation ist so gewählt, dass sie die Kombination aus einer Dreiecksförmigen Endrücknahme und einer Endrücknahme in Flankenlinienrichtung annähert, wobei die Endrücknahme, je dichter man an die Stirnfläche kommt, am Kopf und Fuß der Verzahnung stärker ausgeprägt ist, als in der Mitte des Profils. Der Übergang zwischen dem Beginn der beiden Rücknahmen ist hier beispielhaft tangential gewählt, wodurch der Verlauf 170 durch eine differenzierbare Kurve gegeben ist. Der Wert der Modifikation entlang 170 ist hier gleich 0 gewählt. Die Modifikation entlang 170 und 171, abhängig vom Wälzwinkel der Verzahnung, kann mit Hilfe von Gleichung (95) aus Figur 27c abgelesen werden. Da die Abstände zwischen den Verläufen 170 bis 172 im Bereich der Endrücknahme in Flankenlinienrichtung kleiner sind, als die Abstände zwischen den Verläufen 170 bis 172 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (175 bzw. 176) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

**Überlagerung mit anderen Modifikationen**

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen bei zylindrischen Verzahnungen nur vom Wälzweg und nicht von der $z$-Position ab. Mathematisch beschrieben werden können sie durch folgende Gleichung:

$$f_{PFt} = f_{PFt}(w_F) \qquad (97)$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (25) additiv überlagern. Beim Wälzschleifen mit abrichtbaren Schnecken wird diese Modifikation in der Regel in den Abrichter gelegt. Der Abrichtprozess kann dann unverändert durchgeführt werden und die Profilmodifikationen bilden sich, wie gewünscht auf der Schnecke und später beim Schleifen auf dem Werkstück ab. Bei konischen Werkstücken jedoch hängen Profilmodifikationen von der $z$-Position. In einem $w$-$z$-Diagramm liegen dabei Punkte mit selben Wert der Modifikation auf einer Geraden mit Steigung $m_F$. Diese Steigung lässt sich sowohl bei Verwendung zylindrischer als auch konischer Schnecken aus der hier dargestellten Abbildung von Punkte auf der Schnecke zu Punkten auf dem Werkstück bestimmen. Für konische Verzahnungen kann $f_{PFt}$ geschrieben werden als:

$$f_{PFt} = f_{PFt}(w_F + m_F z_F) \qquad (98)$$

Eine weitere, aus dem Stand der Technik DE10208531 bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die durch $\rho_{KF}$ gegebene Richtung des Kontaktpfads kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{K\square t}(w_F, z_F) = F_{KFt}(w_F \sin \rho_{KF} + z_F \cos \rho_{KF}) \qquad (99)$$

Hierbei können die Funktionen $F_{KFt}$ beliebige stetige Funktionen sein. Aus den Funktionen $F_{KFT}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (99) störungsfrei additiv überlagert werden.

Zusammengefasst lassen sich die herstellbaren Modifikationen $f_{GFt}$ wie folgt beschreiben:

$$f_{GFt}(w_F, z_F) = F_{FtC}(X_F) + F_{FtL}(X_F) \cdot w_F + F_{FtQ}(X_F) \cdot w_F^2 + f_{PFt}(w_F + m_F z_F) + \quad (100)$$

$$F_{KFt}(w_F \sin \rho_{\square F} + z_F \cos \rho_{KF})$$

Mit $X_F = w_F \sin \rho_F + z_F \cos \rho_F$ und wobei $F_{Ftc}$, $F_{FtL}$, $F_{PtQ}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{Ftc}$, $F_{FtL}$, $F_{PtQ}$, $f_{PFt}$ und $F_{KFt}$ konstant, insbesondere 0 ist. Im Spezialfall zylindrischer Werkstücke *ist* $m_F$ = 0.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (100) zerlegt werden. Dazu werden die Funktionen $F_{Ftc}$, $F_{FtL}$, $F_{PtQ}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten ($w_{Fi}, z_{Fi}$) oder kontinuierlich über das ganze $w$-$z$-Diagramm berechnet werden. Die kontinuierliche Berechnung der Abweichung kann beispielsweise mit Hilfe eines Integrals einer Abstandsfunktion über alle Werte von $w$ und $z$ durchgeführt werden. Möglich ist es auch, die Abweichungen abhängig von der Position der Punkte in einem $w$-$z$-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwendet.

Die gewünschte Modifikation kann beispielsweise durch eine stetige Funktion $f_F$, durch eine Punktewolke ($w_{Fj}$, $z_{Fj}, f_{Fj}$) oder eine Kombination aus beidem gegeben sein. Die Funktionen$F_{FtC}$, $F_{FtL}$, $F_{FtQ}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten ($w_{Fk}, z_{Fk}$) zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die Richtungen $\rho_F$ einzuschränken. Im Allgemeinen kann die in der Ausgleichsrechnung verwendete und zu minimierende Abstandsfunktion, neben der Abweichung zwischen $f_{GFT}$ und $f_F$ auch von technologischen Größen abhängen: Wird das Verfahren mit nicht konstantem Diagonalverhältnis angewendet, so muss Gleichung (100) dahingehend modifiziert werden, dass $F_{Ftc}$, $F_{FtL}$, $F_{FtQ}$, durch eine Modifikation, welche sich aus Gleichung (95) ergibt, ersetzten werden. Soll durch eine Ausgleichsrechnung eine gegeben Modifikation durch eine so zusammengesetzte Modifikation angenähert bzw. exakt in eine solche zerlegt werden, können die Funktionen $F_{Ft1c}$, $F_{Ft1L}$, $F_{Ft1Q}$, $F_{Zv1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{zv1}$ für linke und rechte Flanke gleich. Die Funktionen $F_{Ft1c}$, $F_{Ft1L}$, $F_{Ft1Q}$, $f_{PFt}$ und $F_{KFt}$ sind für linke und rechte Flanke, sowohl beim einflankigen aus auch beim zweiflankigen Schleifen im Allgemeinen verschieden.

## Aufteilung des Werkzeugs

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es ist jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung. Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

## Übertragbarkeit auf andere Fertigungsverfahren

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (25) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.

Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (25) aufweisen. Je nach Fertigungsverfahren des Werkzeugs, ist auch hier eine freie Wahl von $\rho_F$ auf dem Werkzeug möglich.

## Anwendungsbeispiele

Im Folgenden werden einige einfache Anwendungsbeispiele beschrieben, an denen teilweise auch der Vorteil der hier beschriebenen Erfindung gegenüber dem Stand der Technik aufgezeigt wird und welche zugleich das Verfahren etwas veranschaulichen sollen.

Eine besondere Unterklasse an Modifikationen, welche mit dem hier beschriebenen Verfahren gefertigt werden kann und bereits heute von großer Relevanz ist, sind Modifikationen, die durch ein Polynom zweiten Grades in $w$ und $z$ gegeben sind. Solche Modifikationen $f_{p2}$ können allgemein durch

$$f_{P2}(w_F, z_F) = A_{w0z0} + A_{w1z0} \cdot w_F + A_{w0z1} \cdot z_F + A_{w1z1} \cdot w_F \cdot z_F + A_{w2z0} \cdot w_F^2 + A_{w0z2} \cdot z_F^2 \quad (101)$$

beschrieben werden, wobei die Koeffizienten $A$ in gewissen Grenzen frei wählbare reelle Zahlen sind. Zerlegt man $f_p2$ gemäß Gleichung (100) in $F_{Ftc}$, $F_{FtL}$ und $F_{KFt}$ und wählt den Ansatz

$$F_{FtC}(X_F) = K_{F02} \cdot X_F^2 + K_{F01} \cdot X_F + K_{F00}$$
$$F_{FtL}(X_F) = K_{F11} \cdot X_F + K_{F10} \qquad\qquad (102)$$
$$F_{KFt}(X_{KF}) = K_{KF2} \cdot X_{KF}^2 + K_{KF1} \cdot X_{KF}$$

mit $X_{KF} = w_F sin\rho_{KF} + z\rho_F cos\rho_{KF}$, so liefert ein Koeffizientenvergleich 6 Gleichungen, aus denen die im Ansatz eingeführten Koeffizienten $K$ bestimmt werden können.

Das Gleichungssystem ist immer lösbar, unabhängig von $\rho_F$ und somit auch unabhängig vom gewählten Diagonalverhältnis. Somit kann dieses bei der Herstellung einer Modifikation $f_{P2}$ in gewissen Grenzen freie gewählt werden.

Da insgesamt 7 Koeffizienten eingeführt wurden, ist das Gleichungssystem unterbestimmt und die Lösung nicht eindeutig. Diese Freiheit kann beispielsweise genutzt werden, um die Koeffizienten so zu wählen, dass sich die Schnecke möglichst gut abrichten lässt, so kann beispielsweise $K_{F10}$ jeweils für linke und rechte Flanke frei vorgegeben werden. Dies ist insbesondere dann von Interesse, wenn das Abrichten zweiflankig erfolgen soll. Anschaulich gesprochen beschreibt $K_{F10}$ im Wesentlichen wie weit der Abrichter um die C5-Achse an einer Position $X_{F1}$ geschwenkt werden muss, wenn zum Abrichten ein Bewegungsapparat wie in Figur 22 genutzt wird. $K_{l10}$ und $K_{r10}$ können nun so gewählt werden, dass für zwei Position $X_{l1}$ und Position $X_{r1}$ auf linker und rechter Flanke der Schnecke, welche zur selben Zeit abgerichtet werden, derselbe Schwenkwinkel der C5-Achse einzustellen ist. Ob der Schwenkwinkel der C5-Achse über den ganzen abzurichtenden Bereich der Schnecke gleich ist, hängt von den Koeffizienten $K_{F11}$ ab und den Makrogeometrien von Werkzeug und Werkstück, insbesondere ob diese symmetrisch oder asymmetrisch und zylindrisch oder konisch sind. Es ist jedoch auch in gewissen Grenzen möglich, eine Schnecke zweiflankig abzurichten, wenn unterschiedliche C5-Winkel erforderlich sind. Dazu können alle Freiheitsgrade beim Abrichten genutzt werden, wie dies im ersten Teil dieser Anmeldung beschrieben wird. Dazu können beispielsweise jeweils zwei der exakt zu erreichenden 4 Punkte auf linker und rechter Flanke gewählt werden. Damit steht ein Verfahren zur Verfügung, um einen sehr großen Bereich der durch Gleichung (101) definierten Modifikationen zu fertigen und dabei ein ein- oder zweiflankiges Abrichten einzusetzen.

Ein solches zweiflankiges Abrichten lässt sich noch dadurch optimieren, dass das Diagonalverhältnis so bestimmt wird, dass sich die benötigte topologische Modifikation auf der Schnecke möglichst einfach erzeugen lässt. Für das hier betrachtete Beispiel der Polynome zweiten Grades bedeutet dies, dass das Diagonalverhältnis so angepasst wird, dass die C5-Winkel, welche zum Abrichten der linken bzw. rechten Flanke erforderlich sind, sich über die Breite der Schnecke in gleichem oder zumindest ähnlichem Maße ändern. Dazu ist das Diagonalverhältnis so zu wählen, dass $K_{l11}$ und $K_{r11}$ entsprechende Werte annehmen. Dadurch geht zwar die Flexibilität der freien Wahl des Diagonalverhältnisses verloren, es kann jedoch ein noch größeres Spektrum an Modifikationen auf dem Werkstück unter Einsatz eines zweiflankigen Abrichtens erzeugt werden.

Die heute relevantesten Modifikationen, welche durch Gleichung (101) beschrieben werden können sind Balligkeiten und additive Überlagerungen mehrerer Balligkeiten. Eine Balligkeit $f_B$ kann allgemein geschrieben werden als

$$f_B(w_F, z_F) = K_{B2} \cdot (w_F \sin \rho_{BF} + z_F \cos \rho_{BF})^2 + K_{B1} \cdot (w_F \sin \rho_{BF} + z_F \cos \rho_{BF}) + K_{B0} \qquad (103)$$

$$\rho_{BF} = \pm \frac{\pi}{2}$$

Für $\rho_{BF} = 0$ handelt es sich um eine Flankenlinienballigkeit, für um eine Profilballigkeit. In den übrigen Fällen handelt es sich um gerichtete Balligkeiten. Da diese zu einer Verschränkung führen, werden diese häufig auch als Balligkeiten mit gezielter Verschränkung bezeichnet. Balligkeiten werden oft auch als Kreisballigkeiten definiert, solche können jedoch in sehr guter Näherung durch die hier beschriebenen quadratischen Balligkeiten angenähert werden.

Verfahren, abgesehen vom Zeilenabrichten, um Profilballigkeiten über die Abricht- und/oder Schleifkinematik zu beeinflussen sind bisher nicht bekannt. Verfahren um verschränkungsfreie oder gezielt verschränkte Flankenlinienballigkeiten zu erzeugen sind aus den eingangs zitierten Druckschiften zwar bekannt. Alle diese Verfahren verursachen jedoch ungewollte Profilballigkeiten, welche mit dem hier vorgestellten Verfahren nicht entstehen. Das hier vorgestellte Verfahren geht sogar noch weiter und erlaubt eine gezielte Erzeugung einer Profilballigkeit, was bisher nur über die Geometrie des Abrichters möglich war. Es entfallen dadurch hohe Anschaffungskosten für neue Abrichter, wenn lediglich die Profilballigkeit geändert werden muss. Dies ist insbesondere in der Lohn- und Kleinserienfertigung von besonderer Relevanz. Des Weiteren ist es auch möglich, Abrichter mit fehlerhaft erzeugter Profilballigkeit einzusetzen und diese zu korrigieren. So können geschliffenen Verzahnungen gemessen und der erzeugte Profilballigkeit bestimmt und entsprechend korrigiert werden. Somit steht, neben dem im ersten Teil dieser Anmeldung vorgestelltem Verfahren, noch ein weiteres zur Verfügung, welches es erlaubt, die Profilballigkeit beim Wälzschleifen zu beeinflussen. Beide diese Verfahren haben gegenüber dem anderen Vor- und Nachteile, welche hier kurz aufgeführt werden. Das im ersten Teil vorgestellte Verfahren erlaubt es, die Profilballigkeit der Schnecke über deren ganze Länge gleich zu beeinflussen. Dadurch kann mit einer solchen Schnecke das Schleifen im Axialschleifverfahren erfolgen, solange keine topologischen Modifikationen gefordert sind. Dieses Axialschleifverfahren führt im Allgemeinen zu einer höheren Anzahl an Werkstücken, die pro Abrichtzyklus geschliffen werden können. Voraussetzung für die Anwendung ist jedoch, dass die Makrogeometrie der Schnecke eine hinreichend große Beeinflussung der Profilballigkeit erlaubt, was tendenziell den Einsatz kleiner mehrgängiger Schnecken erfordert. Das hier im zweiten Teil vorgestellte Verfahren erlaubt den Einsatz von Schnecken mit quasi beliebiger Makrogeometrie, es erfordert jedoch den Einsatz des Diagonalwälzschleifens. Wird das Werkstück ohnehin im Diagonalwälzschleifen geschliffen, um beispielsweise topologische Modifikationen zu erzeugen oder weil ein Diagonalwälzschleifen aufgrund der Breite der Verzahnung technologisch nötig ist, so bringt dieses Verfahren keinerlei Nachteile mehr mit sich.

Zur Erzeugung einer Balligkeit oder einer additiven Überlagerung mehrerer Balligkeiten kann das Diagonalverhältnis und somit der Schiftbereich und die Größe des auf der Schnecke genutzten Bereiches in gewissen Grenzen frei gewählt werden. Somit kann die Anzahl der Bereich auf einer Schnecke beispielsweise unter Beachtung technologischer Gesichtspunkte optimiert werden bzw. optimal der Schneckenlänge angepasst.

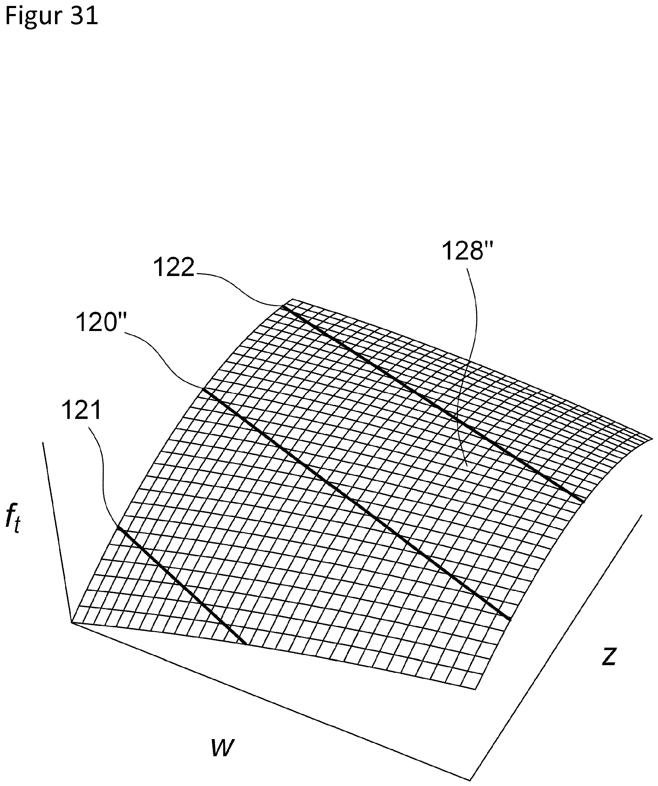

Ein weiterer Effekt, der sich aus der freien Wahl des Diagonalverhältnisses ergibt, ist die Möglichkeit der Überlagerung mit Modifikationen, welche ein fest vorgegebenes Diagonalverhältnis erfordern. Ein solches Beispiel ist in Figur 29 dargestellt. Hierbei handelt es sich um die additive Überlagerung einer Dreiecksförmigen Endrücknahme, einer Profilballigkeit und einer verschränkungsfreien Flankenlinienballigkeit, wobei die Profilballigkeit mit dem hier beschriebenen Verfahren und nicht über einen entsprechend ausgelegten Abrichter erzeugt wird. Um die dreiecksförmige Endrücknahme zu fertigen, muss das Diagonalverhältnis so gewählt werden, dass die Rücknahme in der richtigen Richtung abfällt. Diese Richtung wird durch die Line 123, welche eine Gerade in w und z ist, definiert. Entlang dieser Linie ist der Anteil der Modifikation, der rein aus der dreiecksförmigen Endrücknahme kommt, konstant. Dies gilt ebenso für alle Linien parallel zu Line 123, welche im Bereich 127 liegen, wobei entlang jeder dieser Linien der Anteil der Modifikation aus der dreiecksförmigen Endrücknahme einen anderen Wert hat. Um die gesamte Modifikation mit dem hier vorgestellten Verfahren schleifen zu können, kann diese in einen Anteil ($F_{KFt}$), welcher aus der Schleifkinematik kommt und in Figur 31 dargestellt ist und einen Anteil ($F_{Ftc} + F_{FtL}$), welcher über das Diagonalschiften aus der Modifikation der Schnecke kommt und in Figur 30 dargestellt ist, zerlegt werden, wie in Gleichung (102) beschrieben.

Der hier beispielhaft aufgezeigte Weg zur Erzeugung einer Modifikation gemäß Gleichung (101) kann auch auf Polynome höheren Grades in w und z übertragen werden. Dazu können im Ansatz aus Gleichung (102) höhere Ordnungen in $X_F$ bzw. $X_{KF}$ hinzugenommen werden und es kann des Weiteren die Funktion $F_{FtQ}$ analog mit aufgenommen werden. Auf diese Weise lassen sich zum Beispiel Polynome dritten Grades fertigen. Diese sind ebenfalls von besonderem Interesse, da mit ihnen sehr gut kreisförmige Balligkeiten, bestehend aus zwei tangential anschließenden Kreisbögen mit unterschiedlichen Radien, angenähert werden können. Somit steht erstmals ein Verfahren zur Verfügung, mit dem es möglich ist, solche Balligkeiten gezielt gerichtet, bzw. mit gezielter Verschränkung oder verschränkungsfrei bei in gewissen Grenzen frei wählbarem Diagonalverhältnis mit den hier betrachteten Fertigungsverfahren zu fertigen.

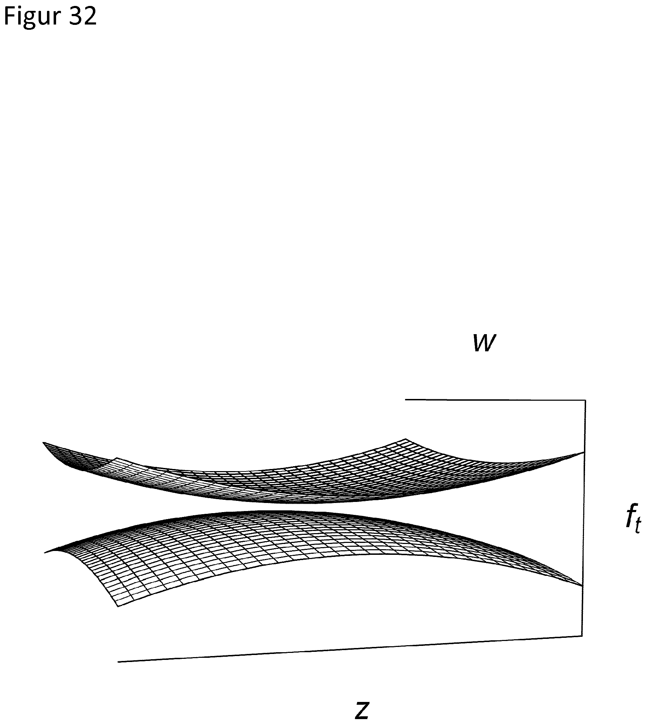

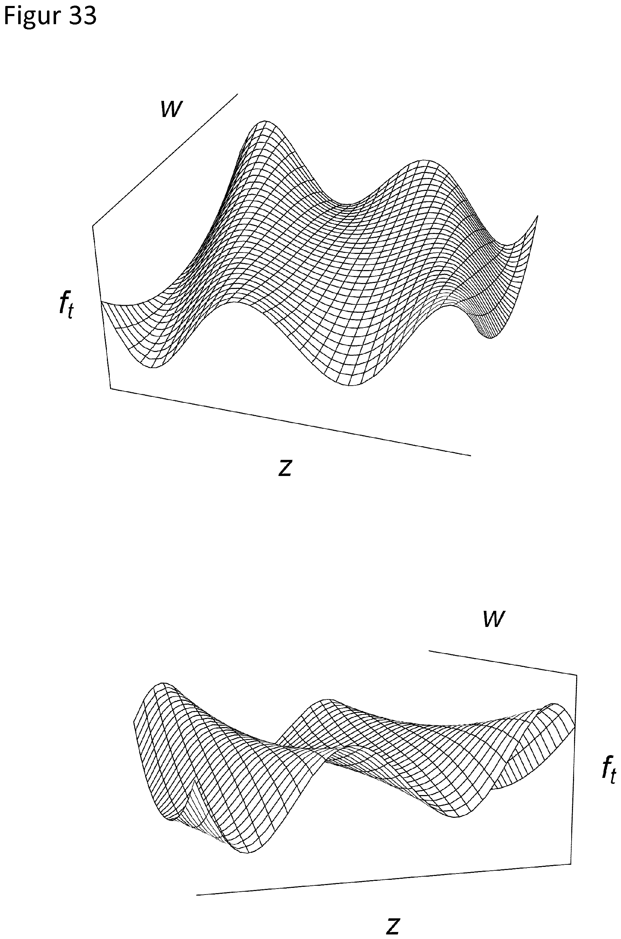

Ein weiteres Beispiel sind Welligkeiten mit über die Zahnflanke veränderter Amplitude. Aus DE102012015846 ist ein Verfahren bekannt, mit dem Welligkeiten mit definierter Richtung ($\rho_{F2}$), Phasenlange ($\delta$), Wellenlänge ($\lambda$) und Amplitude im Wälzschleifen gefertigt werden können. Dabei ist die Amplitude der Welligkeit entlang der ersten Richtung $G_{C2}$ konstant, kann jedoch entlang der zweiten Richtung, senkrecht zur ersten Richtung, verändert werden. Mit dem hier vorgestellten Verfahren ist es nun möglich, die Amplitude über der ganzen Flanke zu variieren. Figur 32 zeigt eine obere und einer untere Fläche, welche die Welligkeit einhüllen. Die obere Fläche definiert dabei die Amplitudenfunktion der Welligkeit in Abhängigkeit von w und z. Hier wurde beispielhaft eine Amplitudenfunktion gewählt, welche in der Mitte der Flanke einen kleineren Wert hat im Vergleich zum am Rand der Flanke und als Summe zweier Polynom zweiten Grades in w bzw. z gegeben ist. Es sind ebenso Amplitudenfunktionen möglich, die zu kleineren Amplituden am Rand der Flanke führen. Die Welligkeit mit nicht konstanter Amplitude ergibt sich durch Multiplikation der Amplitudenfunktion mit der Welligkeit ($\sin(\frac{X_{F2}}{\lambda} + \delta)$). Die sich daraus ergebende Modifikation hat dadurch eine Form gemäß Gleichung (25) und ist in Figur 33 gezeigt. Solche Welligkeiten können, wie auch in DE102012015846 beschrieben zur Optimierung des Anregungsverhaltens von Getrieben genutzt werden, erlauben jedoch auf Grund der Unterschiedlichen Amplitude über die Zahnflanke zusätzlich eine Optimierung für unterschiedliche Lastniveaus.

Werden die Flanken der Schneckengänge in mehreren Hüben abgerichtet, so ist es möglich, in jedem Hub unterschiedliche Bereiche der Flanken abzurichten, z.B. beim ersten Hub einen oberer Teil des Profils, beim zweiten einen unteren Teil, und dadurch in den verschiedenen Bereichen unterschiedliche Modifikationen aufzubringen. Somit wird es beispielsweise möglich, eine Welligkeit nur in einem oberen Bereich des Profils auf einem Werkstück aufzubringen, bzw. den Übergang zwischen wellig modifiziertem Bereich und nicht modifiziertem Bereich diagonal über die Flanke.

## Patentansprüche

1. Verfahren zur Herstellung eines verzahnten Werkstückes mit modifizierter Oberflächengeometrie durch ein Diagonalwälzverfahren mittels eines modifizierten Werkzeuges,

   wobei ein Werkzeug eingesetzt wird, dessen Oberflächengeometrie eine Modifikation umfasst, deren Steigung in einer ersten Richtung des Werkzeuges, welche einen Winkel $\rho_{F1}$ ungleich null zur Werkzeugbreitenrichtung einschließt, in Abhängigkeit von dem Werkzeugdrehwinkel und/oder der Werkzeugbreitenposition variiert, wobei die Modifikation bevorzugt im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen $F_{FtL,1}$ und bevorzugt $F_{FtC,1}$ gebildet werden,
   und
   wobei die gezielte Modifikation des Werkzeuges durch das Diagonalwälzverfahren eine entsprechende Modifikation auf der Oberfläche des Werkstückes erzeugt, wobei eine gewünschte Modifikation der Oberflächengeometrie des Werkstückes vorgegeben wird und eine zur Erzeugung dieser gewünschten Modifikation geeignete Modifikation der Oberflächengeometrie des Werkzeuges in Kombination mit einem zur Erzeugung der gewünschten Modifikation geeigneten Diagonalverhältnis des Diagonalwälzverfahrens bestimmt wird, wobei die gewünschte Modifikation der Oberflächengeometrie des Werkstückes als eine Modifikation vorgegeben wird, deren Steigung in einer ersten Richtung des Werkstückes in Abhängigkeit von der Werkstückbreitenposition variiert, wobei die Modifikation bevorzugt als eine Modifikation vorgegeben wird, welche im Wälzbild zumindest lokal in einer ersten Richtung des Werkstückes durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen $F_{FtL,2}$ und bevorzugt $F_{FtC,2}$ gebildet werden,

wobei die erste Richtung der Modifikation de Oberflächengeometrie des Werkstücks vorgegeben und das Diagonalverhältnis in Abhängigkeit von der ersten Richtung der Modifikation auf dem Werkstück bestimmt wird, wobei das Diagonalverhältnis so gewählt wird, dass die erste Richtung der Modifikation des Werkzeuges auf die erste Richtung der Modifikation des Werkstückes abgebildet wird,

wobei die Modifikation der Oberflächengeometrie des Werkzeuges durch die Modifikation einer Relativposition zwischen Werkzeug und Abrichter beim Abrichten erzeugt wird, wobei der Abrichter beim Abrichten in Linienkontakt mit dem Werkzeug steht und die erste Richtung der Modifikation der Oberflächengeometrie des Werkzeuges der Eingriffslinie des Abrichters beim Abrichten des Werkzeuges entspricht und/oder durch diese vorgegeben ist.

2. Verfahren nach Anspruch 1, wobei das Diagonalverhältnis durch eine Ausgleichrechnung und/oder analytisch bestimmt wird.

3. Verfahren nach einem der Ansprüche 1 oder 2, wobei die Koeffizienten-Funktionen $F_{FtC,1}$, $F_{FtL,1}$ der Modifikation der Oberflächengeometrie des Werkzeuges zumindest innerhalb bestimmter Randbedingungen frei wählbar sind, um die gewünschte Modifikation der Oberflächengeometrie des Werkstückes zu erzeugen, und/oder wobei die Koeffizienten-Funktionen $F_{Ftc,2}$, $F_{FtL,2}$ und/oder die erste Richtung der Modifikationen der Oberflächengeometrie des Werkstückes zumindest innerhalb bestimmter Randbedingungen frei vorgebbar und/oder wählbar ist, und/oder wobei die Steigung der Modifikation der Oberfläche des Werkzeuges als Funktion der Werkzeugbreitenposition und/oder die Steigung der Modifikation der Oberfläche des Werkstückes als Funktion der Werkstückbreitenposition zumindest innerhalb bestimmter Randbedingungen frei wählbar ist.

4. Verfahren nach Anspruch 1, wobei die Modifikation der Oberflächengeometrie des Werkzeuges aus der gewünschten Modifikation der Oberflächengeometrie des Werkstückes mittels der Umkehrung einer Zuordnungsfunktion, welche die Abbildung der Oberfläche des Werkzeugs auf die Oberfläche des Werkstücks beim Diagonalwälzschleifen beschreibt, bestimmt wird, wobei die Zuordnungsfunktion von dem Diagonalverhältnis abhängt, wobei die Bestimmung bevorzugt unter Verwendung einer Funktion erfolgt, welche die Abbildung der Oberfläche des Werkzeugs auf die Oberfläche des Werkstücks beim Diagonalwälzschleifen analytisch beschreibt,

und/oder wobei die gewünschte Modifikation der Oberflächengeometrie des Werkstückes als stetige Funktion und/oder auf einer Punktewolke vorgegeben wird, wobei die stetige Funktion bevorzugt auf einer Fläche auf der Zahnflanke vorgegeben ist und/oder die Punktewolke bevorzugt eine Fläche auf der Zahnflanke aufspannt, und/oder wobei die Modifikationen der Oberflächengeometrie des Werkzeuges als stetige Funktion und/oder auf einer Punktewolke bestimmt wird, wobei die stetige Funktion bevorzugt auf einer Fläche auf der Zahnflanke bestimmt wird und/oder die Punktewolke bevorzugt eine Fläche auf der Zahnflanke aufspannt, und/oder wobei die Modifikation der Oberflächengeometrie des Werkstückes an mindestens zwei oder drei Wälzwinkeln als Funktion der Werkzeugbreitenposition vorgebbar und/oder wählbar ist und für die dazwischenliegenden Wälzwinkel-Bereiche eine Interpolation erfolgt
und/oder
wobei die Modifikation der Oberflächengeometrie des Werkzeuges im Rahmen der Bestimmung und/oder Vorgabe an mindestens zwei oder drei Wälzwinkeln als Funktion der Werkzeugbreitenposition variierbar ist und für die dazwischenliegenden Wälzwinkel-Bereiche eine Interpolation erfolgt.

5. Verfahren nach einem der vorangegangenen Ansprüche, wobei das Werkzeug mittels einer Profil- oder Formrolle modifiziert abgerichtet wird,

wobei bevorzugt die Profil- oder Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt oder alternativ
die Profil- oder Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt.

6. Verfahren nach einem der vorangegangenen Ansprüche, wobei die Modifikation der Oberflächengeometrie des Werkzeuges dadurch erzeugt wird, dass die Position des Abrichters zum Werkzeug beim Abrichten in Abhängigkeit von dem Werkzeugdrehwinkel und/oder der Werkzeugbreitenposition variiert wird, wobei das Erzeugen der gezielten Modifikation auf dem Werkzeug erfolgt, indem bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen.

7. Verfahren nach einem der vorangegangenen Ansprüchen, wobei eine gewünschte Modifikation der Oberflächengeometrie des Werkstückes vorgegeben wird, wobei in Abhängigkeit der gewünschten Modifikation der Oberflächengeometrie des Werkstückes geeignete Koeffizienten-Funktionen $F_{FtC,1}$, $F_{FtL,1}$ und/oder $F_{FtQ,1}$ der Oberflächengeometrie des Werkzeuges und ein geeignetes Diagonalverhältnis bestimmt werden, und/oder wobei in Abhängigkeit der gewünschten Modifikation der Oberflächengeometrie des Werkstückes eine geeignete Variation der Position des Abrichters zum Werkzeug beim Abrichten in Abhängigkeit von dem Werkzeugdrehwinkel und/oder der Werkzeugbreitenposition und ein geeignetes Diagonalverhältnis bestimmt wird.

8. Verfahren nach einem der vorhergehenden Ansprüche, wobei eine gewünschte Ausrichtung der Modifikation der Oberflächengeometrie des Werkstückes vorgegeben wird und das Diagonalverhältnis so eingestellt wird, dass sich die gewünschte Ausrichtung der Modifikation beim Diagonalwälzbearbeiten ergibt, und/oder wobei das Diagonalverhältnis zumindest über jeden Hub konstant ist.

9. Verfahren nach einem der vorangegangenen Ansprüchen, wobei im Rahmen der Bearbeitung eines Werkstückes das Diagonalverhältnis verändert wird.

10. Verfahren nach einem der vorangegangenen Ansprüchen, wobei das Werkzeug eine konische Grundform aufweist, wobei der Konuswinkel des Werkzeuges bevorzugt größer 1', weiter bevorzugt größer 30', weiter bevorzugt größer 1 ° ist und/oder wobei der Konuswinkel des Werkzeuges kleiner 50°, bevorzugt kleiner 20°, weiter bevorzugt kleiner 10° ist.

11. Verzahnmaschine zum Bearbeiten eines Werkstückes mit einem Werkzeug im Diagonalwälzverfahren und/oder zum Abrichten eines Werkzeuges mit einem Abrichter im Linienkontakt zur Durchführung des Verfahrens nach einem der Ansprüche 1 bis 10, wobei die Verzahnmaschine eine Steuerung zur Durchführung des Verfahrens nach einem der Ansprüche 1 bis 10 aufweist.

12. Verzahnmaschine nach Anspruch 11, wobei die Verzahnmaschine eine Eingabefunktion, über welche eine gewünschte Modifikation der Oberflächengeometrie des Werkstückes vorgebbar ist und eine Ansteuerungsfunktion, welche die zur Bereitstellung der Modifikation der Oberflächengeometrie des Werkstückes geeignete Modifikation der Oberflächengeometrie des Werkzeuges und ein geeignetes Diagonalverhältnis bestimmt, aufweist, wobei die Ansteuerungsfunktion bevorzugt die Modifikation der Oberflächengeometrie des Werkzeuges während des Abrichtens erzeugt und/oder das Diagonalwälzverfahren zur Bearbeitung des Werkstückes mit dem Diagonalverhältnis durchführt.

13. Verzahnmaschine nach Anspruch 11 oder 12, wobei die Verzahnmaschine eine Abrichtfunktion zum modifizierten Abrichten des Werkzeuges aufweist, welche die Position des Abrichters zum Werkzeug beim Abrichten in Abhängigkeit von dem Werkzeugdrehwinkel und/oder der Werkzeugbreitenposition variiert, wobei die Abrichtfunktion bevorzugt zumindest die Eingriffstiefe und den Eingriffswinkel des Abrichters in Abhängigkeit von dem Werkzeugdrehwinkel und/oder der Werkzeugbreitenposition einstellt, und/oder wobei die Abrichtfunktion bei der relativen Positionierung zwischen Abrichter und Werkzeug mindestens drei und bevorzugt vier oder fünf Freiheitsgrade zur Erzeugung der gewünschten Modifikation nutzt, wobei die Freiheitsgrade bevorzugt unabhängig voneinander zur Erzeugung der gewünschten Modifikation eingestellt werden.

**14.** Verzahnmaschine nach Anspruch einem der Ansprüche 11 bis 13, wobei die Eingabefunktion die Vorgabe der gewünschten Modifikation der Oberflächengeometrie des Werkstückes als stetige Funktion und/oder auf einer Punktewolke erlaubt, wobei die stetige Funktion bevorzugt auf einer Fläche auf der Zahnflanke vorgebbar ist und/oder die Punktewolke bevorzugt eine Fläche auf der Zahnflanke aufspannt, und/oder wobei die die Eingabefunktion die Vorgabe der gewünschten Modifikation der Oberflächengeometrie des Werkstückes an mindestens zwei oder drei Wälzwinkeln als Funktion der Werkstückbreitenposition erlaubt und für die dazwischenliegenden Wälzwinkel-Bereiche eine Interpolation vornimmt.

**15.** Verzahnmaschine nach einem der Ansprüche 11 bis 14, wobei die Verzahnmaschine die Modifikation der Oberflächengeometrie des Werkzeuges als stetige Funktion und/oder auf einer Punktewolke bestimmt und/oder wobei die Verzahnmaschine die Vorgabe der Modifikation der Oberflächengeometrie des Werkzeuges als stetige Funktion und/oder auf einer Punktewolke erlaubt, wobei die stetige Funktion bevorzugt auf einer Fläche auf der Zahnflanke bestimmt wird und/oder vorgebbar ist und/oder die Punktewolke bevorzugt eine Fläche auf der Zahnflanke aufspannt, und/oder wobei die Modifikation der Oberflächengeometrie des Werkzeuges im Rahmen der Bestimmung und/oder Vorgabe an mindestens zwei oder drei Wälzwinkeln als Funktion der Werkzeugbreitenposition variierbar ist und die Steuerung für die dazwischenliegenden Wälzwinkel-Bereiche eine Interpolation vornimmt.

**16.** Verzahnmaschine nach einem der Ansprüche 11 bis 15, wobei die Verzahnmaschine die Vorgabe einer gewünschten Modifikationen der Oberflächengeometrie des Werkstückes als eine Funktion erlaubt, welche im Wälzbild zumindest lokal in einer ersten Richtung des Werkstückes durch eine lineare und/oder quadratische Funktion zumindest näherungsweise beschreibbar ist,

wobei die Koeffizienten dieser linearen und/oder quadratischen Funktion in einer zweiten Richtung des Werkstückes, welche senkrecht zur ersten Richtung verläuft, durch Koeffizienten-Funktionen $F_{Ftc,2}$, $F_{FtL,2}$ und/oder $F_{FtQ,2}$ gebildet werden, wobei bevorzugt die Koeffizienten-Funktion $F_{Ftl,2}$ und/oder $F_{Ftll,2}$ und/oder die erste Richtung der Modifikationen der Oberflächengeometrie des Werkstückes zumindest innerhalb bestimmter Randbedingungen frei vorgebbar und/oder wählbar ist,
und/oder wobei die Verzahnmaschine die Vorgabe einer gewünschten Modifikationen der Oberflächengeometrie des Werkstückes als eine Funktion erlaubt, welche in einer ersten Richtung eine Steigung und/oder Balligkeit aufweist, welche in Werkstückbreitenrichtung variiert,
wobei bevorzugt die Modifikation der Oberflächengeometrie des Werkstückes an mindestens zwei oder drei Wälzwinkeln als Funktion der Werkzeugbreitenposition vorgebbar ist und die Steuerung für die dazwischenliegenden Wälzwinkel-Bereiche eine Interpolation vornimmt.

**17.** Verzahnmaschine nach einem der Ansprüche 11 bis 16, wobei die Verzahnmaschine die Vorgabe und/oder Bestimmung einer Modifikationen der Oberflächengeometrie des Werkzeuges als eine Funktion erlaubt, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, wobei bevorzugt die Koeffizienten-Funktionen $F_{FtC,1}$, $F_{FtL,1}$ und/oder $F_{FtQ,1}$ der Modifikation der Oberflächengeometrie des Werkzeuges zumindest innerhalb bestimmter Randbedingungen frei wählbar und/oder variierbar sind,

und/oder wobei Verzahnmaschine die Vorgabe und/oder Bestimmung einer Modifikationen der Oberflächengeometrie des Werkzeuges als eine Funktion erlaubt, welche in einer ersten Richtung eine Steigung und/oder Balligkeit aufweist, welche in Werkstückbreitenrichtung variiert,
wobei bevorzugt die Modifikation der Oberflächengeometrie des Werkzeuges im Rahmen der Bestimmung und/oder Vorgabe an mindestens zwei oder drei Wälzwinkeln als Funktion der Werkstückbreitenposition vorgebbar und/oder variierbar ist und die Steuerung für die dazwischenliegenden Wälzwinkel-Bereiche eine Interpolation vornimmt.

**18.** Computerprogramm zur Installation auf einer Verzahnmaschine und/oder mit einer Ausgabefunktion für Daten zur Verwendung auf einer Verzahnmaschine, mit einer Eingabefunktion zur Eingabe von Daten zu einer gewünschten Modifikation der Oberflächengeometrie des Werkstückes und mit einer Funktion zur Bestimmung der Modifikation des Werkzeuges und des Diagonalverhältnisses, wobei die Funktionen ein Verfahren nach einem der vorangegangenen Ansprüche implementieren.

**Claims**

1. Method of producing a toothed workpiece having a modified surface geometry by a diagonal generating method by means of a modified tool,

   wherein a tool is used, the surface geometry of which has a modification, the pitch of which in a first direction of the workpiece, which includes a non-zero angle $\rho_{F1}$ in relation to the tool width direction, varies as a function of the workpiece rotary angle and/or the workpiece width position, wherein the modification can at least approximately be described in the generating pattern at least locally in a first direction of the workpiece by a linear function, wherein the coefficients of this linear function in a second direction of the tool, which extends perpendicular to the first direction, are formed by coefficient functions $F_{FtL,1}$, and preferably $F_{FtC,1}$, and

   wherein the targeted modification of the tool by the diagonal generating method produces a corresponding modification on the surface of the workpiece,

   wherein a desired modification of the surface geometry of the workpiece is specified, and a modification of the surface geometry of the tool suitable for producing this desired modification is determined in combination with a diagonal ratio of the diagonal generating method suitable for producing the desired modification,

   wherein the desired modification of the surface geometry of the workpiece is specified as a modification, the pitch of which varies in a first direction of the workpiece as a function of the workpiece width position, wherein the modification is preferably specified as a modification which can at least approximately be described in the generating pattern at least locally in a first direction of the workpiece by a linear function, wherein the coefficients of this linear function in a second direction of the tool, which extends perpendicular to the first direction, are formed by coefficient functions $F_{FtL,2}$, and preferably $F_{Ftc,2}$, wherein the first direction of the modifications of the surface geometry of the workpiece is specified and the diagonal ratio is determined as a function of the first direction of modification on the workpiece, wherein the diagonal ratio is selected such that the first direction of the modification of the tool is mapped on to the first direction of the modification of the workpiece,

   wherein the modification of the surface geometry of the tool is generated by the modification of a relative position between tool and dresser during the dressing process, wherein the dresser is in line contact with the tool during the dressing process and the first direction of the modification of the surface geometry of the tool corresponds to and/or is predetermined by the line of engagement of the dresser while dressing the tool.

2. Method in accordance with claim 1, wherein the diagonal ratio is determined by means of data reconciliation and/or by means of analytical measures.

3. Method in accordance with any one of claims 1 or 2, wherein the coefficient functions $F_{FtC,1}$, $F_{FtL,1}$ of the modification of the surface geometry of the tool are freely selectable at least within certain boundary conditions in order to produce the desired modification of the surface geometry of the workpiece, and/or wherein the coefficient functions $F_{Ftc,2}$, $F_{FtL,2}$ and/or the first direction of the modifications of the surface geometry of the workpiece can be freely specified and/or selected at least within certain boundary conditions, and/or wherein the pitch of the modification of the surface of the tool is freely selectable as a function of the tool width position and/or the pitch of the modification of the surface of the workpiece is freely selectable as a function of the workpiece width position at least within certain boundary conditions.

4. Method in accordance with claim 1, wherein the modification of the surface geometry of the tool is determined from the desired modification of the surface geometry of the workpiece by means of the inversion of an association function which describes the mapping of the surface of the tool onto the surface of the workpiece in diagonal generating grinding, wherein the association function depends on the diagonal ratio, wherein the determination preferably takes place using a function which analytically describes the mapping of the surface of the tool onto the surface of the workpiece in diagonal-feed generating grinding,

   and/or wherein the desired modification of the surface geometry of the workpiece is specified as a continuous function and/or on a scatter plot, wherein the continuous function is preferably specified on a surface on the tooth flank and/or the scatter plot preferably spans a surface on the tooth flank;

   and/or wherein the modification of the surface geometry of the tool is determined as a continuous function and/or on a scatter plot, wherein the continuous function is preferably determined on a surface on the tooth flank and/or the scatter plot preferably spans a surface on the tooth flank;

   and/or wherein the modification of the surface geometry of the workpiece is specifiable and/or selectable at at least two or three rolling angles as a function of the tool width position and interpolation takes place for the rolling angle ranges disposed therebetween;
and/or
wherein the modification of the surface geometry of the tool is variable within the framework of the determination and/or specification at at least two or three rolling angles as a function of the tool width position and interpolation takes place for the rolling angle ranges disposed therebetween.

5. Method in accordance with any one of the preceding claims, wherein the tool is dressed in modified form by means of a profile roller dresser or form roller dresser,

wherein preferably the profile roller dresser or form roller dresser is in contact with the tooth of the tool during the dressing process from the root region to the tip region so that the modification is effected across the total tooth depth in one stroke,
or alternatively
the profile roller dresser or form roller dresser is in contact with the tooth of the tool only in partial regions between the root and the tip during the dressing process so that the specific modification is effected across the total tooth depth in a plurality of strokes and at a respective different relative positioning of the dresser.

6. Method in accordance with any one of the preceding claims, wherein the modification of the surface geometry of the tool is produced in that the position of the dresser with respect to the tool is varied during the dressing process as a function of the angle of rotation of the tool and/or on the tool width position, wherein the specific modification on the tool is effected in that at least three degrees of freedom and preferably four or five degrees of freedom are used to produce the desired modification on the relative positioning between the dresser and the tool, wherein the degrees of freedom are preferably settable independently of one another for producing the desired modification; and/or wherein the number thereof is preferably at least three, four or all of the following five degrees of freedom: angle of rotation of the tool; axial position of the tool; y-position of the dresser; axial distance and/or axial cross angle, wherein the axial position of the tool, i.e. the tool width position, is preferably used to displace the contact line of the dresser, and wherein two, three or four of the remaining four degrees of freedom are set independently of one another in order to produce the specified modification along the contact line.

7. Method in accordance with any one of the preceding claims, wherein a desired modification of the surface geometry of the workpiece is specified, wherein suitable coefficient functions $F_{FtC,1}$, $F_{FtL,1}$ and/or $F_{FtQ,1}$ of the surface geometry of the tool are determined as a function of the desired modification of the surface geometry of the workpiece and a suitable diagonal ratio is determined; and/or wherein a suitable variation of the position of the dresser in relation to the tool during the dressing process as a function of the angle of rotation of the tool and/or on the tool width position is determined as a function of the desired modification of the surface geometry of the workpiece and/or on the tool width position and a suitable diagonal ratio is determined.

8. Method in accordance with any one of the preceding claims, wherein a desired orientation of the modification of the surface geometry of the workpiece is specified and the diagonal ratio is set such that the desired orientation of the modification is produced during the diagonal generating machining process; and/or wherein the diagonal ratio is constant at least over each stroke.

9. Method in accordance with any one of the preceding claims, wherein the diagonal ratio is changed as part of the machining process of a workpiece.

10. Method in accordance with any one of the preceding claims, wherein the tool has a conical base shape, wherein the conical angle of the tool is preferably larger than 1', preferably larger than 30', further preferably larger than 1°, and/or wherein the conical angle of the tool is less than 50°, preferably less than 20°, further preferably less than 10°.

11. Gear cutting machine for machining a workpiece using a tool in a diagonal generating method, and/or for dressing a tool using a dresser in line contact for carrying out the method in accordance with any one of the claims 1 to 10, wherein the gear cutting machine advantageously comprises a control unit for carrying out the method in accordance with any one of the claims 1 to 10.

12. Gear cutting machine according to claim 11, wherein the gear cutting machine comprises an input function via which a desired modification of the surface geometry of the workpiece is specifiable, and comprises a control function which determines the modification of the surface geometry of the tool suitable or providing the modification of the surface geometry of the workpiece and which determines a suitable diagonal ratio,

wherein the control function preferably produces the modification of the surface geometry of the tool during the dressing process and/or carries out the diagonal generating method for machining the workpiece using the diagonal ratio.

13. Gear cutting machine in accordance with claim 11 or 12, wherein the gear cutting machine comprises a dressing function for the modified dressing of the tool, wherein the dressing function varies the position of the dresser with respect to the tool during the dressing process as a function of the angle of rotation of the tool and/or varies the tool width position, wherein the dressing function preferably varies at least the depth of action and the pressure angle of the dresser as a function of the angle of rotation of the tool and/or on the tool width position, and/or wherein the dressing function utilizes at least three degrees of freedom and preferably four or five degrees of freedom for producing the desired modification during the relative positioning between the dresser and the tool, wherein the degrees of freedom are preferably set independently of one another for producing the desired modification.

14. Gear cutting machine in accordance with any one of claims 11 to 13, wherein the input function allows the specification of the desired modification of the surface geometry of the workpiece as a continuous function and/or on a scatter plot, wherein the continuous function is preferably specifiable on a surface on the tooth flank and/or the scatter plot preferably spans a surface on the tooth flank; and/or wherein the input function allows the specification of the desired modification of the surface geometry of the workpiece at at least two or three rolling angles as a function of the workpiece width position and carries out interpolation for the rolling angle ranges disposed therebetween.

15. Gear cutting machine in accordance with any one of the claims 11 to 14, wherein the gear cutting machine determines the modification of the surface geometry of the tool as a continuous function and/or on a scatter plot; and/or wherein the gear cutting machine allows the specification of the modification of the surface geometry of the tool as a continuous function and/or on a scatter plot, wherein the continuous function preferably is determined and/or specifiable on a surface on the tooth flank and/or the scatter plot preferably spans a surface on the tooth flank; and/or wherein the modification of the surface geometry of the tool is variable within the framework of the determination and/or specification at at least two or three rolling angles as a function of the tool width position and the control unit carries out interpolation for the rolling angle ranges disposed therebetween.

16. Gear cutting machine in accordance with any one of the claims 11 to 15, wherein the gear cutting machine allows the specification of a desired modification of the surface geometry of the workpiece as a function which can be described at least approximately in the generating pattern at least locally in a first direction of the workpiece by a linear and/or quadratic function, wherein the coefficients of this linear and/or quadratic function in a second direction of the workpiece, which extends perpendicular to the first direction, are formed by coefficient functions $F_{Ftc,2}$, $F_{FtL,2}$ and/or $F_{FtQ,2}$, wherein the coefficient functions $F_{Ftl,2}$ and/or $F_{Ftll,2}$ and/or the first direction of the modification of the surface geometry of the workpiece is freely variable and/or selectable at least within certain conditions; and/or wherein the gear cutting machine allows the specification of a desired modification of the surface geometry of the workpiece as a function which has a pitch and/or a crowning in a first direction which varies in the workpiece width direction;
wherein the modification of the surface geometry of the workpiece is preferably specifiable as a function of the tool width position at at least two or three rolling angles and the control unit carries out interpolation for the rolling angle range disposed therebetween.

17. Gear cutting machine in accordance with any one of the claims 11 to 16, wherein the gear cutting machine allows the specification and/or determination of a modification of the surface geometry of the tool as a function which can be described at least approximately in the generating pattern at least locally in a first direction of the workpiece by a linear and/or quadratic function, wherein the coefficients of this linear and/or quadratic function in a second direction of the tool, which extends perpendicular to the first direction, are formed by coefficient functions $F_{FtC,1}$, $F_{FtL,1}$ and/or $F_{FtQ,1}$, wherein the coefficient functions $F_{FtC,1}$, $F_{FtL,1}$ and/or $F_{FtQ,1}$ of the modification of the surface geometry of the tool are preferably freely variable and/or selectable at least within certain conditions;

and/or wherein the gear cutting machine allows the specification or determination of a modification of the surface geometry of the workpiece as a function which has a pitch and/or a crowning in a first direction which varies in the workpiece width direction;
wherein the modification of the surface geometry of the tool is preferably specifiable and/or variable within the framework of the determination and/or specification at at least two or three rolling angles as a function of the workpiece width position and the control unit carries out interpolation for the rolling angle ranges disposed therebetween.

**18.** Computer program for installation on a gear cutting machine and/or having an output function for data for use on a gear cutting machine, having an input function for inputting data on a desired modification of the surface geometry of the workpiece and having a function for determining the modification of the tool and of the diagonal ratio, wherein the functions implement a method in accordance with any one of the preceding claims.

**Revendications**

**1.** Procédé de fabrication d'une pièce dentée avec une géométrie de surface modifiée par un procédé de taillage diagonal par génération au moyen d'un outil modifié,

dans lequel est employé un outil, dont la géométrie de surface comprend une modification, dont la pente, dans une première direction de l'outil, qui forme un angle $\rho_{F1}$ non nul avec la direction de la largeur de l'outil, varie en fonction de l'angle de rotation de l'outil et/ou de la position de la largeur de l'outil,

dans lequel la modification peut de préférence être décrite au moins approximativement par une fonction linéaire et/ou quadratique au moins localement dans un premier sens de l'outil sur le schéma de roulement, les coefficients de cette fonction linéaire étant formés dans une deuxième direction de l'outil, qui est perpendiculaire à la première direction, par des fonctions de coefficient $F_{FtL,1}$ et de préférence $F_{FtC,1}$

et

dans lequel la modification ciblée de l'outil génère, par le procédé de taillage diagonal par génération, une modification correspondante sur la surface de la pièce,

dans lequel une modification souhaitée de la géométrie de surface de la pièce est spécifiée et une modification adaptée pour générer ladite modification souhaitée, de la géométrie de surface de l'outil est définie en combinaison avec un comportement diagonal, adapté pour générer la modification souhaitée, du procédé de taillage diagonal par génération,

dans lequel la modification souhaitée de la géométrie de surface de la pièce est spécifiée en tant qu'une modification dont la pente dans une première direction du pièce varie en fonction de la position dans la largeur de pièce,

la modification étant de préférence prédéfinie comme une modification qui peut être décrite au moins approximativement par une fonction linéaire dans l'image de roulement, au moins localement dans une première direction de la pièce,

les fonctions linéaires de ce type dans la deuxième catégorie de l'appareil, qui se rapproche de la première catégorie, étant construites à l'aide des fonctions linéaires $F_{FtL,2}$ et, le cas échéant, $F_{FtC,2}$,

la première direction de la modification de la géométrie de surface de la pièce étant spécifiée et le rapport diagonal étant déterminé en fonction de la première direction de la modification sur la pièce à usiner, le rapport diagonal étant choisi de telle sorte que la première direction de la modification de l'outil soit reproduite sur la première direction de la modification de la pièce à usiner,

la modification de la géométrie de surface de l'outil étant produite par la modification d'une position relative entre l'outil et le dresseur lors du dressage, le dresseur étant en contact linéaire avec l'outil lors du dressage et la première direction de la modification de la géométrie de surface de l'outil correspondant à la ligne d'engagement du dresseur lors du dressage de l'outil et/ou étant prédéfinie par celle-ci.

**2.** Procédé selon la revendication 1, dans lequel le comportement diagonal est manière préférée défini par un calcul de compensation et/ou de manière analytique.

**3.** Procédé selon l'une quelconque des revendications 1 ou 2, dans lequel les fonctions de coefficients $F_{FtC1}$, $F_{FtL.1}$ et/ou $F_{FtQ.1}$ de la modification de la géométrie de surface de l'outil peuvent être choisies librement au moins dans le cadre de conditions marginales définies afin de générer la modification souhaitée de la géométrie de surface de la pièce, et/ou dans lequel les fonctions de coefficients $F_{FtC.2}$, $F_{FtL.2}$ et/ou $F_{FtQ.2}$ et/ou la première direction des modifications de la géométrie de surface de la pièce peuvent être spécifiées et/ou choisies librement au moins dans le cadre de conditions marginales définies et/ou dans lequel l'inclinaison et/ou le bombement de la modification de la surface de l'outil peuvent être choisis librement en tant que fonction de la position de la largeur d'outil et/ou l'inclinaison et/ou le bombement de la modification de la surface de l'outil peuvent être choisis librement en tant que fonction de la position de la largeur d'outil au moins dans le cadre de conditions marginales définies et/ou dans lequel le comportement diagonal est défini en fonction de la première direction de la modification sur la pièce.

**4.** Procédé selon la revendication 1, dans lequel la modification de la géométrie de surface de l'outil est définie à partir de la modification souhaitée de la géométrie de surface de la pièce au moyen de l'inversion de la fonction d'attribution, laquelle décrit la reproduction de la surface de l'outil sur la surface de la pièce lors de la rectification en développante diagonale, dans lequel la fonction d'attribution dépend du comportement diagonal, dans lequel la définition est effectuée de manière préférée en utilisant une fonction, laquelle décrit de manière analytique la reproduction de la surface de l'outil sur la surface de la pièce lors de la rectification en développante diagonale,

et/ou dans lequel la modification souhaitée de la géométrie de surface de la pièce est spécifiée en tant que fonction continue et/ou sur un nuage de points, dans lequel la fonction continue est spécifiée de manière préférée sur une face sur le flanc de dent et/ou le nuage de points forme de manière préférée une surface sr le flanc de dent, et/ou dans lequel les modifications de la géométrie de surface de l'outil sont définies en tant que fonction continue et/ou sur un nuage de points, dans lequel la fonction continue est définie de manière préférée sur une face sur le flanc de dent
et/ou le nuage de points forme de manière préférée une face sur le flanc de dent et/ou dans lequel la modification de la géométrie de surface de la pièce peut être spécifiée et/ou choisie au niveau d'au moins deux ou trois angles de taillage par génération en fonction de la position dans la largeur d'outil et une interpolation est effectuée pour les plages d'angles de taillage par génération intercalées.

5. Procède selon l'une quelconque des revendications précédentes, dans lequel de manière préférée l'outil est dressé de manière modifiée au moyen d'un galet de profilage ou de moulage,

dans lequel de manière préférée, le galet de profilage ou de moulage est en contact lors du dressage avec la dent de l'outil lors du dressage de la zone de pied vers la zone de tête de sorte que la modification est effectuée sur la totalité de la hauteur de dent en une course
ou en variante
le galet de profilage ou de moulage est en contact lors du dressage avec la dent de l'outil seulement dans des zones partielles entre le pied et la tête de sorte que la modification ciblée est effectuée sur toute la hauteur de dent en plusieurs courses et un positionnement relatif respectivement différent.

6. Procédé selon l'une quelconque des revendications précédentes, dans lequel la modification de la géométrie de surface de l'outil est générée en ce que la position du dresseur par rapport à l'outil varie lors du dressage en fonction de l'angle de rotation d'outil et/ou de la position dans la largeur d'outil, dans lequel la génération de la modification ciblée est effectuée sur l'outil en ce que lors du positionnement relatif entre le dresseur et l'outil, au moins trois et de manière préférée quatre ou cinq degrés de liberté sont utilisés pour générer la modification souhaitée, dans lequel les degrés de liberté peuvent être réglés de manière préférée indépendamment les uns des autres pour produire la modification souhaitée, et/ou dans lequel il s'agit de manière préférée d'au moins trois, quatre ou de l'ensemble des cinq degrés de liberté suivants : angle de rotation de l'outil, position axiale de l'outil, position y du dresseur, écartement axial et/ou angle de croisement axial, dans lequel de manière préférée la position axiale de l'outil, en d'autres termes, la position dans la largeur d'outil est utilisée pour décaler la ligne de contact du dresseur et des quatre degrés de liberté restants, deux, trois ou quatre degrés de liberté sont réglés indépendamment les uns des autres afin de produire la modification ciblée le long de la ligne de contact.

7. Procédé selon l'une quelconque des revendications précédentes, dans lequel une modification souhaitée de la géométrie de surface de la pièce est spécifiée, dans lequel des fonctions de coefficients adaptés FFtC.1, FFtL.1 et/ou FFtQ.1 de la géométrie de surface de l'outil et un comportement diagonal adapté sont définis en fonction de la modification souhaitée de la géométrie de surface de la pièce, et/ou dans lequel une variation adaptée de la position du dresseur par rapport à l'outil lors du dressage est définie en fonction de l'angle de rotation d'outil et/ou de la position dans la largeur d'outil et un comportement diagonal sont définis en fonction de la modification souhaitée de la géométrie de surface de la pièce.

8. Procédé selon l'une quelconque des revendications précédentes, dans lequel une orientation souhaitée de la modification de la géométrie de surface de la pièce est spécifiée et le comportement diagonal est réglé de telle sorte que l'orientation souhaitée de la modification découle lors du de l'usinage par taillage diagonal par génération et/ou dans lequel le comportement diagonal est constant au moins sur chaque course.

9. Procédé selon l'une quelconque des revendications précédentes, dans lequel le comportement diagonal est modifié dans le cadre de l'usinage d'une pièce.

10. Procédé selon l'une quelconque des revendications précédentes, dans lequel l'outil présente une forme de base conique, dans lequel l'angle de cône de l'outil est de manière préférée supérieur à 1', de manière davantage préférée supérieur à 30', de manière davantage préférée supérieure à 1° et/ou dans lequel l'angle conique de l'outil est inférieur à 50°, de manière préférée inférieur à 20°, de manière davantage préférée inférieur à 10°.

11. Machine à tailler servant à usiner une pièce avec un outil dans le procédé de taillage diagonal par rectification et/ou servant à dresser un outil avec un dresseur en contact linéaire pour mettre en oeuvre le procédé selon l'une quelconque des revendications 1 à 10, dans laquelle la machine à tailler présente une commande servant à mettre en oeuvre le procédé selon l'une quelconque des revendications 1 à 10.

12. Machine à tailler selon la revendication 11, dans laquelle la machine à tailler présente une fonction d'entrée, par l'intermédiaire de laquelle une modification souhaitée de la géométrie de surface de la pièce peut être spécifiée, et une fonction de pilotage, laquelle définit la modification adaptée pour fournir la modification de la géométrie de surface de la pièce, de la géométrie de surface de l'outil et un comportement diagonal adapté,
dans laquelle la fonction de pilotage génère de manière préférée la modification de la géométrie de surface de l'outil pendant le dressage et/ou met en oeuvre le procédé de taillage diagonal par génération aux fins de l'usinage de la pièce avec le comportement diagonal.

13. Machine à tailler selon la revendication 11 ou 12, dans laquelle la machine à tailler présente une fonction de dressage servant à dresser de manière modifiée l'outil, laquelle fait varier la position du dresseur par rapport à l'outil lors du dressage en fonction de l'angle de rotation d'outil et/ou de la position dans la largeur d'outil, dans laquelle la fonction de dressage règle de manière préférée au moins la profondeur de prise et l'angle de prise du dresseur en fonction de l'angle de rotation d'outil et/ou de la position dans la largeur d'outil, et/ou dans laquelle la fonction de dressage utilise, lors du positionnement relatif entre le dresseur et l'outil, au moins trois et de manière préférée quatre ou cinq degrés de liberté pour générer la modification souhaitée, dans laquelle les degrés de liberté sont réglés de manière préférée indépendamment les uns des autres pour générer la modification souhaitée.

14. Machine à tailler selon l'une quelconque des revendications 11 à 13, dans laquelle la fonction d'entrée permet la spécification de la modification souhaitée de la géométrie de surface de la pièce en tant que fonction continue et/ou sur un nuage de points, dans laquelle la fonction continue peut être spécifiée de manière préférée sur une face sur le flanc de dent et/ou le nuage de points forme de manière préférée une face sur le flanc de dent, et/ou dans laquelle la fonction d'entrée permet la spécification de la modification souhaitée de la géométrie de surface de la pièce au niveau d'au moins deux ou trois angles de taillage par génération en tant que fonction de la position dans la largeur de pièce et entreprend une interpolation pour les plages d'angles de taillage par génération intercalés.

15. Machine à tailler selon l'une quelconque des revendications 11 à 14, dans laquelle la machine à tailler définit la modification de la géométrie de surface de l'outil en tant que fonction continue et/ou sur un nuage de points et/ou dans laquelle la machine à tailler permet la spécification de la modification de la géométrie de surface de l'outil en tant que fonction continue et/ou sur un nuage de points, dans laquelle la fonction continue est définie et/ou peut être spécifiée de manière préférée sur une face sur le flanc de dent et/ou le nuage de points forme de manière préférée une face sur le flanc de dent, et/ou dans laquelle la modification de la géométrie de surface de l'outil peut être variée dans le cadre de la définition et/ou de la spécification au niveau d'au moins deux ou trois angles de taillage par génération en tant que fonction de la position dans la largeur d'outil et la commande entreprend une interpolation pour les plages d'angles de taillage par génération intercalés.

16. Machine à tailler selon l'une quelconque des revendications 11 à 15, dans laquelle la machine à tailler permet la spécification d'une modification souhaitée de la géométrie de surface de la pièce en tant qu'une fonction, laquelle peut être décrite au moins approximativement par une fonction linéaire et/ou quadratique sur le schéma de taillage par génération au moins localement dans un premier sens de la pièce, dans laquelle les coefficients de ladite fonction linéaire et/ou quadratique sont formés par des fonctions de coefficients $F_{FtC.2}$, $F_{FtL.2}$ et/ou $F_{FtQ.2}$ dans un deuxième sens de la pièce, lequel s'étend de manière perpendiculaire par rapport au premier sens, dans laquelle de manière préférée la fonction de coefficients $F_{FtL.2}$ et/ou $F_{FtQ.2}$ et/ou la première direction des modifications de la géométrie de surface de la pièce peuvent être spécifiées et/ou choisies librement au moins dans le cadre de conditions marginales définies,

et/ou dans laquelle la machine à tailler permet la spécification d'une modification souhaitée de la géométrie de surface de la pièce en tant qu'une fonction, laquelle présente, dans une première direction, une inclinaison et/ou un bombement, laquelle/lequel varie dans la direction de la largeur de pièce,
dans laquelle de manière préférée la modification de la géométrie de surface de la pièce peut être spécifiée au niveau d'au moins deux ou trois angles de taillage par génération en tant que fonction de la position dans la largeur d'outil et la commande entreprend une interpolation pour les plages d'angles de taillage par génération intercalés.

17. Machine à tailler selon l'une quelconque des revendications 11 à 16, dans laquelle la machine à tailler permet la spécification et/ou la définition d'une modification de la géométrie de surface de l'outil en tant qu'une fonction, laquelle peut être décrite au moins approximativement par une fonction linéaire et/ou quadratique sur le schéma de taillage par génération au moins localement dans un premier sens de l'outil, dans laquelle les coefficients de ladite fonction linéaire et/ou quadratique sont formés par des fonctions de coefficients FFtC.1, FFtL.1 et/ou FFtQ.1 dans un deuxième sens de l'outil, lequel s'étend de manière perpendiculaire par rapport au premier sens, dans laquelle de manière préférée les fonctions de coefficients FFtC.1, FFtL.1 et/ou FFtQ.1 de la modification de la géométrie de surface de l'outil peuvent être spécifiées et/ou choisies librement au moins dans le cadre de conditions marginales définies,

et/ou dans laquelle la machine à tailler permet la spécification et/ou la définition d'une modification souhaitée de la géométrie de surface de l'outil en tant qu'une fonction, laquelle présente, dans une première direction, une inclinaison et/ou un bombement, laquelle/lequel varie dans la direction de la largeur de pièce, dans laquelle de manière préférée la modification de la géométrie de surface de l'outil peut être spécifiée et/ou peut varier, dans le cadre de la définition et/ou spécification, au niveau d'au moins deux ou trois angles de taillage par génération en tant que fonction de la position dans la largeur d'outil et la commande entreprend une interpolation pour les plages d'angles de taillage par génération intercalés.

18. Programme informatique destiné à être installé sur une machine à tailler et/ou avec une fonction de sortie pour des données destinées à être utilisées sur une machine à tailler, avec une fonction d'entrée servant à entrer des données portant sur une modification souhaitée de la géométrie de surface de la pièce et avec une fonction servant à déterminer la modification de l'outil et du comportement diagonal, dans lequel les fonctions implémentent un procédé selon l'une quelconque des revendications précédentes.

Figur 1

Figur 2

Figur 3

$f_{\mathrm{nFS}}$

$b_{\mathrm{FS}}$

$w_{\mathrm{FS}}$

15

Figur 4

Figur 5

# Figur 6

$z_S=7$

$d_S=240mm$

$d_A=150mm$

$\alpha_{nFS}=20°$

# Figur 7

$z_S=7$
$d_S=240mm$
$d_A=150mm$
$\alpha_{nFS}=20°$

# Figur 8

# Figur 9

$d_S$=80mm

$d_A$=150mm

$\alpha_{nFS}$=20°

——————— $z_S$=2

- - - - - - - $z_S$=4

.................... $z_S$=7

# Figur 10

# Figur 11

$v_{zS}$

$\Delta\varphi_S$

$c_{\alpha FV}$

$c_{\alpha FV}$

$\Delta d$

$c_{\alpha FV}$

$\Delta v_{yA}$

$c_{\alpha FV}$

$\Delta\gamma$

$c_{\alpha FV}$

$z_S = 7$

$d_S = 80mm$

$d_A = 150mm$

$\alpha_{nFS} = 16°$

$\alpha_{nFS} = 20°$

$\alpha_{nFS} = 24°$

## Figur 12

a) $f_{nFS}$

41    40      42

$w_{FS}$

$w_{NfFS}$      $w_{NaFS}$

b) $f_{nFS}$

40'    41'

42'

$w_{FS}$

$w_{NfSF}w_{PFS}$      $w_{NaSF}$

# Figur 13

a)

$P_{FV}$ / $c_{\alpha FV}$

— $z_S = 2$
---- $z_S = 4$
········· $z_S = 6$

b)

$P_{FV}$ / $c_{\alpha FV}$

— $d_S = 80\text{mm}$
---- $d_S = 120\text{mm}$
········· $d_S = 240\text{mm}$

c)

$P_{FV}$ / $c_{\alpha FV}$

— $d_A = 80\text{mm}$
---- $d_A = 150\text{mm}$
········· $d_A = 200\text{mm}$

d)

$P_{FV}$ / $c_{\alpha FV}$

— $\alpha_{nFS} = 16°$
---- $\alpha_{nFS} = 20°$
········· $\alpha_{nFS} = 24°$

## Figur 14a

Figur 14b

# Figuren 15

Figur 16a

## Figur 16b

20`

21`

22`

25`

24`

23`

26`

## Figur 17

## Figur 18

a)

b)

Figur 19

## Figur 20

Figur 21

Figur 22

Figur 23

Figur 24

# Figur 25

a)

b)

Figur 26

## Figur 27

Figur 28

a)

$\mathbf{F}_{Ft10}$

$\mathbf{X}_{F1}$

b)

$\mathbf{F}_{Ft11}$

$\mathbf{X}_{F1}$

c)

$\mathbf{F}_{Ft12}$

$\mathbf{X}_{F1}$

Figur 29

Figur 30

Figur 31

Figur 32

## Figur 33

# Figur 34

Figur 35

Figur 36

a)

b)

# Figur 37

Figur 38

103
102
101
104
$z_F$
103'
102'
101'
$w_F$

# EP 3 118 699 B2

## IN DER BESCHREIBUNG AUFGEFÜHRTE DOKUMENTE

### In der Beschreibung aufgeführte Patentdokumente

- DE 102012015846 A1
- EP 1995010 A1
- WO 2010060596 A1
- DE 3704607 A1
- DE 19624842 A1
- DE 19706867 A1
- DE 102005030846 A1
- DE 102006061759 A1
- DE 19624842 C2
- DE 10208531
- DE 102012015846

### In der Beschreibung aufgeführte Nicht-Patentliteratur

- **NIEMANN, G ; WINTER, H.** Maschinenelemente. Springer Verlag, 1983
- **ZIERAU, S.** Die geometrische Auslegung konischer Zahnräder und Paarungen mit parallelen Achsen. Institut für Konstruktionslehre, Technische Universität Braunschweig